# EUROPÄISCHE PATENTSCHRIFT

(11) **EP 2 726 198 B1**
(45) Veröffentlichungstag und Bekanntmachung des Hinweises auf die Patenterteilung: **16.12.2015**
(21) Anmeldenummer: 12726583.3
(22) Anmeldetag: 25.05.2012
(51) Int. Cl.: B01J 20/20, B01J 20/22, B01J 20/28, B01J 20/32, B01D 53/02, B01D 53/04

(54) **FILTERMATERIALIEN FÜR DIE GASBEHANDLUNG UND GASREINIGUNG**
FILTER MATERIALS FOR TREATING AND PURIFYING GAS
MATÉRIAUX FILTRES POUR LE TRAITEMENT ET L'ÉPURATION DE GAZ

(30) Priorität: 14.08.2011 DE 102011110102; 23.09.2011 DE 102011114132
(43) Veröffentlichungstag der Anmeldung: 07.05.2014
(73) Patentinhaber: Blücher GmbH, 40699 Erkrath (DE); Friedrich-Alexander-Universität Erlangen-Nürnberg, 91023 Erlangen (DE)
(72) Erfinder: BÖHRINGER, Bertram, 42115 Wuppertal (DE); ECKLE, Ilsebill, 45886 Gelsenkirchen (DE); WASSERSCHEID, Peter, 91054 Erlangen (DE); ROTH, Daniel, 91058 Erlangen (DE)
(74) Vertreter: Von Rohr Patentanwälte Partnerschaft mbB
(86) Internationale Anmeldenummer: PCT/EP2012/002243
(87) Internationale Veröffentlichungsnummer: WO 2013/023714

(56) Entgegenhaltungen:
- WO-A1-2011/029691
- WO-A2-2012/046057
- CN-A- 101 928 394
- VIRTANEN P ET AL: "Towards one-pot synthesis of menthols from citral: Modifying Supported Ionic Liquid Catalysts (SILCAs) with Lewis and Bronsted acids", JOURNAL OF CATALYSIS, ACADEMIC PRESS, DULUTH, MN, US, Bd. 263, Nr. 2, 25. April 2009 (2009-04-25), Seiten 209-219, XP026043758, ISSN: 0021-9517, DOI: 10.1016/J.JCAT.2009.02.005 [gefunden am 2009-03-10]
- MIKKOLA J-P ET AL: "Supported ionic liquids catalysts for fine chemicals: citral hydrogenation", GREEN CHEMISTRY, ROYAL SOCIETY OF CHEMISTRY, CAMBRIDGE, GB, Bd. 8, 1. Januar 2006 (2006-01-01), Seiten 197-205, XP009087229, ISSN: 1463-9262, DOI: 10.1039/B508033A

## Beschreibung

Die vorliegende Erfindung betrifft neuartige Konzepte für die Gasbehandlung und Gasreinigung, insbesondere für Reinraumbedingungen.

Insbesondere betrifft die vorliegende Erfindung ein Filtermaterial, welches insbesondere zum Einsatz in Filtern oder als Filter zur Gasbehandlung und/oder Gasreinigung, insbesondere für Reinraumbedingungen, geeignet ist, sowie Verfahren zu dessen Herstellung sowie dessen Verwendungen.

Schließlich betrifft die vorliegende Erfindung ein Verfahren zur Reinigung bzw. Aufbereitung von Gasen unter Verwendung des erfindungsgemäßen Filtermaterials.

Unter einem Reinraum oder Reinstraum wird im Rahmen der vorliegenden Erfindung ein Raum verstanden, in welchem die Konzentration von luftgetragenen Teilchen und Schadgasen so gering wie nötig gehalten wird. Derartige Rein- oder Reinsträume werden für spezielle Fertigungsverfahren - vor allem in der Halbleiterfertigung bzw. Halbleitertechnik - benötigt, bei welchen in gewöhnlicher Umgebungsluft befindliche Partikel und Gase die jeweiligen Verfahren stören würden. Insbesondere in Bezug auf die Halbleiterfertigung können bereits Partikel in einer Größenordnung von wenigen Nanometern die Strukturierung integrierter Schaltkreise stören; auch können störende bzw. oxidierende Gase, wie z. B. Schwefel- und Stickoxide, Schwefelwasserstoff, Ammoniak, Halogene, Halogenwasserstoffe etc., welche in der Atmosphäre allgegenwärtig sind, derartige Fertigungsprozesse stören bzw. beeinträchtigen (z. B. Fehldotierungen von Halbleitern etc.).

Weitere Anwendungen von Reinräumen bzw. Reinraumtechnik befinden sich in der Optik- und Lasertechnologie, der Luft- und Raumfahrtechnik, den Biowissenschaften und der medizinischen Forschung und Behandlung, der Forschung und keimfreien Produktion von Lebensmitteln und Arzneimitteln und in der Nanotechnologie.

Was die Bereitstellung solcher Reinräume anbelangt, so werden diese im Allgemeinen derart konstruiert, dass die Anzahl luftgetragener Teilchen, die in den Raum eingebracht werden oder unter Umständen dort entstehen, so gering wie möglich gehalten werden kann. Dazu kommen verschiedene Filtereinrichtungen mit auf die Partikelgröße abgestimmten Partikelfiltern zum Einsatz. Je nach Anwendungsgebiet können die Anforderungen an die in dem Rein- bzw. Reinstraum vorliegende maximal Teilchen- bzw. Partikelzahl variieren. Darüber hinaus kann es beispielsweise vorgesehen sein, dass nicht nur die Partikelanzahl, sondern auch die Anzahl der Keime überwacht wird, was insbesondere bei der Herstellung von pharmazeutischen Produkten oder Produkten der Lebensmittelindustrie nötig ist. Andere Parameter, wie Temperatur, Luftfeuchtigkeit und Druck, werden in der Regel ebenfalls konstantgehalten, um jederzeit vergleichbare Bedingungen zu schaffen.

Einen zentralen Aspekt für die Bereitstellung von Reinräumen stellen die Strömungsprinzipien der zu filternden Raumluft zur Geringhaltung von Teilchen und/oder Keimzahl und/oder Schadgasen dar. Im Allgemeinen wird in der Reinraumtechnik zwischen einer turbulenten Verdünnungsströmung und einer turbulenzarmen Verdrängungsströmung unterschieden. Bei der turbulenten Verdünnungs- oder Mischströmung wird die gefilterte Reinluft turbulent in den Reinraum eingeführt und erzeugt auf diese Weise eine stetige Verdünnung der Partikel- bzw. Schadgaskonzentration. Hier ist jedoch besonders zu beachten, dass Partikel und Schadgas erzeugende Objekte und Vorgänge im Reinraum eliminiert werden. Bei der turbulenzarmen Verdrängungsströmung, welche auch als "*laminar flow"* bezeichnet wird, strömt die Reinluft turbulenzarm und in der Regel vertikal in den Reinraum und bewirkt, dass die sensiblen Arbeitsbereiche und Maschinen möglichst wenig kontaminiert werden. Die Luft entweicht dann auf der gegenüberliegenden Fläche, im Allgemeinen durch einen perforierten Doppelboden, aus dem Raum und wird zur wiederholten Filterung zum Umluftgerät zurückgeführt.

Aufgrund der unterschiedlich hohen Anforderungen an Reinräume gibt es für die jeweiligen Anwendungsgebiete Reinraumklassen und zu deren Einhaltung anzuwendende Normen, insbesondere für Reinräume, welche in der Mikroelektronik Verwendung finden. So gilt beispielsweise für die Halbleitertechnik die ISO-Norm 14644-1, welche Klassen von ISO 1 bis ISO 9 vorsieht, wobei ISO 1 die Klasse mit der höchsten Reinheitserfordernis darstellt.

Um die jeweils geforderten Bedingungen für das jeweilige Anwendungsgebiet zu erfüllen, werden diverse Verfahren angewendet, um zu verhindern, dass unerwünschte Partikel und Schadgase bzw. die jeweilige Hauptkontaminationen in die Luft gelangen können und um bereits in der Luft befindliche Partikel und Schadgase zu entfernen.

So sind aus dem Stand der Technik zahlreiche Filter bzw. Filtermaterialien bekannt, welche auch der Filtration von Luft aus Reinräumen dienen können.

Insbesondere kommen im Stand der Technik, insbesondere im Hinblick auf die Reduktion der Konzentration von Schadgasen, Filter bzw. Filtermaterialien auf Basis von Aktivkohle zum Einsatz, welche im Allgemeinen mit geeigneten Imprägniermitteln für die Aktivkohle ausgestattet sind, da andernfalls die sorptiven Eigenschaften der Aktivkohle oftmals nicht ausreichen können.

Ein Nachteil der üblicherweise eingesetzten Aktivkohlefiltermaterialien ist jedoch, dass auch bei geeigneter Imprägnierung eine ausreichende Adsorptionsleistung gerade bei sehr geringen Mengen an zu entfernenden Schadstoffen bzw. Gasen nicht gegeben ist, da die Adsorption oftmals erst ab einem gewissen Schwellenwert einsetzt. Infolgedessen können geringe Mengen an unerwünschten Schadstoffen und Gasen auf diese Weise die Filtermaterialien durchdringen (d. h. der sogenannte "Schlupf") und die Reinraumatmosphäre in unerwünschter Weise verunreinigen.

Zur Entfernung schwefel- und stickstoffhaltiger Gas- und Schadstoffe, wie Schwefel- und Stickoxide, Ammoniak, Schwefelwasserstoff etc., kommen insbesondere iodidimprägnierte Adsorbentien, insbesondere iodidimprägnierte Aktivkohlen, zum Einsatz, wobei die Iodidimprägnierung im Laufe der Reaktion mit den zu entfernenden Gas- und Schadstoffen teilweise zu elementarem Iod umgesetzt wird, welches nach einer gewissen Einsatzzeit der Filter bzw. Filtermaterialien aus der Aktivkohle entweichen bzw. hieraus desorbiert werden kann, so dass die Reinraumatmosphäre in unerwünschter Weise mit Iod verunreinigt wird.

So schlägt beispielsweise die WO 01/70391 A1 die Verwendung eines Filtermaterials mit adsorbierenden Eigenschaften vor, welches eine Trägerschicht sowie mehrere adsorbierende Schichten aufweist. Dabei ist es vorgesehen, dass das Filtermaterial sowohl mindestens eine adsorbierende Schicht auf Basis eines imprägnierten Aktivkohlematerials und weiterhin mindestens eine adsorbierende Schicht auf Basis von Ionenaustauschermaterialien aufweist. Bei der Imprägnierung des Aktivkohlematerials ist insbesondere eine Imprägnierung mit Metallen aus der Gruppe von Kupfer, Eisen, Nickel, Zink, Chrom, Cobalt, Ruthenium oder Osmium vorgesehen. Die Imprägnierung des Aktivkohlematerials ist relativ kostenintensiv. Des Weiteren ist die Imprägnierung nicht immer effizient, insbesondere kann ein Teil der Schadstoffe durch Desorptionsprozesse wieder freigesetzt werden. Auch ist der Schlupf bei geringer Schadstoff- bzw. Gaskonzentration relativ hoch.

Weiterhin schlägt die DE 196 30 625 A1 ein Verfahren zur Extraktion von Verunreinigungen aus einem Gas vor. Dabei ist es vorgesehen, dass ein Wasserdampf enthaltender Gasstrom über festes Natriumiodid geleitet wird, wobei die Kontaminationen unter Bildung von Natriumiodidhydrat festgehalten bzw. gebunden werden sollen. Was das Natriumiodid anbelangt, so kann dieses als feinkörniges Natriumiodidpulver, als Beschichtung auf einem Trägermaterial oder in Form eines porösen festen Sinterkörpers vorliegen. Im Fall der Sorption oder Reaktion saurer oder oxidierender Gase, insbesondere im Fall von schwefel- oder stickstoffhaltigen Oxiden, Schwefelwasserstoff oder dergleichen, können jedoch im Laufe der Betriebszeit nennenswerte Mengen von elementarem Iod gebildet und in die Atmosphäre freigesetzt werden, was zu einer unerwünschten Verunreinigung der umgebenden Atmosphäre führt. Auch ist die anfängliche Adsorptionsleistung insbesondere bei geringen Mengen an zu adsorbierenden Schadstoffen bzw. Gasen nicht zufriedenstellend.

Die WO 2011/029691 A1 betrifft ein Katalysatorsystem, welches aus einem Trägermaterial, einer Ionischen Flüssigkeit, einer katalytisch wirksamen Zusammensetzung, welche Nickel enthält, und einem Aktivator in Form einer Lewis-Säure mit alkylierenden Eigenschaften besteht.

Die CN 101 928 394 A betrifft eine Aktivkohle, welche mit einer Nitrilgruppen bereitstellenden Ionischen Flüssigkeit, welche zudem Palladium enthält, ausgerüstet ist. Die Aktivkohle soll zur Herstellung von Polyketonen als Katalysator eingesetzt werden.

Es ist daher eine Aufgabe der vorliegenden Erfindung, Filtermaterialien, welche sich insbesondere zum Einsatz in Filtern oder als Filter zur Gasbehandlung und/oder Gasreinigung, insbesondere für Reinraumbedingungen, eignen, und entsprechende Herstellungsverfahren bereitzustellen, wobei die zuvor geschilderten Nachteile des Standes der Technik zumindest weitgehend vermieden oder aber wenigstens abgeschwächt werden sollen.

Insbesondere soll im Rahmen der vorliegenden Erfindung ein aktivkohlebasiertes Filtermaterial, welches insbesondere zum Einsatz in Filtern oder als Filter zur Gasbehandlung und/oder Gasreinigung, insbesondere für Reinraumbedingungen, eignet, bereitgestellt werden, wobei die Aktivkohle eine reaktive bzw. katalytische Ausrüstung aufweisen soll, wobei insbesondere die Wirksamkeit der eingesetzten Aktivkohle im Hinblick auf die Entfernung bzw. Sorption von gasförmigen Schadstoffen oder dergleichen gegenüber dem Stand der Technik weiterführend verbessert sein soll. Insbesondere soll im Rahmen der vorliegenden Erfindung ein Filtermaterial bereitgestellt werden, bei welchem es gewährleistet ist, dass die adsorptiven Eigenschaften der hierin enthaltenen Aktivkohle durch die spezielle reaktive bzw. katalytische Ausrüstung nicht negativ beeinträchtigt werden. Zudem sollen im Rahmen der vorliegenden Erfindung effiziente Verfahren bereitgestellt werden, auf dessen Basis welcher das erfindungsgemäße Filtermaterial erhalten werden kann.

Wie die Anmelderinnen nun in völlig überraschender Weise herausgefunden haben, kann die zuvor angeführte und der vorliegenden Erfindung zugrundeliegende Aufgabe in nicht erwarteter Weise dadurch gelöst werden, dass im Rahmen der vorliegenden Erfindung Filtermaterial mit einer Aktivkohle bereitgestellt wird, wobei die Aktivkohle in Form von diskreten Aktivkohlepartikeln mit einer speziellen Metallkomponente ausgerüstet bzw. ausgestattet wird, wobei die Metallkomponente mindestens eine metallhaltige, insbesondere Metallionen, vorzugsweise auf Basis einer Metallverbindung, enthaltende Ionische Flüssigkeit (IL) umfasst. Mit anderen Worten besteht die grundlegende Idee der vorliegenden Erfindung darin, ein aktivkohlebasiertes Filtermaterial bereitzustellen, wobei die für die reaktiven bzw. katalytischen Eigenschaften der Aktivkohle maßgebliche Metallkomponente mit einer Ionischen Flüssigkeit (IL) versehen ist bzw. eine Ionische Flüssigkeit (IL) eingesetzt wird, in welche ein Metall, insbesondere in ionischer Form auf Basis einer in der Ionischen Flüssigkeit (IL) lösbaren und/oder dissoziierbaren Metallverbindung, wie ein Metallsalz, eingebracht ist, wobei die Aktivkohle in zweckgerichteter Weise mit einer derartigen Metallkomponente bzw. Ionischen Flüssigkeit (IL) ausgerüstet bzw. imprägniert ist.

Zur Lösung der zuvor geschilderten Aufgabe schlägt die vorliegende Erfindung somit - gemäß einem **ersten** Aspekt der vorliegenden Erfindung - ein erfindungsgemäßes Filtermaterial gemäß Anspruch 1 vor. Weitere, insbesondere vorteilhafte Ausgestaltungen des erfindungsgemäßen Filtermaterials sind Gegenstand der diesbezüglichen Unteransprüche.

Weiterer Gegenstand der vorliegenden Erfindung sind - gemäß einem **zweiten** Aspekt der vorliegenden Erfindung - die erfindungsgemäßen Verfahren zur Herstellung des erfindungsgemäßen Filtermaterials gemäß den unabhängigen Verfahrensansprüchen. Weitere, insbesondere vorteilhafte Ausgestaltungen der erfindungsgemäßen Verfahren sind Gegenstand der diesbezüglichen Verfahrensunteransprüche.

Wiederum weiterer Gegenstand der vorliegenden Erfindung - gemäß einem **dritten** Aspekt der vorliegenden Erfindung - sind die erfindungsgemäßen Verwendungen, wie sie in den betreffenden Verwendungsansprüchen angeführt sind.

Schließlich ist weiterer Gegenstand der vorliegenden Erfindung - gemäß einem **vierten** Aspekt der vorliegenden Erfindung - ein erfindungsgemäßes Verfahren zur Reinigung bzw. Aufbereitung von Gasen gemäß dem betreffenden unabhängigen Anspruch. Weitere, insbesondere vorteilhafte Ausgestaltungen des erfindungsgemäßen Verfahrens gemäß diesem Aspekt der vorliegenden Erfindung sind Gegenstand des diesbezüglichen Verfahrensunteranspruchs.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei allen nachstehend aufgeführten relativen bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gemäß einem **ersten** Aspekt der vorliegenden Erfindung betrifft die vorliegende Erfindung ein Filtermaterial, welches sich insbesondere zum Einsatz in Filtern oder als Filter zur Gasbehandlung und/oder Gasreinigung, insbesondere für Reinraumbedingungen, eignet, wobei das Filtermaterial mindestens eine Aktivkohle mit reaktiver und/oder katalytischer Ausrüstung umfasst,
- wobei die Aktivkohle in Form von diskreten Aktivkohlepartikeln in Kugel- und/oder Kornform vorliegt und auf einem Trägermaterial aufgebracht ist, wobei die Aktivkohle an und/oder auf dem Trägermaterial fixiert ist,
- wobei die Aktivkohle Partikelgrößen im Bereich von 0,01 bis 2 mm aufweist, bestimmt nach der Methode nach ASTM D2862-97/04,
- wobei die Aktivkohle ein Gesamtporenvolumen im Bereich von 0,4 bis 4 cm³/g aufweist, wobei 20 % bis 85 % des Gesamtporenvolumens der Aktivkohle durch Poren mit Porendurchmessern im Bereich von 2 nm bis 50 nm gebildet sind,
- wobei die Aktivkohle mit mindestens einer Metallkomponente ausgerüstet und/oder ausgestattet ist, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist und wobei die Aktivkohle mit der metallhaltigen Ionischen Flüssigkeit (IL) in Kontakt gebracht ist,
- wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist,
- wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α derart bemessen ist, dass 20 % bis 95 % des Porenvolumens der Aktivkohle nicht mit der metallhaltigen Ionischen Flüssigkeit (IL) gefüllt sind, wobei der Porenfüllgrad α gemäß der Formel [α = V_{IL} / (V_{Pore} · m_{Träger})] berechnet ist, wobei in der Formel "V_{IL}" das Volumen der einzusetzenden Ionischen Flüssigkeit, "m_{Träger}" die Masse der einzusetzenden Aktivkohle und "V_{Pore}" das spezifische massebezogene Porenvolumen der Aktivkohle bezeichnen.

Wie zuvor angeführt, besteht die grundlegende Idee der vorliegenden Erfindung somit darin, in gezielter Weise eine Ionische Flüssigkeit (IL), welche Metalle bzw. Metallionen, vorzugsweise mindestens eine Metallverbindung, enthält, für die Ausrüstung einer Aktivkohle mit einer Metallkomponente einzusetzen, um so eine Aktivkohle mit reaktiven und/oder katalytischen Eigenschaften bereitzustellen, wobei die Aktivkohle mit der Metallkomponente insbesondere derart ausgerüstet ist, dass eine Beschichtung bzw. Benetzung bzw. Imprägnierung der Aktivkohle mit der metallhaltigen Ionischen Flüssigkeit (IL) vorliegt. In diesem Zusammenhang stehen vorzugsweise sowohl die äußere als auch die innere Oberflächenstruktur mitsamt den diesbezüglichen Poren, insbesondere Mikro-, Meso- und/oder Makroporen, der Aktivkohle zumindest teilweise und/oder abschnittsweise mit der metallhaltigen Ionischen Flüssigkeit (IL) und somit mit der Metallkomponente in Kontakt bzw. sind hiermit zumindest teilweise benetzt bzw. imprägniert. Dabei bildet die metallhaltige Ionische Flüssigkeit (IL) bzw. die Metallkomponente - ohne sich auf diese Theorie beschränken zu wollen - auf der Aktivkohleoberfläche sozusagen eine reaktive bzw. katalytische Schicht mit chemisorptiven und/oder physisorptiven Eigenschaften aus, welche die physisorptiven Eigenschaften der Aktivkohle ergänzt.

Auf Basis dieser der vorliegenden Erfindung zugrundeliegenden Konzeption wird in völlig überraschender Weise ein neuartiges Filtermaterial nach der Erfindung unter Verwendung dieser Aktivkohle bereitgestellt, welche über hervorragende Eigenschaften hinsichtlich der Sorption von unterschiedlichsten zu entfernenden Schadstoffen oder unterschiedlichsten störenden und mitunter toxischen Gasen verfügt.

Aufgrund der erfindungsgemäßen Konzeption, wonach die eingesetzte Metallkomponente eine metallhaltige, insbesondere Metallionen, vorzugsweise auf Basis einer Metallverbindung, enthaltende Ionische Flüssigkeit (IL) umfasst, wird erfindungsgemäß eine besonders homogene bzw. gleichmäßige Ausrüstung bzw. Imprägnierung der Aktivkohle - und zwar insbesondere über das gesamte Porenspektrum - erreicht, da die metallhaltige bzw. Metallionen enthaltende Ionische Flüssigkeit (IL) besonders gut in das Porensystem eindringen kann und dort eine gleichmäßige Benetzung der Porenoberfläche gewährleistet. Dabei ist es erfindungsgemäß völlig überraschend, dass das Porensystem der Aktivkohle nicht bzw. zumindest im Wesentlichen nicht nachteilig hinsichtlich der Adsorption, insbesondere Physisorption, von Schadstoffen beeinflusst wird. Mit anderen Worten verfügt die erfindungsgemäß eingesetzte Aktivkohle auch nach Ausrüstung mit der Metallkomponente über eine hohe, der Adsorption von Schadstoffen insbesondere mittels Physisorption zugängliche BET-Oberfläche, so dass die grundlegenden Eigenschaften der Aktivkohle als solche auch bei Ausrüstung mit der Metallkomponente erhalten bleiben, was so nicht vorhersehbar war.

Die im erfindungsgemäßen Filtermaterial eingesetzte Aktivkohle (und damit auch das erfindungsgemäße Filtermaterial als solches bzw. als ganzes) vereint folglich chemisorptive wie physisorptive Eigenschaften in einem einzigen Material und ist in der Lage, die Sorbate bzw. die zu sorbierenden Substanzen - im Unterschied zu nichtimprägnierter Aktivkohle oder auch im Unterschied zu herkömmlich imprägnierter Aktivkohle - auch zuverlässig und irreversibel bzw. dauerhaft zu binden.

Zudem wird durch die erfindungsgemäß vorgesehene Ausrüstung bzw. Imprägnierung der Aktivkohle mit der Metallkomponente eine zu Verstopfungen des Porensystems führende Kristall- bzw. Kristallitbildung im Porensystem, wie sie im Stand der Technik - beispielsweise durch Auskristallisation von Metallsalzen - oftmals vorliegt, verhindert, da zum einen die eingesetzten Metalle bzw. Metallverbindungen in der Ionischen Flüssigkeit (IL) dauerhaft gelöst bzw. dissoziiert sind und zum anderen die Ionische Flüssigkeit (IL) aufgrund ihrer sehr speziellen physikochemischen Eigenschaften dauerhaft an der Oberfläche der äußeren und inneren Strukturen der Aktivkohle in flüssigem Zustand verbleibt, was Kristallisationsvorgängen entgegenwirkt. Im Gegensatz zu der im Stand der Technik üblichen Metallsalzimprägnierung wird im Rahmen der vorliegenden Erfindung dabei auch bei hochmikroporöser Aktivkohle das Auftreten von Verstopfungen im Hinblick auf die Porenstruktur der Aktivkohle verhindert, was die Leistungsfähigkeit der im erfindungsgemäßen Filtermaterial eingesetzten Aktivkohle noch weiter verbessert.

Auch durch die besonders homogene bzw. gleichmäßige Ausrüstung bzw. Imprägnierung der im erfindungsgemäßen Filtermaterial eingesetzten Aktivkohle mit der für die reaktive bzw. katalytische Ausrüstung maßgeblichen metallhaltigen, insbesondere Metallionen enthaltenden Ionischen Flüssigkeit (IL) nach Art einer benetzenden Flüssigkeitsschicht wird die Leistungsfähigkeit der erfindungsgemäß eingesetzten Aktivkohle im Hinblick auf die Sorption bzw. den Abbau zu entfernender Substanzen nochmals gesteigert, insbesondere da die erfindungsgemäß eingesetzte Aktivkohle gewissermaßen über einen großen Teil ihrer Oberfläche über kombinierte Eigenschaften der Physisorption und der Chemisorption verfügt, welche sich zudem über die Summe der Einzelmaßnahmen hinaus verstärken, was als Indiz für das Vorliegen eines synergistischen Effektes gewertet werden muss.

Denn, wie die seitens der Anmelderinnen durchgeführten Untersuchungen überraschend zeigen, ist der Einsatz von Metallverbindungen bzw. Metallsalzen im Rahmen von Ionischen Flüssigkeiten (IL) gegenüber dem herkömmlichen Einsatz von Metallsalzen in kristalliner Form bzw. in Form von Festkörpern deutlich effizienter, weil - ohne sich auf diese Theorie beschränken zu wollen - zum einen einem Verstopfen von Porensystemen in der Aktivkohle effizient entgegengewirkt wird, da das katalytische bzw. reaktive System in Form einer Flüssigkeit eingesetzt wird. Zum anderen führt die Verwendung von Ionischer Flüssigkeit (IL) gewissermaßen als Lösemittel bzw. flüssiges Trägermedium für die eingesetzten Metalle bzw. Metallverbindungen durch das Vorliegen optimierter Diffusionsvorgänge zu einer guten Verteilung der zu sorbierenden Substanzen in dem Aktivkohlesystem, was deren Sorption gleichermaßen verbessert.

Erfindungsgemäß ergänzen sich somit die für die reaktive bzw. katalytische Ausrüstung maßgebliche Metallkomponente auf Basis der Ionischen Flüssigkeit (IL) mit dem Metall bzw. der Metallverbindung und die damit ausgerüstete bzw. imprägnierte partikuläre Aktivkohle in besonderer Weise.

Im Rahmen der vorliegenden Erfindung wird im Ergebnis ein optimiertes Adsorptionssystem mit kombinierten und sich ergänzenden Eigenschaften von Physisorption und Chemisorption zur Verfügung gestellt.

Dabei ist es im Rahmen der vorliegenden Erfindung völlig überraschend, dass sich Aktivkohle als solche überhaupt in effektiver Weise mit einer Metallkomponente unter Verwendung einer Ionischen Flüssigkeit (IL) ausrüsten lässt, da Aktivkohle als solche grundsätzlich hydrophobe Eigenschaften aufweist, was einer effizienten Benetzung bzw. Imprägnierung grundsätzlich abträglich ist. Insbesondere ist es jedoch aufgrund der speziellen erfindungsgemäßen Verfahrensweise in völlig überraschender und nicht vorhersehbarer Weise gelungen, Aktivkohle als solche (auch ohne Vorbehandlung) mit der in Rede stehenden Metallkomponente unter Einsatz einer Ionischen Flüssigkeit (IL) auszustatten, was zu den zuvor angeführten positiven Eigenschaften hinsichtlich der Sorption von Schadstoffen führt. Diesbezüglich vorteilhaft ist dabei die Tatsache, dass Aktivkohle als solche - im Gegensatz zu herkömmlichen Trägermaterialien - allenfalls nur ein geringes Maß an polaren oder funktionellen Gruppen bzw. im Wesentlichen keine polaren oder funktionellen Gruppen aufweist, welche mit der Metallkomponente bzw. dem Metall und/oder der Ionischen Flüssigkeit (IL) in unerwünschter Weise in Wechselwirkung treten könnten. Im Gegensatz zu Aktivkohle, wie sie erfindungsgemäß eingesetzt wird, weisen herkömmliche Trägermaterialien, wie Aluminiumoxid, Siliciumdioxid oder andere mineralische Oxide, oftmals saure oder basische Gruppen auf, welche die Aktivität der eingesetzten Komponente herabsetzen können, was bei Aktivkohle nicht der Fall ist.

Zusammenfassend zeichnet sich die erfindungsgemäß ausgerüstete Aktivkohle somit durch hervorragende Adsorptionseigenschaften auf Basis einer Kombination von Physisorption und Chemisorption aus, wobei gleichermaßen die Tendenz zur Desorption von sorbierten Substanzen - im Unterschied zu herkömmlicher Aktivkohle - signifikant herabgesetzt ist. Insbesondere tritt eine bei herkömmlicher Aktivkohle z. B. bei Erschöpfung oder übermäßiger Beladung häufig vorkommende Freisetzung bzw. Desorption bereits sorbierter Substanzen bei der erfindungsgemäß eingesetzten Aktivkohle nicht bzw. nicht in nennenswertem Maße auf. Aufgrund der erfindungsgemäßen Konzeption der Bereitstellung einer Aktivkohle, welche neben ihren inhärenten adsorptiven Eigenschaften gleichermaßen reaktive bzw. katalytische Eigenschaften aufweist, wird eine dauerhafte und im Allgemeinen irreversible Bindung bzw. ein effizienter Abbau sorbierter Substanzen gewährleistet, was gleichermaßen zu einer verringerten Desorption der in Rede stehenden Substanzen und zu einer Steigerung der Gesamtadsorptionskapazität führt.

Insbesondere weist das erfindungsgemäße Filtermaterial - im Unterscheid zum Stand der Technik - insbesondere im Hinblick auf die Reduktion der Konzentration von Schadgasen stets hervorragende sorptive Eigenschaften auf: Insbesondere ist ein Vorteil des erfindungsgemäßen Filtermaterials darin zu sehen, dass eine ausreichende Adsorptionsleistung gerade auch bei sehr geringen Mengen an zu entfernenden Schadstoffen bzw. Gasen gegeben ist, da die Adsorption sofort und unmittelbar (und nicht erst ab einem gewissen Schwellenwert) einsetzt. Infolgedessen können auch geringe Mengen an unerwünschten Schadstoffen und Gasen durch das erfindungsgemäße Filtermaterial entfernt werden (d. h. ein sogenannter "Schlupf" vermieden werden). Dies ist insbesondere für die Erzeugung von Reinraumatmosphären von Bedeutung.

Bei dem erfindungsgemäßen Filtermaterial werden die sorbierten Substanzen dauerhaft, insbesondere irreversibel, gebunden, und es treten im Allgemeinen keine signifikanten bzw. im Vergleich zu herkömmlicher Aktivkohle signifikant geringere Desorptionseffekte auf. Ohne sich auf eine spezielle Theorie festlegen zu wollen, lässt sich dieses Phänomen mitunter durch die irreversible Ausbildung von Komplexen und/oder Bindung in der Ionischen Flüssigkeit (IL) erklären. Selbst bei Einsatz iodidhaltiger Imprägniersysteme wird daher kein Austritt von Iod beobachtet.

Im Allgemeinen eignet sich die im erfindungsgemäßen Filtermaterial eingesetzten Aktivkohle beispielsweise zur Gasadsorption und insbesondere zur Adsorption von Schwefel enthaltenden Gasen (wie Schwefeloxiden und/oder Schwefelwasserstoff), von Stickstoff enthaltenden Gasen (wie Stickoxiden und/oder Stickstoffwasserstoffen wie Ammoniak) sowie von halogenhaltigen Gasen (wie Halogene, Chlorwasserstoffgas etc.). Gleichermaßen eignet sich die im erfindungsgemäßen Filtermaterial eingesetzte Aktivkohle auch zur Adsorption von Halogenen als solchen, insbesondere in Form von Gasen oder Dämpfen, beispielsweise von Ioddämpfen oder dergleichen. Auch von daher eignet sich die im erfindungsgemäßen Filtermaterial eingesetzte Aktivkohle z. B. insbesondere auch für die Aufreinigung bzw. Bereitstellung von aufgereinigter Luft für Reinräume oder dergleichen.

Insbesondere weist die im erfindungsgemäßen Filtermaterial eingesetzte Aktivkohle besonders gute Eigenschaften im Hinblick auf die Sorption, insbesondere Physisorption und/oder Chemisorption, von Schwefel- und Stickstoffoxiden, Halogenwasserstoffen, Cyangas, Cyanwasserstoff, Schwefelwasserstoff und/oder Ammoniak sowie Chlorgas auf.

Ein weiterer Vorteil der im erfindungsgemäßen Filtermaterial eingesetzte Aktivkohle ist zudem darin zu sehen, dass die Sorptionseigenschaften zumindest im Wesentlichen unabhängig von der Luftfeuchtigkeit sind, insbesondere im Hinblick auf die unter Einsatzbedingungen üblichen Luftfeuchtigkeiten.

Zudem weist die im erfindungsgemäßen Filtermaterial eingesetzte Aktivkohle hervorragende Sorptionseigenschaften sowohl bei niedrigen als auch hohen Konzentrationen von zu sorbierenden (Schad-)Stoffen bzw. Gasen in aufzureinigenden Medien, wie Luft, auf, was diese Aktivkohle z. B. auch für die Aufreinigung von Luft für Reinraumbedingungen interessant macht.

Was die im Rahmen der vorliegenden Erfindung eingesetzte Ionische Flüssigkeit (IL) anbelangt, so handelt es sich hierbei um bei niedrigen Temperaturen schmelzende Salze, d. h. insbesondere um Salze, die auch bei Raumtemperatur (T = 20 °C) in flüssiger Form vorliegen. Insbesondere weist die erfindungsgemäß eingesetzte Ionische Flüssigkeit (IL) einen nichtmolekularen, ionischen Charakter auf, d. h. die Ionische Flüssigkeit (IL) liegt in ionischer bzw. dissoziierter Form vor. Im Allgemeinen weist die Ionische Flüssigkeit (IL), wie sie erfindungsgemäß eingesetzt wird, Schmelzpunkte im Bereich von 250 °C bis -90 °C, insbesondere im Bereich von 200 °C bis -100 °C, vorzugsweise im Bereich von 100 °C bis -90 °C (bei Atmosphärendruck, d. h. 1,013 bar), auf.

Die Ionische Flüssigkeit (IL) wird im Allgemeinen aus positiven Ionen (Kationen) und negativen Ionen (Anionen) gebildet, wobei die Ionische Flüssigkeit (IL) insgesamt ladungsneutral ist. Im Allgemeinen können sowohl die Anionen als auch die Kationen einer Ionischen Flüssigkeit (IL), unabhängig voneinander, organischer oder anorganischer Natur sein, so dass es sich bei der Ionischen Flüssigkeit (IL) im Allgemeinen um ein organisches oder anorganisches, bei niedrigen Temperaturen schmelzendes Salz handelt. In bevorzugter Weise sind die Kationen bzw. Anionen einer Ionischen Flüssigkeit (IL) einwertig, es können aber auch höhere bzw. unter Wahrung der Gesamtladungsneutralität unterschiedliche Wertigkeiten vorliegen, weshalb die Anzahl der Anionen nicht zwangsläufig gleich der Anzahl der Kationen ist. Gleichermaßen kann es vorgesehen sein, dass in Ionischen Flüssigkeiten (IL) Kombinationen sowohl unterschiedlicher Anionen als auch unterschiedlicher Kationen realisiert sind.

Durch die geeignete Wahl der zugrundeliegenden Kationen bzw. Anionen ist insbesondere eine gezielte Einstellung der Polarität und damit eine Abstimmung bzw. Einstellung der Löslichkeitseigenschaften der zugrundeliegenden Ionischen Flüssigkeit (IL) möglich. Dabei können sowohl wassermischbare ionische Flüssigkeiten als auch nicht mit Wasser mischbare ionische Flüssigkeiten verwendet bzw. eingestellt werden. Grundsätzlich kommt auch der Einsatz von solchen Ionischen Flüssigkeiten (IL) in Frage, die selbst mit organischen Lösemitteln zwei Phasen bilden, auch wenn dies erfindungsgemäß nicht bevorzugt ist. In erfindungsgemäß bevorzugter Weise handelt es sich bei der eingesetzten Ionischen Flüssigkeit (IL) um eine mit insbesondere polaren organischen Flüssigkeiten bzw. Lösemitteln mischbare bzw. hierin lösbare Verbindung.

Im Gegensatz zu herkömmlichen molekularen Flüssigkeiten sind Ionische Flüssigkeiten (IL) vollständig bzw. in ihrer Gesamtheit ionisch. Aufgrund der zuvor angeführten Eigenschaften liegen Ionische Flüssigkeiten (IL) somit bereits bei niedrigen Temperaturen, wie z. B. bei Raumtemperatur (T = 20 °C) und Atmosphärendruck, gewissermaßen als Schmelze und/oder in dissoziierter Form auf Basis der zugrundeliegenden Kationen und Anionen vor.

In diesem Zusammenhang weisen Ionische Flüssigkeiten (IL) besondere physikochemische Eigenschaften auf, wie z. B. eine elektrische Leitfähigkeit und spezifische Lösungs- und Mischungseigenschaften. Ionische Flüssigkeiten (IL) weisen im Allgemeinen einen äußerst geringen Dampfdruck und daher keine bzw. allenfalls eine vernachlässigbare geringe Tendenz zum Verdampfen auf. Dies ist auch aus verfahrenstechnischer Hinsicht von großem Vorteil, da auf diese Weise beispielsweise eine destillative Trennung eines Reaktionsgemisches als effektive Methode zur Produktabtrennung möglich ist, wobei die im Stand der Technik bekannten Probleme durch Azeotropbildung zwischen Lösungsmitteln und Produkten nicht auftreten. Insbesondere weisen Ionische Flüssigkeiten (IL) unterhalb ihrer Zersetzungstemperatur, welche oftmals oberhalb von 200 °C liegt, auch unter Hochvakuumbedingungen zumindest im Wesentlichen keine makroskopischen Verluste durch Verdampfen oder dergleichen auf. Zudem sind Ionische Flüssigkeiten (IL), wie sie erfindungsgemäß eingesetzt werden, im Allgemeinen nicht brennbar.

Durch die hohe Variationsbreite in der Struktur ihrer Kationen und/oder Anionen können die physikochemischen Eigenschaften von Ionischen Flüssigkeiten (IL) in einem weiten Bereich variiert bzw. eingestellt werden, so dass im Rahmen der vorliegenden Erfindung für den entsprechenden Anwendungszweck gewissermaßen maßgeschneiderte bzw. optimierte Ionische Flüssigkeiten (IL) eingesetzt werden können, um auf diese Weise eine besonders effektive Ausrüstung der erfindungsgemäß eingesetzten Aktivkohle mit der Metallkomponente zu ermöglichen. So können beispielsweise die Polarität, die Viskosität, das Schmelzverhalten, insbesondere der Schmelzpunkt, oder dergleichen in gezielter Weise eingestellt bzw. vorgegeben werden.

Genauer gesagt handelt es sich bei einer Ionischen Flüssigkeit (IL) um eine solche Flüssigkeit, welche ausschließlich Ionen enthält. Somit handelt es sich bei einer Ionischen Flüssigkeit (IL) gewissermaßen um flüssige Salze in Form von Schmelzen, und zwar ohne dass das zugrundeliegende Salz in einem Lösemittel, wie Wasser, gelöst ist. Wie zuvor angeführt, versteht man unter einer Ionischen Flüssigkeit (IL) somit ein solches Salz, welches bei Temperaturen unterhalb von 250 °C, insbesondere unterhalb von 200 °C, vorzugsweise unterhalb von 100 °C, bei Atmosphärendruck flüssig ist bzw. im geschmolzenen Zustand vorliegt. Zusammenfassend ist anzuführen, dass sich Ionische Flüssigkeiten (IL) durch eine Reihe interessanter Eigenschaften auszeichnen. Wie zuvor angeführt, sind Ionische Flüssigkeiten (IL) thermisch stabil, nicht entzündlich und haben einen sehr niedrigen und quasi nicht messbaren Dampfdruck. Zudem verfügen Ionische Flüssigkeiten (IL) über sehr gute Lösungseigenschaften für zahlreiche Substanzen. Aufgrund ihres rein ionischen Aufbaus weisen Ionische Flüssigkeiten (IL) besondere elektrochemische Eigenschaften auf, wie z. B. eine elektrische Leitfähigkeit sowie eine hohe elektrochemische Stabilität und damit eine hohe Stabilität gegen Oxidation bzw. Reduktion. Insbesondere durch Variation von Kation und Anion, insbesondere im Hinblick auf die Verwendung spezieller organischer Kerne für Kation bzw. Anion, insbesondere für das Kation, bzw. Seitenketten bzw. Substitutenten, kann z. B. die Löslichkeit in Wasser oder in organischen Lösemitteln variiert werden, was gleichermaßen für den Schmelzpunkt und die Viskosität gilt.

Für weitere Informationen zu Ionischen Flüssigkeiten (IL) kann verwiesen werden auf die wissenschaftliche Publikation gemäß Wasserscheid P., Keim W., Angew. Chem., 2000, 112, 3926-3945*.*

Im Allgemeinen ist die erfindungsgemäß eingesetzte Ionische Flüssigkeit (IL) eine Verbindung der allgemeinen Formel [Kat]ⁿ⁺[An]ⁿ⁻, wobei "Kat" ein Kation bezeichnet und "An" ein Anion bezeichnet und "n" eine ganze Zahl gleich 1 oder 2, insbesondere 1, bezeichnet. In erfindungsgemäß bevorzugter Weise weist die Ionische Flüssigkeit (IL) somit einwertige Kationen bzw. Anionen auf.

Im Rahmen der vorliegenden Erfindung kann es auch vorgesehen sein, dass die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4, insbesondere im Bereich von 1 bis 3, vorzugsweise 1 oder 2, bevorzugt jeweils 1, bezeichnen.

Was die Ionische Flüssigkeit (IL) weiterhin anbelangt, so kann das Kation [Kat]ⁿ⁺ der Ionischen Flüssigkeit (IL) ein Stickstoff enthaltendes Kation sein. In diesem Zusammenhang kann es erfindungsgemäß vorgesehen sein, dass das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, insbesondere Imidazoliumkationen. Die Bezeichnung der Heteroaromaten bezieht sich dabei nicht nur auf den oben bezeichneten Grundkörper bzw. den Kern als solchen, sondern umfasst auch substituierte Derivate der in Rede stehenden Grundkörper bzw. Kerne, wobei diesbezüglich insbesondere auch die hierzu nachfolgend noch angeführten Substituenten in Betracht kommen können.

Im Rahmen der vorliegenden Erfindung kann es vorgesehen sein, dass das Kation [Kat]ⁿ⁺ der Ionischen Flüssigkeit (IL) ein Phosphor enthaltendes Kation in Form eines Phosphoniumkations ist.

Erfindungsgemäß hat es sich als besonders vorteilhaft erwiesen, wenn das Kation [Kat]ⁿ⁺ der Ionischen Flüssigkeit (IL) ausgewählt ist aus der Gruppe von
- quarternären Ammoniumkationen der allgemeinen Formel (I):

   [NR¹R²R³R]⁺ Formel (I)
- Phosphoniumkationen der allgemeinen Formel (II):

   [PR¹R²R³R]⁺ Formel (II)
- Imidazoliumkationen der allgemeinen Formel (III): 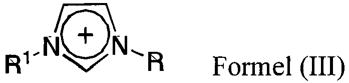 wobei in der Formel (III) der Imidazolkern gegebenenfalls mit mindestens einer Gruppe, ausgewählt aus (C₁-C₈)-Alkylgruppen, (C₁-C₈)-Alkoxy-gruppen, (C₁-C₈)-Aminoalkylgruppen, (C₅-C₁₂)-Arylgruppen und (C₅-C₁₂)-Aryl-(C₂-C₈)-Alkylgruppen, substituiert ist;
- Pyridiniumkationen der allgemeinen Formel (IV): 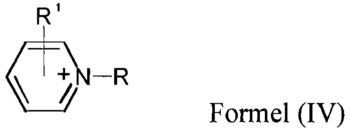 wobei in der Formel (IV) der Pyridinkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist;
- Pyrazoliumkationen der allgemeinen Formel (V): 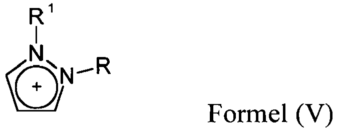 wobei in der Formel (V) der Pyrazolkern gegebenenfalls mit mindestens einer Gruppe, ausgewählt aus (C₁-C₆)-Alkylgruppen, (C₁-C₆)-Alkoxy-gruppen, (C₁-C₆)-Aminoalkylgruppen, (C₅-C₁₂)-Arylgruppen oder (C₅-C₁₂)-Aryl-(C₁-C₆)-Alkylgruppen, substituiert ist; und
- Triaziniumkationen der allgemeinen Formel (VI): 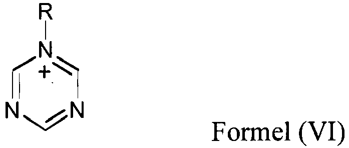 wobei in der Formel (VI) der Triazinkern gegebenenfalls mit mindestens einer Gruppe, ausgewählt aus (C₁-C₆)-Alkylgruppen, (C₁-C₆)-Alkoxy-gruppen, (C₁-C₆)-Aminoalkylgruppen, (C₅-C₁₂)-Arylgruppen und (C₅-C₁₂)-Aryl-(C₁-C₆)-Alkylgruppen, substituiert ist;
   wobei in den Formeln (I) bis (VI), unabhängig voneinander, die Reste R¹, R², R³, unabhängig voneinander, ausgewählt sind aus der Gruppe von
- Wasserstoff;
- linearen oder verzweigten, gesättigten oder ungesättigten, aliphatischen oder alicyclischen (C₁-C₂₀)-Alkylgruppen;
- Heteroarylgruppen oder (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- Arylgruppen oder (C₅-C₁₂)-Aryl-(C₁-C₆)-Alkylgruppen, insbesondere wobei die vorgenannten Gruppen jeweils gegebenenfalls mit mindestens einer (C₁-C₆)-Alkylgruppe und/oder mindestens einem Halogenatom substituiert sind; und
wobei in den Formeln (I) bis (VI), unabhängig voneinander, der Rest R ausgewählt ist aus
- linearen oder verzweigten, gesättigten oder ungesättigten, aliphatischen oder alicyclischen (C₁-C₂₀)-Alkylgruppen;
- (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- (C₅-C₁₂)-Aryl-(C₁-C₆)-Alkylgruppen, insbesondere wobei die vorgenannten Gruppen gegebenenfalls mit wenigstens einer (C₁-C₆)-Alkylgruppe und/oder einem Halogenenatom substituiert sind.

Gemäß einer erfindungsgemäß bevorzugten Ausführungsform ist das Kation [Kat]ⁿ⁺ der Ionischen Flüssigkeit (IL) ein Imidazoliumkation der allgemeinen Formel (III): 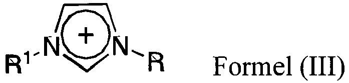 wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkylgruppen, (C₅-C₁₂)-Arylgruppen und (C₅-C₁₂)-Aryl-(C₁-C₈)-Alkylgruppen, substituiert ist und wobei in der Formel (III) die Reste R und R¹, unabhängig voneinander, ausgewählt sind aus der Gruppe von linearen oder verzweigten, gesättigten oder ungesättigten, aliphatischen oder alicyclischen, insbesondere linearen (C₁-C₂₀)-Alkylgruppen, insbesondere wobei die Reste R und R¹ voneinander verschieden sind und/oder insbesondere wobei die Reste R und R¹ eine voneinander verschiedene Anzahl an Kohlenstoffatomen aufweisen und/oder
wobei in der Formel (III) der Rest R eine Methylgruppe ist und wobei in der Formel (III) der Rest R¹ eine insbesondere lineare (C₁-C₂₀)-Alkylgruppe, vorzugsweise eine insbesondere lineare (C₂-C₁₂)-Alkylgruppe, bevorzugt eine insbesondere lineare (C₂-C₈)-Alkylgruppe, ist und/oder
wobei in der Formel (III) der Rest R eine Methylgruppe ist und wobei in der Formel (III) der Rest R¹ eine Ethylgruppe, Butylgruppe oder Octylgruppe, insbesondere eine Ethylgruppe, ist.

Weiterhin werden im Rahmen der vorliegenden Erfindung besonders gute Ergebnisse erhalten, wenn das Kation [Kat]ⁿ⁺ der Ionischen Flüssigkeit (IL) ein 1-Ethyl-3-methylimidazoliumkation ([EMIM]⁺), ein 1-Butyl-3-methyl-imidazoliumkation ([BMIM]⁺) oder ein 1-Octyl-3-methylimidazoliumkation ([OMIM]⁺), insbesondere ein 1-Ethyl-3-methylimidazoliumkation ([EMIMI⁺), ist.

Was das Anion [An]ⁿ⁻ der erfindungsgemäß eingesetzten Ionischen Flüssigkeit (IL) anbelangt, so ist es erfindungsgemäß vorgesehen, dass das Anion [An]ⁿ⁻ der Ionischen Flüssigkeit (IL) ein organisches oder anorganisches Anion ist.

In diesem Zusammenhang kann das Anion [An]ⁿ⁻ der Ionischen Flüssigkeit (IL) ausgewählt sein aus der Gruppe von Chlorocuprat ([CuCl₃]⁻), Bromocuprat ([CuBr₃]⁻), Chlorostannat ([SnCl₃]⁻, [Sn₂Cl₅]⁻), Bromostannat ([SnBr₃]⁻), Chlorozinkat ([ZnCl₃]⁻), Bromozinkat ([ZnBr₃]⁻), Chloroferrat ([FeCl₃]⁻), Bromoferrat ([FeBr₃]⁻), Chlorocobaltat ([CoCl₃]⁻), Bromocobaltat ([CoBr₃]⁻), Chloronickelat ([NiCl₃]⁻), Bromonickelat ([NiBr₃]⁻), Tetrafluoroborat ([BF₄]⁻), Tetrachloroborat ([BCl₄]⁻), Hexafluorophosphat ([PF₆]⁻), Hexafluoroantimonat ([SbF₆]⁻), Hexafluoroarsenat ([AsF₆]⁻), Sulfat ([SO₄]²⁻); Carbonat ([CO₃]²⁻), Fluorosulfonat, [R'-COO]⁻, [R'-SO₃]⁻, [R'-SO₄]⁻, [R'₂PO₄]⁻, Tetrakis-(3,5-bis-(trifluormethyl)-phenyl)borat ([BARF]⁻) und Bissulfonylamid [(R'-SO₂)₂N]⁻, wobei R' ein linearer oder verzweigter, 1 bis 12 Kohlenstoffatome enthaltender aliphatischer oder alicyclischer Alkylrest oder ein (C₅-C₁₈)-Arylrest, ein (C₅-C₁₈)-Aryl-(C₁-C₆)-alkylrest oder ein (C₁-C₆)-Alkyl-(C₅-C₁₈)-arylrest ist, wobei der Rest gegebenenfalls mit Halogenatomen und/oder Sauerstoffatomen substituiert ist.

Gleichermaßen kann es erfindungsgemäß vorgesehen sein, dass das Anion [An]ⁿ⁻ der Ionischen Flüssigkeit (IL) ausgewählt ist aus der Gruppe von Dicyanamid ([N(CN)₂]⁻), Halogeniden, insbesondere Cl⁻, Br⁻, F⁻, I⁻, Nitrat ([NO₃]⁻), Nitrit ([NO₂]⁻), anionischen Metallkomplexen, insbesondere [CuCl₄]²⁻, [PdCl₄]²⁻ oder [AuCl₄]⁻, Acetat ([CH₃COO]⁻), Trifluoracetat ([F₃CCOO]⁻), Tosylat ([C₇H₇SO₃]⁻), Nonafluorbutansulfonat ([C₄F₉SO₃⁻), Tris(pentafluorethyl)trifluorphosphat ([PF₃(C₂F₅)₃]⁻), Tricyanomethid ([C(CN)₃]⁻), Tetracyanoborat ([B(CN)₄]⁻, Thiocyanat ([SCN]⁻), Carboxylat ([R"-COO]⁻), Sulfonat ([R"-SO₃]⁻), Dialkylphosphat ([R"PO₄R"'] ⁻) oder Bissulfonylimiden [(R"-SO₂)₂N]⁻), wobei R" und R"', unabhängig voneinander, jeweils ein linearer, verzweigter, aliphatischer oder alicyclischer (C₅-C₁₈)-Alkylrest oder ein (C₅-C₁₈)-Arylrest, (C₅-C₁₈)-Aryl-(C₁-C₆)-alkylrest oder (C₁-C₆)-Alkyl-(C₅-C₁₈)-arylrest ist, insbesondere wobei der Rest gegebenenfalls durch Halogenatome oder Sauerstoffatome substituiert ist.

Besonders gute Ergebnisse hinsichtlich der sorptiven Eigenschaften der im erfindungsgemäßen Filtermaterial eingesetzten Aktivkohle werden zudem erreicht, wenn das Anion [An]ⁿ⁻ der Ionischen Flüssigkeit (IL) ein Halogenidanion, insbesondere Cl⁻, Br⁻, F⁻, I⁻, vorzugsweise Cl⁻, ist und/oder wenn das Anion [An]ⁿ⁻ der Ionischen Flüssigkeit (IL) ein Carbonsäureanion, insbesondere ein Acetatanion, ist.

In erfindungsgemäß bevorzugter Weise ist die Ionische Flüssigkeit (IL) ausgewählt aus der Gruppe von Verbindungen der Formeln (VII) bis (IX)

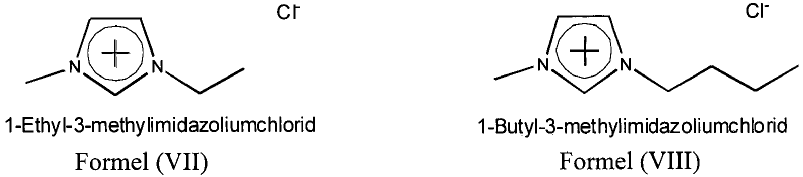

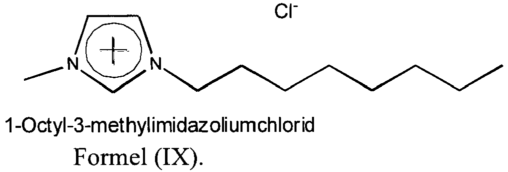

In diesem Zusammenhang hat es sich als besonders vorteilhaft erwiesen, wenn die Ionische Flüssigkeit (IL) eine Verbindung der Formel (VII) ist.

In diesem Zusammenhang haben die Anmelderinnen in völlig überraschender Weise herausgefunden, dass insbesondere unter Verwendung einer Ionischen Flüssigkeit (IL) mit einem Kation in Form eines 1-Ethyl-3-methylimidazoliumkations ([EMIM]⁺), eines 1-Butyl-3-methylimidazoliumkations ([BMIM]⁺) und/oder eines 1-Octyl-3-methylimidazoliumkations ([OMIM]⁺), insbesondere unter Verwendung eines entsprechenden Chloridanions, hervorragende Ergebnisse hinsichtlich der Ausrüstung der im erfindungsgemäßen Filtermaterial eingesetzte Aktivkohle mit katalytischen bzw. reaktiven Eigenschaften erhalten werden, und zwar in der Reihenfolge [EMIM]⁺, [BMIM]⁺ und [OMIM]⁺, wobei [EMIM]⁺ die besten Ergebnisse liefert, d. h. mit kleiner werdender Kettenlänge des Substituten werden bessere Ergebnisse hinsichtlich der Ausrüstung mit der Metallkomponente erreicht. Ohne sich auf diese Theorie beschränken zu wollen, weisen die oben genannten Kationen, insbesondere unter Verwendung eines korrespondierenden Chloridanions, eine besonders gute Kompatibilität zu der auszurüstenden Aktivkohle auf, so dass eine besonders effektive Imprägnierung des Porensystems der Aktivkohle gewährleistet ist. Hierbei spielen insbesondere die Größe, Ladungsdichte und räumliche Struktur der in Rede stehenden Kationen eine Rolle. Noch weiterführend verbesserte Ergebnisse werden, wie zuvor angeführt, unter Verwendung von [EMIM]⁺ erreicht, welches sozusagen eine weiter optimierte Porengängigkeit aufweist. Zudem ist es bei kleinerer Kationengröße möglich, größere Anteile, insbesondere größere molare Massenanteile des Metalls bzw. der Metallverbindung in der Metallkomponente bzw. der metallhaltigen Ionischen Flüssigkeit (IL) zu realisieren, was den katalytischen bzw. reaktiven Eigenschaften zuträglich ist.

Im Allgemeinen ist es im Rahmen der vorliegenden Erfindung auch möglich, dass die Metallkomponente eine Mischung voneinander verschiedener Ionischer Flüssigkeiten (IL) enthält.

Erfindungsgemäß ist es weiterhin bevorzugt, wenn die Metallkomponente mindestens ein Metall, insbesondere in Form einer Metallverbindung, in mindestens einer Ionischen Flüssigkeit (IL), insbesondere in der Ionischen Flüssigkeit (IL), gelöst und/oder dissoziiert, aufweist. Mit anderen Worten ist es erfindungsgemäß bevorzugt, dass die Ionische Flüssigkeit (IL) gewissermaßen das Trägermedium bzw. das Lösemittel für die Metallverbindung der Metallkomponente darstellt. Dabei liegt, wie zuvor angeführt, die Metallverbindung vorzugsweise zumindest im Wesentlichen vollständig gelöst bzw. dissoziiert in der Ionischen Flüssigkeit (IL) vor, so dass die Metallkomponente insgesamt insbesondere eine kristall-, kristallit- und/oder zumindest im Wesentlichen partikelfreie Flüssigkeit, insbesondere Lösung bzw. Schmelze, darstellt.

Erfindungsgemäß kann es dabei vorgesehen sein, dass die Metallkomponente und/oder die Ionische Flüssigkeit (IL) mindestens ein Metall in einer positiven Oxidationsstufe, insbesondere mindestens ein Metallkation, aufweist. In diesem Zusammenhang kann die Oxidationsstufe des Metalls im Bereich von +I bis +VII, insbesondere im Bereich von +I bis +IV, vorzugsweise im Bereich von +I bis +III, liegen. Besonders bevorzugt ist die Oxidationsstufe des Metalls +I oder +II. In Bezug auf einfache Ionen entspricht die Oxidationszahl der Ladungszahl, während bei mehrkernigen Ionen, insbesondere so genannten Clustern, die Oxidationszahl von der Ladungszahl abweichen kann, was dem Fachmann als solches jedoch wohlbekannt ist.

Erfindungsgemäß kann die Metallkomponente und/oder die Ionische Flüssigkeit (IL) mindestens ein Metall, ausgewählt aus der Gruppe von Metallen der Haupt- und Nebengruppen des Periodensystems der Elemente und den Lanthaniden, aufweisen. Gleichermaßen kann die Metallkomponente und/oder die Ionische Flüssigkeit (IL) mindestens ein Metall aus den Haupt- oder Nebengruppen des Periodensystems der Elemente oder mindestens ein Lanthanid aufweisen. Insbesondere kann die Metallkomponente und/oder die Ionische Flüssigkeit (IL) mindestens ein Metall, ausgewählt aus Elementen der Hauptgruppe IV oder der Nebengruppen I, II, III, IV, V, VI, VII und VIII des Periodensystems der Elemente, insbesondere aus Elementen der Hauptgruppe IV oder der Nebengruppen I und II des Periodensystems der Elemente, aufweisen.

Erfindungsgemäß ist es bevorzugt, wenn die Metallkomponente und/oder die Ionische Flüssigkeit (IL) mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, insbesondere Zn, Ag, Sn, Ni und Cu, aufweist.

Im Allgemeinen sollte die Metallkomponente und/oder die Ionische Flüssigkeit (IL) mindestens eine in der Ionischen Flüssigkeit (IL) lösbare oder dissoziierbare Metallverbindung, vorzugsweise auf Basis mindestens eines zuvor definierten Metalls, aufweisen. Gleichermaßen sollte die Metallkomponente und/oder die Ionische Flüssigkeit mindestens eine anorganische oder organische Metallverbindung, vorzugsweise auf Basis mindestens eines zuvor definierten Metalls, insbesondere ein Metallsalz oder Metalloxid, vorzugsweise ein Metallsalz, aufweisen.

Der Begriff "lösbar" bzw. "dissoziierbar", wie er in diesem Zusammenhang im Rahmen der vorliegenden Erfindung verwendet wird, ist dabei insbesondere derart zu verstehen, dass bei den gewählten Konzentrationen bzw. Mengen die Metallverbindung zumindest im Wesentlichen vollständig in der Ionischen Flüssigkeit (IL) bzw. Metallkomponente gelöst bzw. dissoziiert vorliegt, so dass diesbezüglich zumindest im Wesentlichen keine Feststoffpartikel bzw. Kristalle und/oder Kristallite in der Metallkomponente vorliegen.

Im Rahmen der vorliegenden Erfindung kann es insbesondere vorgesehen sein, dass die Metallkomponente und/oder die Ionische Flüssigkeit (IL) ein organisches oder anorganisches Metallsalz aufweist, vorzugsweise auf Basis mindestens eines zuvor definierten Metalls. Dabei kann das Metallsalz ausgewählt sein aus der Gruppe von Halogenidsalzen, Sulfaten, Sulfiden, Sulfiten, Nitraten, Nitriten, Phosphaten, Phosphiden, Phosphiten, Carbamaten, Alkohalaten und Carbonsäuresalzen, insbesondere Halogenidsalzen und Carbonsäuresalzen.

Insbesondere kann die Metallkomponente und/oder die Ionische Flüssigkeit (IL) ein Metallhalogenid, vorzugsweise auf Basis mindestens eines zuvor definierten Metalls, insbesondere ein Fluorid, Chlorid, Bromid oder Iodid, vorzugsweise Chlorid, oder ein Carbonsäuresalz eines Metalls, insbesondere Acetat, aufweisen.

Gemäß einer erfindungsgemäß besonders bevorzugten Ausführungsform kann die Metallkomponente und/oder die Ionische Flüssigkeit (IL) eine Metallverbindung, ausgewählt aus der Gruppe von Nickelchlorid, Kupferchlorid, Zinkacetat und Zinnacetat, aufweisen. Beispielsweise hat sich der Einsatz von Kupferverbindungen bzw. Kupfersalzen, insbesondere in Form von Kupferchlorid, beispielsweise für die Sorption von stickstoffhaltigen Gasen, insbesondere Ammoniak (NH₃), als vorteilhaft erwiesen, wobei - ohne sich auf diese Theorie beschränken zu wollen - Ammoniak insbesondere im Sinne einer irreversiblen Gasbindung sorbiert wird. Diesbezüglich entsteht im Rahmen der Chemisorption insbesondere ein Kupfertetraminkomplex ([Cu(NH₃)₄]²⁺), wobei ein Teil des sorbierten Ammoniaks auch über Physisorption gebunden wird. Auch hieraus resultiert eine nur geringe Desorption der sorbierten Verbindungen.

Insbesondere liegt die Ionische Flüssigkeit (IL) zusammen mit dem Metall und/oder der Metallverbindung als Schmelze vor. Gleichermaßen sollten, wie zuvor angeführt, das Metall und/oder die Metallverbindung in der Ionischen Flüssigkeit (IL) zumindest im Wesentlichen kristall- und/oder kristallitfrei vorliegen. Gleichermaßen sollten das Metall und/oder die Metallverbindung in der Ionischen Flüssigkeit (IL) zumindest im Wesentlichen vollständig gelöst, insbesondere zumindest im Wesentlichen vollständig dissoziiert, vorliegen.

Was die Menge an Metall in der Ionischen Flüssigkeit (IL) anbelangt, so kann diese in weiten Bereichen variieren. Erfindungsgemäß ist es jedoch bevorzugt, wenn die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält.

Zudem werden besonders gute Ergebnisse erhalten, wenn die Metallkomponente bzw. die metallhaltige Ionische Flüssigkeit (IL) das Metall, insbesondere in Form der Metallverbindung, in einem molaren Massenanteil im Bereich von 1 % bis 90 %, insbesondere im Bereich von 5 % bis 70 %, vorzugsweise im Bereich von 10 % bis 60 %, bevorzugt im Bereich von 10 % bis 55 %, bezogen auf die Metallkomponente bzw. die metallhaltige Ionische Flüssigkeit (IL) und berechnet als Metall, enthält.

Auch dem Verhältnis von Ionischer Flüssigkeit (IL) einerseits zu dem eingesetzten Metall andererseits kommt hinsichtlich der katalytischen bzw. reaktiven Eigenschaften eine Bedeutung zu. So werden erfindungsgemäß besonders gute Ergebnisse erreicht, wenn das molare Verhältnis von Ionischer Flüssigkeit (IL) zu Metall "[Ionische Flüssigkeit (IL) : Metall]" im Bereich von [10 : 0,1] bis [0,1 : 10], insbesondere im Bereich von [1 : 0,5] bis [1 : 3], vorzugsweise im Bereich von [1 : 0,6] bis [1 : 2], bevorzugt im Bereich von [1 : 1] bis [1 : 1,6], liegt.

Was die oben angeführten Werte hinsichtlich der Menge und des molaren Massenanteils des Metalls bzw. der Metallverbindung bzw. dem molaren Verhältnis von Ionischer Flüssigkeit (IL) zu Metall anbelangt, so sind die entsprechenden Obergrenzen auch im Hinblick auf das Löslichkeitsverhalten des Metalls bzw. der Metallverbindung entsprechend auszuwählen bzw. einzustellen, insbesondere insofern, als in der resultierenden Lösung bzw. Schmelze zumindest im Wesentlichen keine Festkörper bzw. Kristalle bzw. Kristallite des Metalls bzw. der Metallverbindung vorliegen. Dies liegt im üblichen Können des Fachmanns.

Um die Benetzung bzw. Imprägnierung der Aktivkohle mit der Metallkomponente weiterführend zu optimieren, kann es erfindungsgemäß vorgesehen sein, dass das Gemisch, insbesondere die Lösung und/oder Schmelze, der Ionischen Flüssigkeit (IL) und des Metalls, insbesondere der Metallverbindung, bei einer Temperatur T = 20 °C und Atmosphärendruck eine Dichte von 1 g/cm³ bis 2,5 g/cm³, insbesondere 1,2 g/cm³ bis 2 g/cm³, vorzugsweise 1,3 g/cm³ bis 1,9 g/cm³, aufweist. Die Dichte kann insbesondere mit einem Heliumpyknometer bei einer Temperatur von T = 20 °C und Atmosphärendruck bestimmt werden.

Im Rahmen der vorliegenden Erfindung ist es vorgesehen, dass die Aktivkohle mit der metallhaltigen Ionischen Flüssigkeit (IL) zumindest teilweise in Kontakt gebracht ist. Gleichermaßen kann es erfindungsgemäß vorgesehen sein, dass die Oberfläche der Aktivkohle und/oder das Porensystem der Aktivkohle, insbesondere die Mikroporen, Mesoporen und/oder Makroporen, vorzugsweise die Oberfläche der Aktivkohle und das Porensystem der Aktivkohle, zumindest teilweise bzw. in einem definierten Bedeckungs- bzw. Füllgrad mit der metallhaltigen Ionischen Flüssigkeit (IL) in Kontakt gebracht sind und/oder benetzt und/oder bedeckt, insbesondere imprägniert, sind. Durch die Ausrüstung der Aktivkohle mit der Metallkomponente hinsichtlich sowohl der äußeren als auch der inneren Strukturen wird im Ergebnis eine besonders gute katalytische Aktivität bzw. Reaktivität der im erfindungsgemäßen Filtermaterial eingesetzten Aktivkohle ermöglicht.

In diesem Zusammenhang ist es im Rahmen der vorliegenden Erfindung vorteilhaft, wenn die Aktivkohle die metallhaltige Ionische Flüssigkeit (IL) in Mengen von 2 Vol.-% bis 60 Vol.-%, vorzugsweise 3 Vol.-% bis 50 Vol.-%, bevorzugt 5 Vol.-% bis 40 Vol.-%, bezogen auf das Volumen der Aktivkohle, aufweist. Gleichermaßen kann es erfindungsgemäß vorgesehen sein, dass die Aktivkohle die metallhaltige Ionische Flüssigkeit (IL) in Mengen von mindestens 1 Vol.-%, insbesondere mindestens 2 Vol.-%, vorzugsweise mindestens 3 Vol.-%, bevorzugt mindestens 5 Vol.-%, bezogen auf das Volumen der Aktivkohle, aufweist. Neben der zuvor angeführten Untergrenze kommt auch der Obergrenze hinsichtlich der einzusetzenden Mengen an Ionischer Flüssigkeit (IL) eine große Bedeutung zu. So kann es erfindungsgemäß vorgesehen sein, dass die Aktivkohle die metallhaltige Ionische Flüssigkeit (IL) in Mengen von höchstens 70 Vol.-%, insbesondere höchstens 60 Vol.-%, vorzugsweise höchstens 50 Vol.-%, bevorzugt höchstens 40 Vol.-%, bezogen auf das Volumen der Aktivkohle, aufweist.

Hinsichtlich der sorptiven Eigenschaften, insbesondere auf Basis der Kombination von Physisorption und Chemisorption, ist auch der Porenfüllgrad α der Aktivkohle mit der metallhaltigen Ionischen Flüssigkeit (IL) von großer Bedeutung. So ist es erfindungsgemäß bevorzugt, dass die Aktivkohle in Bezug auf die metallhaltige Ionische Flüssigkeit (IL) einen Porenfüllgrad α von 0,05 bis 0,8, vorzugsweise von 0,1 bis 0,6, bevorzugt von 0,15 bis 0,5, aufweist. In diesem Zusammenhang sollte die Aktivkohle in Bezug auf die metallhaltige Ionische Flüssigkeit (IL) einen Porenfüllgrad α von höchstens 0,8, vorzugsweise höchstens 0,6, bevorzugt höchstens 0,5, aufweisen. Gleichermaßen sollte die erfindungsgemäß eingesetzte Aktivkohle in Bezug auf die metallhaltige Ionische Flüssigkeit (IL) einen Porenfüllgrad α von mindestens 0,05, vorzugsweise mindestens 0,1, bevorzugt mindestens 0,15, aufweisen.

Der Porenfüllgrad α wird dabei gemäß der Formel [α = V_{IL} / (V_{Pore} · m_{Träger})] berechnet. In der vorgenannten Formel bezeichnet "V_{IL}" das Volumen der einzusetzenden Ionischen Flüssigkeit (IL), "m_{Träger}" die Masse der einzusetzenden Aktivkohle und "V_{Pore}" das spezifische massebezogene Porenvolumen der Aktivkohle. Mit anderen Worten stellt der Porenfüllgrad α ein Maß für das Inkontaktbringen bzw. Benetzen bzw. Bedecken, insbesondere Imprägnieren, der Aktivkohle mit der Metallkomponente auf Basis der metallhaltigen bzw. Metallionen enthaltenden Ionischen Flüssigkeit (IL) dar, wobei die angeführten Werte relativ zum Gesamtporenvolumen zu verstehen sind. Ein Porenfüllgrad α von 0,2 bedeutet somit, dass 20 % des Porenvolumens mit der Metallkomponente befüllt sind, wobei es sich diesbezüglich - ohne sich hierauf beschränken zu wollen - insbesondere um eine Benetzung der Wandung der jeweiligen Poren mit einer entsprechenden Schicht der Metallkomponente mit der Ionischen Flüssigkeit (IL) und dem Metall bzw. den Metallionen handeln kann. Im Allgemeinen liegt dabei die Schichtdicke der Metallkomponente im Bereich weniger nm. Auf Basis der gezielten Einstellung des Porenfüllgrades α wird gewährleistet, dass ein bestimmter Teil des Porensystems frei vorliegt - d. h. nicht mit der Metallkomponente versehen ist - und somit insbesondere physisorptive Eigenschaften aufweist.

Im Rahmen der vorliegenden Erfindung ist der Porenfüllgrad α derart bemessen und/oder ist die Menge an metallhaltiger Ionischer Flüssigkeit (IL) derart ausgelegt, dass 20 % bis 95 %, insbesondere 30 % bis 90 %, vorzugsweise 40 % bis 80 %, des (inneren) Porenvolumens der Aktivkohle nicht mit der metallhaltigen Ionischen Flüssigkeit (IL) gefüllt sind. Mit anderen Worten sollten nach Ausrüstung der Aktivkohle mit der metallhaltigen Ionischen Flüssigkeit (IL) 20 % bis 95 %, insbesondere 30 % bis 90 %, vorzugsweise 40 % bis 80 %, des (inneren) Porenvolumens der Aktivkohle für sorptive, insbesondere physisorptive Prozesse frei zugänglich sein. Auf diese Weise wird gewährleistet, dass neben der Ausrüstung mit der metallhaltigen Ionischen Flüssigkeit (IL) auch noch eine ausreichende Sorptionskapazität durch die Aktivkohle als solche, insbesondere auf Basis einer Physisorption, bereitgestellt wird.

Aufgrund der erfindungsgemäßen Konzeption mit der speziellen Ausrüstung eines Trägersystems mit einer reaktiven bzw. katalytisch aktiven Komponente in Form einer Flüssigkeit kann die im erfindungsgemäßen Filtermaterial eingesetzte Aktivkohle auch als so genanntes SILP-System (*Supported Ionic Liquid Phase*) ausgebildet sein bzw. bezeichnet werden.

Was die im Rahmen der vorliegenden Erfindung zur Ausrüstung mit der Metallkomponente einzusetzende Aktivkohle anbelangt, so kann diesbezüglich eine Vielzahl unterschiedlicher Aktivkohlen, beispielsweise mit unterschiedlicher Porenstruktur im Hinblick auf die Verteilung von Mikro-, Meso- und Makroporen, eingesetzt werden. Insbesondere können kommerziell erhältliche bzw. handelsübliche Aktivkohlen eingesetzt werden. Im Rahmen der vorliegenden Erfindung für die Ausrüstung bzw. Imprägnierung zum Einsatz kommende Aktivkohlen werden beispielsweise von der Blücher GmbH, Erkrath, Deutschland oder der AdsorTech GmbH, Premnitz, Deutschland, vertrieben.

Was die zur Ausrüstung nach Art der Erfindung eingesetzte Aktivkohle weiterhin anbelangt, so kommt zu diesem Zweck insbesondere eine kornförmige, insbesondere kugelförmige Aktivkohle zum Einsatz.

Die für die erfindungsgemäße Imprägnierung eingesetzte Aktivkohle, insbesondere Kornkohle oder Kugelkohle, ist nach bekannten Verfahren des Standes der Technik erhältlich: Üblicherweise werden zu diesem Zweck korn- bzw. kugelförmig sulfonierte organische Polymere, insbesondere auf Basis von divinylbenzolvernetztem Polystyrol, carbonisiert und anschließend zu der betreffenden Aktivkohle aktiviert. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. die parallele, zu derselben Patentfamilie gehörende US 7,737,038 B2 verwiesen werden. Gleichermaßen kann auch Aktivkohle auf Basis anderer Ausgangsmaterialien, wie Pech oder dergleichen, zum Einsatz kommen. Dies ist dem Fachmann als solches bekannt.

Die nachfolgend aufgeführten Parameterangaben bezüglich der eingesetzten Aktivkohle werden mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität, der Porengrößenverteilung und anderer Adsorptionseigenschaften ergeben sich im Allgemeinen jeweils aus den betreffenden Stickstoffsorptionsisothermen der betreffenden Aktivkohle bzw. der vermessenen Produkte.

Im Rahmen der vorliegenden Erfindung wird eine Aktivkohle eingesetzt, welche Partikelgrößen, insbesondere Teilchendurchmesser, im Bereich von 0,01 bis 2 mm, insbesondere 0,01 bis 1 mm, bevorzugt 0,05 bis 0,8 mm, vorzugsweise 0,1 bis 0,7 mm, besonders bevorzugt 0,15 bis 0,6 mm, aufweist. Dabei sollten, bezogen auf die Aktivkohle, mindestens 80 Gew.-%, insbesondere mindestens 90 Gew.-%, vorzugsweise mindestens 95 Gew.-% der eingesetzten Aktivkohle Partikelgrößen, insbesondere Teilchendurchmesser, in den vorgenannten Bereichen aufweisen.

Weiterhin ist es erfindungsgemäß vorteilhaft, wenn die Aktivkohle mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist.

Die entsprechenden Teilchengrößen bzw. -durchmesser werden auf Basis der Methode nach ASTM D2862-97/04 bestimmt. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Die im erfindungsgemäßen Filtermaterial eingesetzte Aktivkohle weist ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, auf. In diesem Zusammenhang ist es erfindungsgemäß vorteilhaft, wenn 50 % bis 99 %, insbesondere 60 % bis 99 %, vorzugsweise 70 % bis 95 %, des Gesamtporenvolumens, insbesondere des Gesamtporenvolumens nach Gurvich, der Aktivkohle durch Poren mit Porendurchmessern von ≤ 50 nm, insbesondere durch Mikround/oder Mesoporen, gebildet sind. Erfindungsgemäß sind 20 % bis 85 %, insbesondere 30 % bis 80 %, vorzugsweise 40 % bis 75 %, des Gesamtporenvolumens, insbesondere des Gesamtporenvolumens nach Gurvich, der Aktivkohle durch Poren mit Porendurchmessern im Bereich von 2 nm bis 50 nm, insbesondere durch Mesoporen, gebildet.

Erfindungsgemäß ergeben sich unter Verwendung von Aktivkohle mit hoher Mikro- und Mesoporosität, insbesondere mit hoher Mesoporosität, besonders gute Ergebnisse hinsichtlich der Sorption von zu sorbierenden Gasen, wie insbesondere Schwefelwasserstoff und Ammoniak.

Was die Bestimmung des Gesamtporenvolumens nach Gurvich anbelangt, so handelt es sich um eine dem Fachmann auf diesem Gebiet an sich bekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie *auf* S. Lowell et al., Characterization of Porous Solids and Powders: Surface Area Pore Size and Density, Kluwer Academic Publishers, Article Technology Series, Seiten 111 ff.

Insbesondere kann es im Rahmen der vorliegenden Erfindung vorgesehen sein, dass die Aktivkohle ein durch Poren mit Porendurchmessern ≤ 2 nm gebildetes Porenvolumen, insbesondere Mikroporenvolumen nach Carbon Black, im Bereich von 0,1 bis 2 cm³/g, insbesondere 0,2 bis 1,5 cm³/g, vorzugsweise 0,3 bis 1,1 cm³/g, besonders bevorzugt 0,4 bis 1 cm³/g, aufweist und/oder dass 20 % bis 95 %, insbesondere 30 % bis 95 %, vorzugsweise 40 % bis 90 %, des Gesamtporenvolumens der Aktivkohle durch Poren mit Porendurchmessern von ≤ 2 nm, insbesondere durch Mikroporen, gebildet sind.

Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Im Rahmen der vorliegenden Erfindung ist es gleichermaßen vorteilhaft, wenn die Aktivkohle einen mittleren Porendurchmesser im Bereich von 1 bis 60 nm, insbesondere 1 bis 55 nm, bevorzugt 1,5 bis 50 nm, besonders bevorzugt 2 bis 45 nm, aufweist. Die Bestimmung des mittleren Porendurchmessers erfolgt auf Basis der jeweiligen Stickstoffsorptionsisothermen.

Um die Sorptionseigenschaften der erfindungsgemäß eingesetzten Aktivkohle zu erhalten, sollte die eingesetzte Aktivkohle eine ausreichend große BET-Oberfläche besitzen. Insbesondere sollte die Aktivkohle eine spezifische BET-Oberfläche im Bereich von 500 m²/g bis 3.500 m²/g, insbesondere 600 bis 3.000 m²/g, vorzugsweise 700 bis 2.750 m²/g, besonders bevorzugt 800 bis 2.500 m²/g, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Alle BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die so genannte MultiPoint-BET-Bestimmungsmethode (MP-BET) in einem Partialdruckbereich p/p₀ von 0,05 bis 0,1 angewendet.

In Bezug auf weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Des Weiteren ist es von Vorteil, wenn die Aktivkohle eine durch Mikroporen gebildete Oberfläche von 400 bis 2.500 m²/g, insbesondere 500 bis 2.300 m²/g, vorzugsweise 600 bis 2.100 m²/g, besonders bevorzugt 700 bis 1.900 m²/g, aufweist.

Die erfindungsgemäß eingesetzte Aktivkohle sollte zudem eine Dichte von 1,1 bis 3,5 g/ml, insbesondere von 1,5 bis 3 g/ml, vorzugsweise von 1,75 bis 2,75 g/ml, bevorzugt von 2 bis 2,5 g/ml, aufweisen.

Gleichermaßen sollte die Aktivkohle eine Schüttdichte von 0,1 bis 1,5 g/ml, insbesondere von 0,15 bis 1 g/ml, vorzugsweise von 0,2 bis 0,8 g/ml, bevorzugt von 0,3 bis 0,6 g/ml, aufweisen.

Zudem ist es von Vorteil, wenn die Aktivkohle eine ausreichende mechanische Belastbarkeit aufweist. Insbesondere weist die Aktivkohle eine Druck- und/oder Berstfestigkeit (Gewichtsbelastbarkeit) pro Aktivkohlekorn, insbesondere pro Aktivkohlekügelchen, von mindestens 10 Newton, insbesondere mindestens 15 Newton, vorzugsweise mindestens 20 Newton, auf. Zudem ist es vorteilhaft, wenn die Aktivkohle eine Druck- und/oder Berstfestigkeit (Gewichtsbelastbarkeit) pro Aktivkohlekorn, insbesondere pro Aktivkohlekügelchen, im Bereich von 10 bis 50 Newton, insbesondere 12 bis 45 Newton, vorzugsweise 15 bis 40 Newton, aufweist.

Gleichermaßen kann es im Rahmen der vorliegenden Erfindung auch vorgesehen sein, dass die Aktivkohle an ihrer Oberfläche modifiziert ist. In diesem Zusammenhang kann die Aktivkohle an ihrer Oberfläche mit hydrophilen Gruppen modifiziert sein. Hierdurch kann die Imprägnierung mit der Metallkomponente weiterführend verbessert werden.

Das erfindungsgemäße Filtermaterial kann grundsätzlich einen variablen Aufbau aufweisen:
Erfindungsgemäß ist die Aktivkohle auf einem Trägermaterial aufgebracht. In diesem Zusammenhang kann das Trägermaterial gasdurchlässig, insbesondere luftdurchlässig ausgebildet sein; was in diesem Zusammenhang das Trägermaterial als solches anbelangt, so sollte dieses eine Gasdurchlässigkeit, insbesondere Luftdurchlässigkeit, von mindestens 101·m⁻²·s⁻¹, insbesondere mindestens 301·m⁻²·s⁻¹, vorzugsweise mindestens 501·m⁻²·s⁻¹, besonders bevorzugt mindestens 100 1·m⁻²·s⁻¹, ganz besonders bevorzugt mindestens 500 1·m⁻²·s⁻¹, und/oder eine Gasdurchlässigkeit, insbesondere Luftdurchlässigkeit, von bis zu 10.000 1·m⁻²·s⁻¹, insbesondere bis zu 20.000 1·m⁻²·s⁻¹, bei einem Strömungswiderstand von 127 Pa aufweisen.

Gemäß einer Ausführungsform der vorliegenden Erfindung kann das erfindungsgemäß eingesetzte Trägermaterial eine dreidimensionale Struktur aufweisen. Insbesondere kann das erfindungsgemäß eingesetzte Trägermaterial bei dieser Ausführungsform als vorzugsweise offenporiger Schaumstoff, besonders bevorzugt Polyurethanschaumstoff, ausgebildet sein.

Gemäß einer alternativen Ausführungsform dagegen kann das erfindungsgemäß eingesetzte Trägermaterial eine zweidimensionale und/oder flächige Struktur aufweisen. Insbesondere kann bei dieser Ausführungsform das erfindungsgemäß eingesetzte Trägermaterial als vorzugsweise textiles Flächengebilde ausgebildet sein. Beispielsweise kann das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet sein.

Gleichermaßen kann das Trägermaterial ein Flächengewicht von 5 bis 1.000 g/m², insbesondere 10 bis 500 g/m², bevorzugt 25 bis 450 g/m², aufweisen. Zudem kann bei dieser Ausführungsform das Trägermaterial ein natürliche Fasern und/oder synthetische Fasern (Chemiefasern) enthaltendes oder hieraus bestehendes textiles Flächengebilde sein. In diesem Zusammenhang können die natürlichen Fasern aus der Gruppe von Wollfasern und Baumwollfasern (CO) ausgewählt sein. Zudem können die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden; Polyvinylalkoholen (PVAL); Polyurethanen; Polyvinylestern; (Meth-)Acrylaten; Polymilchsäuren (PLA); Aktivkohle; sowie deren Mischungen.

Erfindungsgemäß ist die Aktivkohle an bzw. auf dem Trägermaterial fixiert. Dies kann beispielsweise mittels Verklebung (z. B. mittels eines Klebstoffs) oder infolge von Eigenklebrigkeit oder Eigenadhäsion insbesondere des Trägermaterials realisiert werden.

Was das Filtermaterial nach der vorliegenden Erfindung weiterhin anbelangt, so kann das Filtermaterial nach der vorliegenden Erfindung insbesondere als Filtermaterial für Filter zur Entfernung von Schad-, Geruchs- und Giftstoffen aller Art, insbesondere aus Luft- und/oder Gasströmen, insbesondere als Filtermaterial für ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, ausgebildet sein.

Insbesondere kann das erfindungsgemäße Filtermaterial in eine Filtereinheit und/oder Filtrationsvorrichtung eingebracht sein bzw. Bestandteil und/oder Komponente einer Filtereinheit und/oder Filtrationsvorrichtung sein.

Das erfindungsgemäße Filtermaterial ist mit einer Vielzahl von Vorteilen verbunden, wie sie bereits zuvor angeführt sind. Aufgrund der herausragenden Eigenschaften, insbesondere Sorptionseigenschaften, des erfindungsgemäßen Filtermaterials ist ein breites Einsatz- bzw. Verwendungsspektrum möglich, wie es nachfolgend noch im Detail angeführt ist.

Weiterer Gegenstand der vorliegenden Erfindung - gemäß einem **zweiten** Aspekt der vorliegenden Erfindung - ist ein erfindungsgemäßes Verfahren zur Herstellung eines wie zuvor definierten bzw. beschriebenen erfindungsgemäßen Filtermaterials, insbesondere zum Einsatz in oder als Filter zur Gasbehandlung und/oder Gasreinigung, insbesondere für Reinraumbedingungen, unter Verwendung einer Aktivkohle mit reaktiver und/oder katalytischer Aktivität, wobei die Aktivkohle mit mindestens einer Metallkomponente ausgerüstet und/oder ausgestattet wird, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist, und wobei eine Vielzahl von diskreten Aktivkohlepartikeln in Kugel- und/oder Kornform mit der gegebenenfalls verdünnten metallhaltigen Ionischen Flüssigkeit (IL) in Kontakt gebracht, insbesondere benetzt und/oder beschichtet und/oder imprägniert wird, insbesondere wobei nachfolgend gegebenenfalls zur Verdünnung eingesetztes Lösemittel und/oder gegebenenfalls nicht von der Aktivkohle aufgenommene und/oder überschüssige metallhaltige Ionische Flüssigkeit (IL) entfernt und/oder abgetrennt wird;
wobei die Aktivkohle Partikelgrößen im Bereich von 0,01 bis 2 mm aufweist, bestimmt nach der Methode nach ASTM D2862-97/04, und wobei die Aktivkohle ein Gesamtporenvolumen im Bereich von 0,4 bis 4 cm³/g aufweist, wobei 20 % bis 85 % des Gesamtporenvolumens der Aktivkohle durch Poren mit Porendurchmessern im Bereich von 2 nm bis 50 nm gebildet sind;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist;
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α derart bemessen ist, dass 20 % bis 95 % des Porenvolumens der Aktivkohle nicht mit der metallhaltigen Ionischen Flüssigkeit (IL) gefüllt sind, wobei der Porenfüllgrad α gemäß der Formel [α = V_{IL} / (V_{Pore} · m_{Träger})] berechnet ist, wobei in der Formel "V_{IL}" das Volumen der einzusetzenden Ionischen Flüssigkeit, "m_{Träger}" die Masse der einzusetzenden Aktivkohle und "V_{Pore}" das spezifische massebezogene Porenvolumen der Aktivkohle bezeichnen; und
wobei die auf diese Weise erhaltene, mit mindestens einer Metallkomponente ausgerüstete und/oder ausgestattete Aktivkohle nachfolgend auf einem Trägermaterial fixiert wird.

Die auf diese Weise erhaltene, mit mindestens einer Metallkomponente ausgerüstete und/oder ausgestattete Aktivkohle wird dann nachfolgend - in an sich bekannter Weise - zu dem erfindungsgemäßen Filtermaterial weiterverarbeitet (mittels Fixierung auf einem Trägermaterial etc.).

Das erfindungsgemäße Verfahren kann die folgenden Schritte in der nachstehend spezifizierten Abfolge (a) bis (d) umfassen:
(a) Herstellung und/oder Bereitstellung mindestens einer Metallkomponente auf Basis einer metallhaltigen Ionischen Flüssigkeit (IL), insbesondere in Form einer Lösung und/oder Schmelze, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist; wobei das mindestens eine Metall, insbesondere in Form von Metallionen, vorzugsweise auf Basis einer Metallverbindung, mit einer Ionischen Flüssigkeit (IL) in Kontakt gebracht, insbesondere in einer Ionischen Flüssigkeit (IL) gelöst wird;
(b) Inkontaktbringen, insbesondere Benetzen und/oder Beschichten und/oder Imprägnieren, einer Vielzahl von diskreten Aktivkohlepartikeln in Kugel- und/oder Kornform mit der in Schritt (a) erhaltenen Metallkomponente auf Basis der metallhaltigen Ionischen Flüssigkeit (IL);
(c) gegebenenfalls Entfernung und/oder Abtrennung von nicht von der Aktivkohle aufgenommener und/oder überschüssiger metallhaltiger Ionischer Flüssigkeit (IL), d. h. also von nicht von der Aktivkohle aufgenommener bzw. überschüssiger Metallkomponente, gegebenenfalls gefolgt von einer Entfernung und/oder Abtrennung des Verdünnungs- und/oder Lösemittels insbesondere in Schritt (c); und
(d) Fixierung der mit mindestens einer Metallkomponente ausgerüsteten und/oder ausgestatteten Aktivkohle auf einem Trägermaterial.

Die auf diese Weise erhaltene, mit mindestens einer Metallkomponente ausgerüstete und/oder ausgestattete Aktivkohle wird dann nachfolgend - in an sich bekannter Weise - zu dem erfindungsgemäßen Filtermaterial weiterverarbeitet (mittels Fixierung auf einem Trägermaterial etc.). Dies bedeutet mit anderen Worten, dass sich an Verfahrensschritt (b) oder, sofern vorhanden, an Verfahrensschritt (c) die Weiterverarbeitung der mit mindestens einer Metallkomponente ausgerüsteten und/oder ausgestatteten Aktivkohle zu dem erfindungsgemäßen Filtermaterial anschließt.

Auf Basis des erfindungsgemäßen Verfahrens wird eine effektive Benetzung bzw. Beschichtung und/oder Imprägnierung der Aktivkohle erreicht. Durch das Inkontaktbringen der Aktivkohle mit der Metallkomponente, welche die Ionische Flüssigkeit (IL) enthält, wird dabei gewährleistet, dass die Metallkomponente mit der Ionischen Flüssigkeit (IL) gewissermaßen nicht nur die oberflächlichen Strukturen der Aktivkohle benetzt, sondern auch in das innere Porensystem der Aktivkohle eindringt und dort zu einer definierten Beschichtung bzw. Benetzung bzw. Imprägnierung der Oberflächen der porösen Strukturen, insbesondere von Mikro-, Meso- und/oder Makroporen, führt. Aufgrund der speziellen physikochemischen Eigenschaften der Ionischen Flüssigkeit (IL), insbesondere im Hinblick auf den äußerst niedrigen Dampfdruck, verbleibt die Ionische Flüssigkeit (IL) mit dem Metall bzw. den Metallionen dauerhaft, d. h. insbesondere für den Anwendungszeitraum der erfindungsgemäß eingesetzten Aktivkohle, in flüssiger Form an und in dem Aktivkohlesystem, so dass sich gewissermaßen ein dauerhafter katalytisch aktiver bzw. reaktiver Flüssigkeitsfilm auf den äußeren und inneren Oberflächen der Aktivkohle ausbildet, und dies ohne die physisorptiven Eigenschaften der Aktivkohle negativ zu beeinträchtigen.

Im Rahmen des erfindungsgemäßen Verfahrens kann es vorgesehen sein, in Schritt (a) derart zu verfahren, dass die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält. In diesem Zusammenhang ist es erfindungsgemäß von Vorteil, wenn in Schritt (a) das molare Verhältnis von Ionischer Flüssigkeit (IL) zu Metall "[Ionische Flüssigkeit (IL) : Metall]" im Bereich von [10 : 0,1] bis [0,1 : 10], insbesondere im Bereich von [1 : 0,5] bis [1 : 3], vorzugsweise [1 : 0,6] bis [1 : 2], bevorzugt [1 : 1] bis [1 : 1,6], eingestellt wird.

Was Verfahrensschritt (a) weiterhin anbelangt, so kann diesbezüglich unter Inertgasatmosphäre und/oder unter Eintrag von Scherkräften, insbesondere unter Rühren oder dergleichen, verfahren werden. Insbesondere kann Verfahrensschritt (a) bei Raumtemperatur (T = 20 °C) durchgeführt werden.

Gemäß einer erfindungsgemäßen Ausführungsform kann es zudem vorgesehen sein, dass in Schritt (a) und/oder zwischen Schritt (a) und (b) und/oder zwischen Schritt (b) und (c), vorzugsweise zwischen Schritt (a) und (b), gegebenenfalls ein Verdünnen der metallhaltigen, insbesondere Metallionen enthaltenden Ionischen Flüssigkeit (IL), mit einem Verdünnungs- und/oder Lösemittel erfolgt, gegebenenfalls mit einer nachfolgenden Entfernung und/oder Abtrennung des Verdünnungs- und/oder Lösemittels insbesondere in Schritt (c).

Durch die gegebenenfalls vorgesehene Verdünnung kann die Viskosität der Ionischen Flüssigkeit (IL) gezielt eingestellt werden, um auf diese Weise das Eindringen der Ionischen Flüssigkeit (IL) mit dem Metall bzw. den Metallionen und somit der Metallkomponente in die Porenstruktur der Aktivkohle zu erleichtern bzw. zu erhöhen. Gleichermaßen kann durch die gezielte Auswahl des Verdünnungs- bzw. Lösemittels die Polarität der Ionischen Flüssigkeit (IL) bzw. der resultierenden Mischung mit dem Lösemittel eingestellt werden, um auf diese Weise die Benetzung der Oberfläche der Aktivkohle zu steuern bzw. zu verbessern.

In diesem Zusammenhang kann ein polares und/oder hydrophiles anorganisches oder organisches, vorzugsweise organisches Verdünnungs- und/oder Lösemittel eingesetzt werden. Gleichermaßen kann ein Verdünnungs- und/oder Lösemittel mit einem Siedepunkt (bei Atmosphärendruck) von höchstens 250 °C, insbesondere höchstens 200 °C, vorzugsweise höchstens 150 °C, bevorzugt höchstens 100 °C, eingesetzt werden. Weiterhin kann es erfindungsgemäß vorgesehen sein, dass als Verdünnungs- und/oder Lösemittel ein einwertiger Alkohol, insbesondere Methanol, Ethanol, Butanol und/oder Propanol, vorzugsweise Ethanol, eingesetzt wird. Alternativ kann es im Rahmen der erfindungsgemäßen Verfahrensführung jedoch auch vorgesehen sein, dass das Verdünnungs- und/oder Lösemittel ausgewählt wird aus der Gruppe von Wasser, Chlorkohlenwasserstoffen, insbesondere Dichlormethan, Aldehyden, Ketonen, insbesondere Aceton, und deren Mischungen. Erfindungsgemäß ist es gleichermaßen möglich, dass Mischungen der in Rede stehenden Lösemittel eingesetzt werden. Die diesbezügliche Auswahl der Verdünnungsbzw. Lösemittel und das Einstellen der Mischungsverhältnisse liegen im üblichen Können des Fachmanns, so dass es diesbezüglich keiner weiteren Ausführungen bedarf.

Im Rahmen der erfindungsgemäßen Verfahrensführung kann zudem das Verdünnungs- und/oder Lösemittel, bezogen auf 1 Volumenteil Ionische Flüssigkeit (IL), in Mengen von 0,1 Volumenteilen bis 20 Volumenteilen, insbesondere 0,2 Volumenteilen bis 15 Volumenteilen, vorzugsweise 0,3 Volumenteilen bis 10 Volumenteilen, bevorzugt 0,5 Volumenteilen bis 10 Volumenteilen, eingesetzt werden.

Was weiterhin Schritt (b) des erfindungsgemäßen Verfahrens anbelangt, so kann in diesem Schritt eine Suspension der Aktivkohle in der metallhaltigen, insbesondere Metallionen enthaltenden Ionischen Flüssigkeit (IL) hergestellt werden. Gleichermaßen kann in Schritt (b) das Inkontaktbringen, insbesondere Benetzen und/oder Beschichten und/oder Imprägnieren, der Aktivkohle in einer Suspension der Aktivkohle in der Ionischen Flüssigkeit (IL) durchgeführt werden.

Erfindungsgemäß kann zudem in Schritt (b) ein Benetzen und/oder Beschichten und/oder Imprägnieren sowohl der äußeren als auch der inneren Oberflächen, insbesondere der Mikro-, Meso- und/oder Makroporen, der Aktivkohle erfolgen.

Im Rahmen der erfindungsgemäßen Verfahrensführung kann es gleichermaßen vorgesehen sein, dass in Schritt (b) das Volumen der einzusetzenden Ionischen Flüssigkeit (V_{IL}) und/oder die Masse der einzusetzenden Aktivkohle (m_{Träger}) und/oder das spezifische massebezogene Porenvolumen der Aktivkohle (V_{Pore}) in Abhängigkeit von dem einzustellenden Porenfüllgrad α, insbesondere gemäß der Formel [α = V_{IL} / (V_{Pore} · m_{Träger})], ausgewählt und/oder eingestellt wird bzw. werden. In diesem Zusammenhang ist es erfindungsgemäß vorteilhaft, wenn ein Porenfüllgrad α im Bereich von 0,05 bis 0,8, vorzugsweise von 0,1 bis 0,6, bevorzugt von 0,15 bis 0,5, resultiert.

Was Schritt (b) des erfindungsgemäßen Verfahrens weiterhin anbelangt, so ist es erfindungsgemäß vorteilhaft, wenn in Schritt (b) unter Energieeintrag verfahren wird. Diesbezüglich ist es besonders vorteilhaft, wenn der Energieeintrag mittels Ultraschalleintrag oder dergleichen erfolgt. Der Energieeintrag, insbesondere mittels Ultraschall, führt insbesondere zu einem verbesserten Eindringen der Metallkomponente mit der ionischen Flüssigkeit in das innere Porensystem der Aktivkohle, wobei durch die Stärke bzw. Dauer des Energieeintrags gleichermaßen der Benetzungsgrad bzw. das Porenfüllvolumen α eingestellt bzw. gesteuert werden kann. Weiterhin ist es erfindungsgemäß vorteilhaft, wenn der Energieeintrag, insbesondere der Ultraschalleintrag, gepulst erfolgt, beispielsweise in einem Intervall von t = 0,5 s.

Was weiterhin Schritt (c) des erfindungsgemäßen Verfahrens anbelangt, so kann diesbezüglich unter Erwärmen, insbesondere auf Temperaturen im Bereich von 25 °C bis 90 °C, insbesondere im Bereich von 30 °C bis 75 °C, vorzugsweise im Bereich von 35 °C bis 65 °C, verfahren werden. Gleichermaßen kann in Schritt (c) unter verringertem Druck, insbesondere im Vakuum, verfahren werden.

Beispielsweise kann in Schritt (c) bei einem Druck von P im Bereich von 50 bis 300 mbar, insbesondere 100 bis 200 mbar, verfahren werden. Diesbezüglich kann beispielsweise in einem Rotationsverdampfer oder dergleichen verfahren werden. Weiterhin kann in Schritt (c) des erfindungsgemäßen Verfahrens eine Endtrocknung, insbesondere im Hochvakuum, insbesondere für eine Zeitdauer von 5 bis 20 h, vorzugsweise bei Temperaturen im Bereich von T = 40 °C bis 150 °C, insbesondere 45 °C bis 100 °C, erfolgen. Diesbezüglich kann beispielsweise unter Hochvakuumbedingungen im Ölbad verfahren werden.

Auf Basis der zuvor geschilderten Verfahren wird somit ein erfindungsgemäßes Filtermaterial mit den zuvor geschilderten Vorteilen und Eigenschaften erhalten.

Die vorliegende Erfindung betrifft somit auch ein Filtermaterial nach der Erfindung, welches mittels der zuvor beschriebenen Verfahren erhältlich ist.

Wie zuvor angeführt, weist das erfindungsgemäße Filtermaterial ein breites Anwendungsspektrum auf.

Weiterer Gegenstand der vorliegenden Erfindung - gemäß einem **dritten** Aspekt der vorliegenden Erfindung - sind somit die erfindungsgemäßen Verwendungen des Filtermaterials nach der Erfindung.

So kann das erfindungsgemäße Filtermaterial zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz, verwendet werden.

Weiterhin eignet sich das erfindungsgemäße Filtermaterial zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich. Dabei weist das erfindungsgemäße Filtermaterial ausgezeichnete Sorptionseigenschaften auf, insbesondere in Bezug auf schwefelhaltige bzw. stickstoffhaltige Gase, wie Schwefelwasserstoffe, insbesondere Schwefelwasserstoff (H₂S), sowie gegenüber Ammoniak (NH₃). Gleichermaßen weist das erfindungsgemäße Filtermaterial hervorragende Sorptionseigenschaften insbesondere gegenüber Halogengasen bzw. -dämpfen, wie Chlorgas und/oder Ioddämpfen, auf. Auch gegenüber Halogenwasserstoffen, wie Chlorwasserstoff (HCl), weist das erfindungsgemäße Filtermaterial hervorragende Sorptionseigenschaften auf.

Darüber hinaus liegt eine weitere Anwendungsmöglichkeit des erfindungsgemäßen Filtermaterials in der Verwendung für sorptive, insbesondere adsorptive Anwendungen, insbesondere als vorzugsweise reaktives und/oder katalytisches Adsorptionsfiltermaterial.

Darüber hinaus eignet sich das erfindungsgemäße Filtermaterial insbesondere auch zur Verwendung für die Gasreinigung und/oder die Gasaufbereitung.

Eine weitere Verwendung des erfindungsgemäßen Filtermaterials ist im Rahmen der Entfernung von Schadstoffen, insbesondere gasförmigen Schadstoffen oder von umweltschädlichen, gesundheitsschädlichen oder toxischen Substanzen oder Gasen zu sehen.

Schließlich eignet sich das erfindungsgemäße Filtermaterial auch für die Verwendung zur Aufbereitung und/oder Bereitstellung von Reinraumatmosphären, insbesondere für die Elektroindustrie, insbesondere für die Halbleiter- oder Chipherstellung. Diesbezüglich sind auch die hervorragenden Eigenschaften des erfindungsgemäßen Filtermaterials von entscheidender Bedeutung.

Darüber hinaus betrifft die vorliegende Erfindung - gemäß einem **vierten** Aspekt der vorliegenden Erfindung - ein erfindungsgemäßes Verfahren zur Reinigung und/oder Aufbereitung von Gasen, insbesondere zur Entfernung von unerwünschten, insbesondere umweltschädlichen, gesundheitsschädlichen oder toxischen Substanzen oder Gasen aus Gasströmen, wobei der zu reinigende und/oder aufzubereitende Gasstrom mit einem wie zuvor beschriebenen erfindungsgemäßen Filtermaterial in Kontakt gebracht wird.

In diesem Zusammenhang kommt das erfindungsgemäße Verfahren insbesondere zur Aufbereitung und oder Bereitstellung von Reinraumatmosphären, insbesondere für die Elektroindustrie, insbesondere für die Halbleiter- oder Chipherstellung, zum Einsatz.

Im Rahmen der vorliegenden Erfindung ist es im Ergebnis erstmals gelungen, ein leistungsfähiges Filtermaterial mit einer hervorragenden sorptiven Leistungsfähigkeit auf Basis einer gezielten Kombination von chemisorptiven und physisorptiven Eigenschaften bereitzustellen, welche in gezielter Weise mit einer mit einer eine Ionische Flüssigkeit (IL) aufweisenden Metallkomponente ausgerüsteten Aktivkohle ausgestattet ist. Gleichermaßen werden im Rahmen der vorliegenden Erfindung erstmals effiziente Verfahren für die Herstellung solcher Materialien bereitgestellt. Derartige Materialien, welche alle vorgenannten Eigenschaften ineinander vereinigen, sind nach dem Stand der Technik bislang noch nicht hergestellt bzw. beschrieben worden.

Erfindungsgemäß wird ein leistungsfähiges Filtermaterial mit reaktiven und katalytischen Eigenschaften bereitgestellt, welches zudem preiswert in seiner Herstellung ist und ein breitbandiges Adsorptionsspektrum aufweist. Insbesondere kommt ein Einsatz in Einzelfiltern oder Kombinationsfiltern, insbesondere auf Basis von ABEK-Filtern und/oder im Rahmen des ABC-Schutzes in Betracht. Gleichermaßen kann eine Verwendung in Form loser Schüttungen bzw. Mischschüttungen realisiert werden.

Im Rahmen der vorliegenden Erfindung ist es gleichermaßen möglich, dass die im erfindungsgemäßen Filtermaterial eingesetzte Aktivkohle mit der reaktiven bzw. katalytischen Ausrüstung mit mindestens einem weiteren, zusätzlichen Sorptionsmittel bzw. Adsorbens, insbesondere auf Aktivkohlebasis, kombiniert wird, d. h. also die im erfindungsgemäßen Filtermaterial eingesetzte Aktivkohle kann gemeinsam mit einem weiteren Sorptionsmittel bzw. Adsorbens, insbesondere auf Aktivkohlebasis, verwendet werden, beispielsweise im Rahmen der Bereitstellung von Sorptionsfiltermaterialien und dergleichen. So kann beispielsweise die im erfindungsgemäßen Filtermaterial eingesetzte Aktivkohle mit einer so genannten und dem Fachmann wohlbekannten ABEK-Aktivkohle kombiniert werden, insbesondere um auf dieser Basis das Sorptionsspektrum zu ergänzen bzw. zu erweitern.

Die reaktive bzw. katalytische Ausrüstung der Aktivkohle mit metallhaltigen, insbesondere Metallionen enthaltenden Ionischen Flüssigkeiten (IL) ermöglicht einen Abbau bzw. eine Neutralisierung chemischer und/oder biologischer Gifte und/oder Schadstoffe sowie unerwünschter bzw. schädlicher oder toxischer Gase. Darüber hinaus kann hierdurch die Ausrüstung der Aktivkohle derart eingestellt werden, dass die resultierende, im erfindungsgemäßen Filtermaterial eingesetzte Aktivkohle zudem über eine biostatische und/oder biozide Wirkung, insbesondere eine bakteriostatische oder bakterizide und/oder virustatische oder viruzide und/oder eine fungistatische oder fungizide Wirkung, verfügt.

Im Folgenden wird die vorliegende Erfindung anhand von bevorzugte Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:

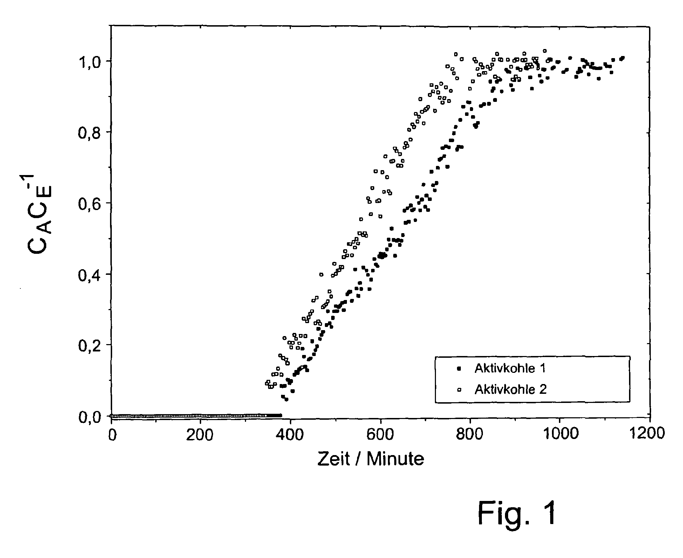

- Fig. 1: eine grafische Darstellung der Durchbruchkurven von Ammoniak (NH₃) auf Basis von Schüttungen einer erfindungsgemäß eingesetzten Aktivkohle (Aktivkohle 1), welche eine Metallkomponente mit einer metallhaltigen Ionischen Flüssigkeit (IL) aufweist, im Vergleich zu einer nichterfindungsgemäßen Aktivkohle (Aktivkohle 1') mit herkömmlicher Metallsalzimprägnierung;

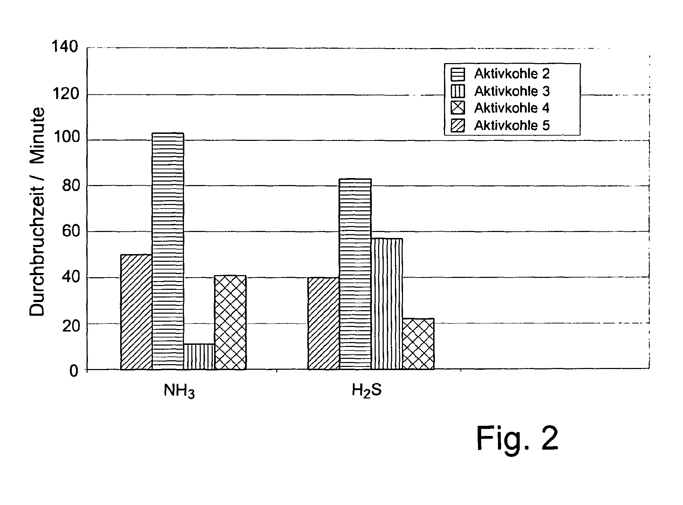

- Fig. 2: grafische Darstellungen mit einem Vergleich der Durchbruchzeiten unter ABEK-Bedingungen für die Gase Ammoniak (NH₃) und Schwefelwasserstoff (H₂S), wobei die erfindungsgemäß eingesetzte Aktivkohle auf Basis einer Metallkomponente mit einer metallhaltigen Ionischen Flüssigkeit (IL) durch die Aktivkohle 2 dargestellt ist; die Aktivkohlen 3 bis 5 stellen nichterfindungsgemäße Aktivkohlen dar;

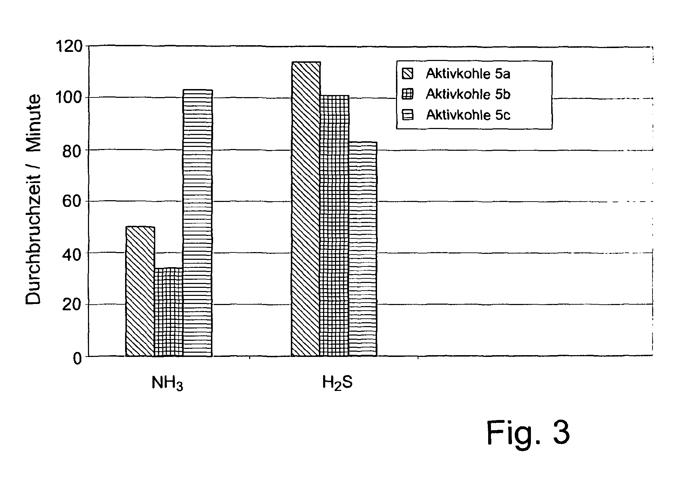

- Fig. 3: grafische Darstellungen mit einem Vergleich der Durchbruchzeiten unter ABEK-Bedingungen für drei erfindungsgemäß eingesetzte Aktivkohlen (Aktivkohlen usa, 5b und 5c) mit unterschiedlicher Zusammensetzung der Metallkomponente unter Verwendung unterschiedlicher Ionischer Flüssigkeiten (IL), Metallsalze und molarer Verhältnisse zwischen ionischer Flüssigkeit (IL) einerseits und Metallsalz andererseits;

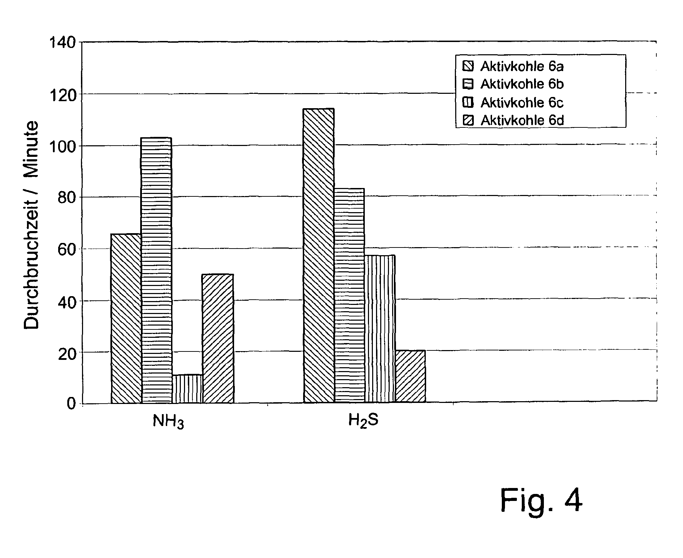

- Fig. 4: grafische Darstellungen und Vergleich der Durchbruchzeiten von erfindungsgemäß eingesetzten Aktivkohlen (Aktivkohle 6a und Aktivkohle 6b) im Vergleich zu nichterfindungsgemäßen Aktivkohlen (Aktivkohle 6c und Aktivkohle 6d).

Fig. 1 zeigt eine schematische Darstellung und einen Vergleich der Durchbruchkurven von Ammoniak (NH₃) einer erfindungsgemäß eingesetzten Aktivkohle (Aktivkohle 1) im Vergleich zu einer nichterfindungsgemäßen Aktivkohle (Aktivkohle 1'). Die in Rede stehenden Aktivkohlen wurden jeweils als Schüttungen eingesetzt. Bei der erfindungsgemäß eingesetzten Aktivkohle wurde eine Metallkomponente eingesetzt, welche als Ionische Flüssigkeit (IL) 1-Ethyl-3-methylimidazoliumchlorid und als Metallverbindung CuCl₂ enthielt. Das molare Verhältnis von Ionischer Flüssigkeit (IL) zur Metallverbindung betrug dabei [1 : 1,3] bei einem Porenfüllgrad α = 0,2. Als Metallkomponente wurde somit in Bezug auf die erfindungsgemäß eingesetzte Aktivkohle [EMIM]Cl-CuCl₂(1 : 1,3) mit α = 0,2 eingesetzt. Als Basisaktivkohle für die Imprägnierung wurde eine handelsübliche, von der Blücher GmbH vertriebene Aktivkohle mit hoher Mikro- und Mesoporosität eingesetzt. Als nichterfindungsgemäße Aktivkohle wurde eine Aktivkohle mit identischer Porosität eingesetzt, welche eine herkömmliche CuCl₂-Salzimprägnierung aufwies. Fig. 1 zeigt dabei die deutlich größeren Durchbruchzeiten, die für NH₃ im Falle der erfindungsgemäß eingesetzten Aktivkohle 1 erhalten werden. Die erfindungsgemäß eingesetzte Aktivkohle zeigt somit eine signifikant verbesserte Leistungsfähigkeit gegenüber Aktivkohlen mit herkömmlicher Imprägnierung auf. Die Durchbruchkurven wurden bei folgenden Parametern bzw. Einstellungen aufgenommen: Gasfeuchte rF = 25 %; Cu-Beladung = 0,001567 mol/g; T_{Adsorber} = 30 °C; p_{Adsorber} = 1,21 bar; h_{Schüttung} = 2 cm; Stickstoff-Volumenstrom = 325,61 ml_{N}/min; NH₃-Volumenstrom = 0,33 ml_{N}/min; NH₃-Detektionsgrenze c = 39 ppmᵥ. Die Ordinate stellt den Quotienten aus Eingangskonzentration und Ausgangskonzentration von Ammoniak dar.

Die Figurendarstellung gemäß Fig. 2 zeigt einen schematischen Vergleich der Durchbruchzeiten der Gase Ammoniak (NH₃) und Schwefelwasserstoff (H₂S) unter ABEK-Bedingungen einer erfindungsgemäß eingesetzten Aktivkohle (Aktivkohle 2) im Vergleich zu nichterfindungsgemäßen Aktivkohlen (Aktivkohlen 3 bis 5). Bei der erfindungsgemäß eingesetzten Aktivkohle handelt es sich um eine von der Blücher GmbH vertriebene Basisaktivkohle mit hoher Mikro- und Mesoporosität, welche mit einer Metallkomponente auf Basis von [EMIM]Cl-CuCl₂ ausgerüstet wurde. Aktivkohle 3 stellt eine Vergleichsaktivkohle mit herkömmlicher Militärimprägnierung, Aktivkohle 4 eine herkömmliche Aktivkohle mit ABEK-Imprägnierung und Aktivkohle 5 eine herkömmliche Aktivkohle mit ABEK-Imprägnierung dar. Das Balkendiagramm veranschaulicht, dass sowohl für Ammoniak (NH₃) als auch für Schwefelwasserstoff (H₂S) in Bezug auf die erfindungsgemäß eingesetzte Aktivkohle deutlich größere Durchbruchzeiten resultieren. Die erfindungsgemäß eingesetzte Aktivkohle verfügt somit über sehr gute Sorptionsleistungen insbesondere in Bezug auf NH₃ und H₂S.

Die entsprechenden Werte wurden bei folgenden Parametern bzw. Einstellungen ermittelt: a) Durchbruchmessungen für NH₃: Gasfeuchte rF = 85 ± 5 %; T_{Adsorber} = 30 °C; h_{Schüttung} = 2 cm; Probenmenge: ca. 2 g; NH₃-Detektionsgrenze c = 39 ppmᵥ; C_{NH3} = 1.000 ppm NH₃ (N₂); b) Durchbruchmessungen für H₂S: Gasfeuchte rF = 70 %; T_{Adsorber} 20 °C; h_{Schüttung} 2 cm; d_{Schüttung} = 50 mm; C_{H2S} = 1.000 ppm H₂S; H₂S-Strömungsgeschwindigkeit = 0,1 m/s; H₂S-Durchbruch = 10 ppm. Die zuvor angeführten Parameter wurden auch in den Ausführungsbeispielen bzw. Versuchen gemäß den Fig. 3 und Fig. 4 eingestellt.

Die Figurendarstellung gemäß Fig. 3 wiederum zeigt einen Vergleich der Durchbruchzeiten von drei verschiedenen erfindungsgemäß eingesetzten Aktivkohlen in Bezug auf die Sorption von Ammoniak (NH₃) und Schwefelwasserstoff (H₂S). Bei der erfindungsgemäß eingesetzten Aktivkohle 5a handelt es sich um eine von der Blücher GmbH vertriebene Basisktivkohle mit hoher Mikro- und Mesoporosität, welche mit einer Metallkomponente auf Basis von 1-Ethyl-3-methylimidazoliumacetat als Ionische Flüssigkeit (IL) und Zinkacetat als Metallverbindung bzw. Metallsalz ausgerüstet wurde. Die vorgenannten Komponenten wurden in einem molaren Verhältnis von [1 : 1] eingesetzt. Der Porenfüllgrad α betrug dabei 0,2 ([EMIM]Ac-ZnAc₂ (1 : 1 molar) mit α = 0,2). Bei der erfindungsgemäß eingesetzten Aktivkohle 5b handelte es sich gleichermaßen um eine von der Blücher GmbH vertriebene Basisaktivkohle mit hoher Mikro- und Mesoporosität, welche als Metallkomponente gleichermaßen 1-Ethyl-3-methylimidazoliumacetat enthielt. Der Porenfüllgrad α betrug gleichermaßen 0,2. Als Metallverbindung bzw. Metallsalz wurde Zinnacetat in einem molaren Verhältnis von [1 : 1] eingesetzt ([EMIM]Ac-SnAc₂ (1 : 1 molar) mit α = 0,2). In Bezug auf Aktivkohle 5 wurde gleichermaßen eine von der Blücher GmbH vertriebene Basisaktivkohle mit hoher Mikro- und Mesoporosität eingesetzt; die Metallkomponente basierte dabei auf 1-Ethyl-3-methylimidazoliumchlorid als Ionischer Flüssigkeit (IL) und Kupferchlorid (CuCl₂) als Metallverbindung bzw. Metallsalz; das molare Verhältnis betrug dabei [1 : 1,3]. Auch in Bezug auf Aktivkohle 5c wurde der Porenfüllgrad α auf 0,2 eingestellt ([EMIM]Cl-CuCl₂ (1 : 1,3) mit α = 0,2). Sämtliche erfindungsgemäß eingesetzte Aktivkohlen zeigen deutlich über die standardisierten Anforderungen hinausgehende Sorptionsleistungen sowohl in Bezug auf Ammoniak (NH₃) als auch in Bezug auf Schwefelwasserstoff (H₂S). In Bezug auf NH₃ werden besonders gute Ergebnisse unter Einsatz von Aktivkohle 5c erreicht, während hinsichtlich der Sorption von H₂S die Aktivkohle 5a die besten Ergebnisse liefert. Insgesamt ist das Sorptionsverhalten sämtlicher erfindungsgemäß eingesetzter Aktivkohlen als hervorragend einzustufen.

Schließlich zeigt die Figurendarstellung gemäß Fig. 4 eine grafische Darstellung mit einem Vergleich der Durchbruchzeiten gegenüber Ammoniak (NH₃) bzw. Schwefelwasserstoff (H₂S) von erfindungsgemäß eingesetzten Aktivkohlen 6a und 6b im Vergleich zu nichterfindungsgemäßen Aktivkohlen 6c und 6d. Bei der erfindungsgemäß eingesetzten Aktivkohle 6a kam in Bezug auf die Metallkomponente als Ionische Flüssigkeit (IL) 1-Ethyl-3-methylimidazoliumacetat und als Metallverbindung bzw. Metallsalz Zinkacetat zur Verwendung ([EMIM]Ac-ZnAc₂). Bei der erfindungsgemäß eingesetzten Aktivkohle 6b wurde hinsichtlich der Metallkomponente als Ionische Flüssigkeit 1-Ethyl-3-methylimidazoliumchlorid und als Metallverbindung bzw. Metallsalz Kupferchlorid (CuCl₂) eingesetzt ([EMIM]Cl-CuCl₂). Bei der nichterfindungsgemäßen Aktivkohle 6c handelte es sich um eine Aktivkohle mit Militärimprägnierung, und bei der nichterfindungsgemäßen Aktivkohle 6d handelte es sich um eine ABEK-Aktivkohle. Fig. 4 veranschaulicht, dass sowohl die erfindungsgemäß eingesetzte Aktivkohle 6a als auch die erfindungsgemäß eingesetzte Aktivkohle 6b gegenüber den Aktivkohlen des Standes der Technik deutlich bessere Sorptionseigenschaften sowohl in Bezug auf Ammoniak (NH₃) als auch in Bezug auf Schwefelwasserstoff (H₂S) aufweisen, was sich in signifikant größeren Durchbruchzeiten äußert.

Die angeführten Untersuchungen belegen im Ergebnis die hervorragenden sorptiven Eigenschaften der erfindungsgemäß eingesetzten Aktivkohle, insbesondere auch im Hinblick auf eine große Bandbreite der zu sorbierenden Substanzen bzw. Schadgase.

Die voranstehend erläuterten Figurendarstellungen werden auch im Rahmen der erfindungsgemäßen Ausführungsbeispiele nochmals weiterführend erläutert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### 1. Herstellung der erfindungsgemäß ausgerüsteten Aktivkohle

### a) Herstellung der Metallkomponente auf Basis einer Ionischen Flüssigkeit (IL) und einer Metallverbindung

### Synthese der Chlorometallat/Ionische Flüssigkeit (IL)-Schmelzen

Sämtliche Synthesen der Metallkomponente (= Chlorometallat/Ionische Flüssigkeit (IL)) erfolgten unter Inertgasatmosphäre.

Für die Herstellung der verwendeten Metallkomponenten, insbesondere auf Basis von Chlorometallat/Ionische Flüssigkeit (IL)-Schmelzen, wurden zunächst die einzuwiegenden Massen der jeweiligen Ionischen Flüssigkeit (IL) und von Kupfer(II)-chlorid (CuCl₂) berechnet.

Dann wurde die entsprechende Menge Ionischer Flüssigkeit (IL) in einen trockenen Schlenkkolben eingebracht.

Die Strukturformeln der in diesem Zusammenhang eingesetzten Ionischen Flüssigkeiten (IL), nämlich 1-Ethyl-3-methylimidazoliumchlorid ([EMIM]Cl), 1-Butyl-3-methylimidazoliumchlorid ([BMIM]Cl) und 1-Octyl-3-methyl-imidazoliumchlorid ([OMIM]Cl), sind in der nachfolgenden Abbildung gezeigt.

Anschließend wurde derjenige molare Anteil von CuCl₂ eingewogen, welcher zur Herstellung des jeweiligen molaren Verhältnisses von Ionischer Flüssigkeit (IL) zu CuCl₂ berechnet wurde.

Die Schmelze wurde dann in einem Schlenkkolben für 24 h unter Inertgasatmosphäre bei T = 100 °C im Ölbad und einer Rührerdrehzahl von 300 min⁻¹ gerührt.

Danach erfolgte die Trocknung unter Hochvakuum über Nacht.

Die nachfolgende Abbildung zeigt die im Rahmen der Ausführungsbeispiele verwendeten Ionischen Flüssigkeiten zur Herstellung der Chlorometallat/Ionische Flüssigkeit (IL)-Schmelzen:

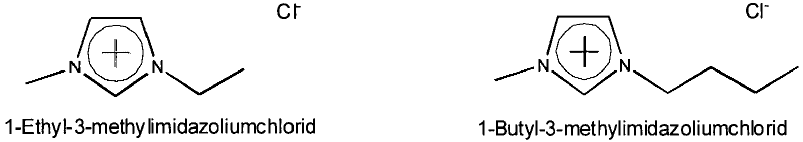

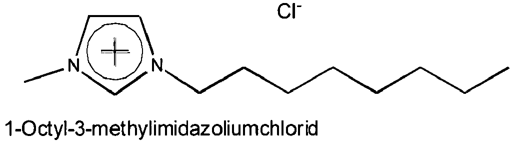

Die nachfolgende Tabelle 1 zeigt die Auflistung der synthetisierten Schmelzen und deren molare Stoffmengenzusammensetzungen.

**Tabelle 1: Synthetisierte Chlorometallat/Ionische Flüssigkeit (IL)-Schmelzen**

| Ionische Flüssigkeit (IL) | molares Verhältnis [Ionische Flüssigkeit (IL) : CuCl₂] |
|---|---|
| [EMIM]Cl | [1:1]; [1:1,3] |
| [BMIM]Cl | [1:1] |
| [OMIM]Cl | [1:1]; [1:1,3]; [1:1,6] |

Zur Berechnung der einzusetzenden Volumina der Ionischen Flüssigkeit (IL) für die anschließende Herstellung der erfindungsgemäß ausgerüsteten Aktivkohle wurden die Dichten der hergestellten Schmelzen in einem Heliumpyknometer (Pycnomatic ATC der Fa. Thermo Scientific) vermessen.

Die Dichten der Schmelzen sind in der nachfolgend angeführten Tabelle 2 aufgelistet.

**Tabelle 2: Ergebnisse der Dichtemessungen im Heliumpyknometer bei T=20 °C**

| Schmelze | Dichte / g cm⁻³ |
|---|---|
| [EMIM]Cl - CuCl₂ [1:1] | 1,8137 |
| [EMIM]Cl - CuCl₂ [1:1,3] | 1,8090 |
| [BMIM]Cl - CuCl₂ [1:1] | 1,5846 |
| [OMIM]Cl - CuCl₂ [1:1] | 1,3050 |
| [OMIM]Cl - CuCl₂ [1:1,3] | 1,5085 |
| [OMIM]Cl - CuCl₂ [1:1,6] | 1,6607 |

### b) Ausrüstung der Aktivkohle mit der Metallkomponente auf Basis einer Ionischen Flüssigkeit (IL) und einer Metallverbindung

### Präparation der erfindungsgemäß ausgerüsteten Aktivkohle / Herstellung unter Ultraschalleintrag:

Als Trägermaterial wurde für die Herstellung der erfindungsgemäß eingesetzten Aktivkohle eine mikro-/mesoporöse Aktivkohle oder eine mesoporöse Aktivkohle verwendet. Die erfindungsgemäß eingesetzten Basisaktivkohlen sind unter der Artikelbezeichnung 101408 (mikro-/mesoporöse Aktivkohle) bzw. 101412 (mesoporöse Aktivkohle) von der Fa. Blücher GmbH, Erkrath (Deutschland) erhältlich.

Die Imprägnierung der Aktivkohleadsorbentien mit den Chlorometallat/Ionische Flüssigkeit (IL)-Schmelzen erfolgte unter Ultraschalleintrag. Durch den instationären bzw. diskontinuierlichen Energieeintrag der Ultraschallsonotrode konnte eine verbesserte Verteilung der Metallkomponente in die feinen Porenstrukturen des Aktivkohleträgers gewährleistet werden.

Zur Herstellung der erfindungsgemäß eingesetzten Aktivkohle wurde dabei zunächst die entsprechende Menge an Metallkomponente berechnet, die zur Einstellung eines bestimmten Porenfüllgrades α auf einer definierten Menge des Aktivkohleadsorbens erforderlich ist. Der Porenfüllgrad α wurde dabei gemäß der Formel [α = V_{IL} / (V_{Pore} · m_{Träger})] berechnet. In der vorgenannten Formel bezeichnet "V_{IL}" das Volumen der eingesetzten Ionischen Flüssigkeit (IL), "m_{Träger}" die Masse der einzusetzenden Aktivkohle und "V_{Pore}" das spezifische massebezogene Porenvolumen der Aktivkohle.

Die jeweilige Metallkomponente auf Basis der Chlorometallat/Ionische Flüssigkeit (IL)-Schmelze wurde zunächst in einen trockenen Schlenkkolben eingewogen und in Ethanol (absolut) gelöst bzw. verdünnt. Der Lösungsvorgang erfolgte durch Rühren auf einem Magnetrührer bei einer Rührgeschwindigkeit von v_{Rührer} = 200 min⁻¹ unter Inertgasatmosphäre. Die Dauer dieses Vorgangs lag zwischen t = 10 min und mehreren Stunden und war abhängig von der zu lösenden Metallkomponente. Daraufhin wurde die zuvor berechnete Menge an Aktivkohleadsorbens in die Lösung gegeben. Das Gemisch wurde weitere 15 Minuten gerührt und anschließend für 2 h in ein Wasserbad mit eingetauchter Ultraschallsonotrode eingesetzt.

In diesem Zusammenhang wurde zur ultraschallunterstützten Herstellung der erfindungsgemäß ausgerüsteten Aktivkohle eine Apparatur eingesetzt, welche ein Wasserbad, einen Syntheseschlenkkolben und eine Ultraschallsonotrode (UP200S (200 W, 24 kHz) der Fa. Hielscher) aufwies. In das Wasserbad wurden der mit dem Syntheseansatz befüllte Schlenkkolben und die Ultraschallsonotrode eingetaucht. Von der Ultraschallsonotrode wurden in einem Intervall von t = 0,5 s Ultraschallstöße mit einer Einstellung von 50 % Amplitude ausgesendet.

Nach der Imprägnierung des Aktivkohleträgers erfolgte die Abtrennung des Lösungsmittels Ethanol in einem Rotationsverdampfer bei T = 40 °C und p = 175 mbar, und die anschließende Endtrocknung erfolgte unter Hochvakuum im Ölbad bei T = 60 °C über Nacht.

### 2. Herstellung nichterfindungsgemäßer Aktivkohle auf Basis einer herkömmlichen CuCl₂-Salzausrüstung

Neben den erfindungsgemäß ausgerüsteten Aktivkohlen wurden auch Imprägnierungen der Aktivkohleträger mit reinem CuCl₂-Salz hergestellt. Die Präparation wurde analog zu der soeben beschriebenen Herstellung der erfindungsgemäß eingesetzten Aktivkohle durchgeführt. Der einzuwiegende Anteil von CuCl₂ wurde auf den äquivalenten Kupfer-Metallanteil des hierzu herangezogenen Systems AK (mikro/meso) + [EMIM]Cl-CuCl₂ (1:1,3) α = 0,2 pro Gramm AK bezogen (AK = Aktivkohle) (entsprechend 0,001567 mol g⁻¹ Cu auf Aktivkohleträger).

In den nachfolgend angeführten Tabellen 8 und 9 sind sämtliche mit Ultraschallunterstützung hergestellten Aktivkohlen, wie sie erfindungsgemäß eingesetzt werden, und CuCl₂-imprägnierten Aktivkohleadsorbentien (Vergleich) zusammengefasst.

### 3. Anlagenaufbau und Messung von Durchbruchkurven in der Ablage zur kontinuierlichen Adsorption von Schadgasen

Zunächst wurden die Durchbruchkurven von Ammoniak mit erfindungsgemäß eingesetzten Aktivkohlesystemen in einer Anlage zur kontinuierlichen Ammoniakadsorption mit variabel befeuchtbarem Trägergasstrom vermessen. Die eingestellten Betriebsparameter der Anlage geben möglichst realitätsnah die Umgebungsbedingungen für einen möglichen Einsatz der erfindungsgemäß ausgerüsteten Aktivkohle in Atemschutzmasken wieder.

Die Betriebsparameter sowie der Anlagenaufbau und die Versuchsdurchführung für die kontinuierliche Gasadsorption werden im Folgenden näher betrachtet:

### a) Aufbau der Anlage zur kontinuierlichen Ammoniakadsorption

Die Anlage zur kontinuierlichen Ammoniakadsorption mit einem variabel befeuchtbaren Gasstrom, insbesondere der Anlagenaufbau für die irreversible Ammoniakadsorption aus einem variabel befeuchtbaren Stickstoffstrom, wies Massendurchflussmesser bzw. Massendurchflusskontrolleinrichtungen (*Mass Flow Controller* bzw. MFC) jeweils (1) für NH₃ und (2) für N₂; (3) eine Gassättigungseinheit; (4) ein Thermostat; (5) eine Feuchtemesseinheit (rHI-TI-1 bzw. HND-FF31 der Fa. Huber); (6) einen Bypass und (7) Adsorber auf.

Mittels der *Mass Flow Controller* (MFCs) (1) und (2) konnte eine definierte Konzentration von 1000 ppm_{V} Ammoniak (NH₃) in einem Stickstoffträgergasstrom eingestellt werden. Das Gasgemisch wurde durch variable Ventilstellungen wahlweise trocken oder befeuchtet durch die Anlage geleitet. Zur Befeuchtung des Gasgemisches wurde der Stickstoffstrom in die Sättigungseinheit (3) geleitet. Der Gassättiger beruht auf dem Prinzip einer herkömmlichen Gaswaschflasche, ist jedoch doppelwandig ausgeführt. Dies ermöglicht die Temperierung der inneren Wassersäule, durch die der Stickstoff strömt, mittels eines Thermostat- bzw. Kryostatkreislaufs. Zur Einstellung geringer Gasfeuchten wurden niedrige Wassertemperaturen benötigt. Diese wurden durch den Einsatz eines Thermo-/Kryostaten (Ecoline Staredition RE 106 der Fa. Lauda) erreicht. Je nach eingestellter Temperatur wird ein gewisser Anteil des bidestillierten Wassers in die Gasphase überführt und vom Stickstoffstrom mitgeführt. Auf diese Weise erfolgte die Einstellung der gewünschten relativen Feuchte des Gasstroms, die in einem Reservoir (5) mit dem Feuchtigkeitssensor bzw. der Feuchtemesseinheit detektiert wurde. Nach der Zumischung des Ammoniaks konnte das Gasgemisch variabel durch die Bypassschaltung (6) am Adsorber (7) vorbeigeführt oder bei Versuchsbeginn durch den Adsorber (7) geleitet werden. Daraufhin wurde der Gasstrom in die nachgeschaltete Analytik geleitet. Diese ist im Abschnitt Analytik näher beschrieben.

Die eingestellten Betriebsparameter für die kontinuierliche Gasadsorption blieben zur Simulierung der Umgebungsbedingungen in Atemschutzmasken stets gleich. Zur besseren Übersicht sind diese in der nachfolgenden Tabelle 3 aufgelistet.

**Tabelle 3: Betriebsparameter der Anlage zur kontinuierlichen Gasadsorption von Ammoniak**

| | |
|---|---|
| Volumenstrom N₂ / ml_{N} min⁻¹ | 325,61 |
| Volumenstrom NH₃ / ml_{N} min⁻¹ | 0,33 |
| Anströmgeschwindigkeit Schüttung / cm s⁻¹ | 2 |
| Schütthöhe / cm | 2 |
| Durchmesser Schüttung / cm | 1,8 |
| Anlagendruck / bar | 1,21 |

Die Temperatur bei der Versuchsdurchführung betrug im Allgemeinen 30 °C, wobei zu der Durchführung der Reversibilitätsversuche eine Erhöhung auf T = 85 °C erfolgte.

Im Zuge der Optimierung der erfindungsgemäß ausgerüsteten Aktivkohle insbesondere für die Ammoniakadsorption wurde die relative Gasfeuchte von rF = 0 % bis rF = 85 % variiert. Die Berechnung der relativen Feuchten bei Adsorberbedingungen (p = 1,21 bar; T = 30 °C) wurden mittels der Clausius-Clapeyron-Gleichung durchgeführt. Die Temperatur im Inneren des Sättigers wurde mittels Temperatursensor gemessen.

Die eingestellten Temperaturen am Thermo-/Kryostaten, die für die Einstellung der relativen Gasfeuchte benötigt wurden, sind in der sich anschließenden Tabelle 4 dargestellt.

**Tabelle 4: Einstellung der Temperatur am Thermostat / Kryostat bezüglich der Variation der relativen Feuchte**

| Temperatur Thermostat / Kryostat /°C | Relative Feuchte / % |
|---|---|
| 13,0 | 25 |
| 21,9 | 50 |
| 27,5 | 70 |
| 33,0 | 85 |

### b) Versuchsdurchführung zur Messung der kontinuierlichen Ammoniakadsorption

Zunächst wurde die Anlage über den Bypass mit trockenem N₂-Gasstrom gespült. Währenddessen erfolgte die Befüllung des Adsorbers mit der zu vermessenden Schüttung der Aktivkohle. Damit die Adsorberschicht als Packung vorliegt, wurde die Schüttung der Aktivkohle zwischen zwei dünnen Glaswolleschichten auf die Metallfritte im Reaktor aufgebracht. Daraufhin wurde die Schüttung durch Einstellung von an vorgegebenen Positionen der eingesetzten Apparatur befindlichen Ventilen mit dem trockenen Stickstoffstrom gespült, bis keine Lösungsmittelreste mehr detektierbar waren.

Danach erfolgte die erneute Umschaltung der Ventile auf Bypassstellung zur Einstellung stationärer Versuchsbedingungen. Dabei wurde bei feuchter Vermessung das Trägergas Stickstoff mit einem Volumenstrom von 325,61 ml_{N} min⁻¹ durch die Sättigereinheit geleitet und, wie bereits beschrieben, befeuchtet. Weiterhin wurde der MFC zur Dosierung von NH₃ auf einen Volumenstrom von 0,33 ml_{N} min⁻¹ eingestellt. Nach der Vermischung beider Gaskomponenten betrug die Ammoniakkonzentration in der Bypassströmung 1000 ppm_{V}.

Sobald die stationären Betriebsbedingungen eingestellt waren, wurde das Gasgemisch durch Umstellen der Ventile mit einer Anströmgeschwindigkeit der Schüttung von v = 2 cm s⁻¹ durch den Adsorber geleitet. Nach der Detektion der Durchbruchkurve wurde der Ammoniakgasstrom abgeschaltet. Zudem wurde die Schüttung der Aktivkohle mit einem trockenen Stickstoffstrom gespült. Nach der Spülung des Adsorbers wurde wieder auf Bypass geschaltet und dieser mit trockenem Stickstoff gespült. Anschließend konnte der Adsorber entleert und neu befüllt werden.

### c) Reversibilitätsversuche

Bei der Durchführung von Reversibilitätsversuchen wurde nach Erreichen der Sättigungskonzentration die Ammoniakzufuhr beendet und die Adsorbertemperatur erhöht. Zur Überprüfung der reversiblen Ammoniakadsorption in der Schüttung wurde der Adsorber auf einen Istwert von etwa T_{Adsorber} = 85 °C aufgeheizt. Der Reversibilitätsversuch endete, sobald im aus der Schüttung strömenden Gasstrom kein Ammoniak mehr detektierbar war. Die weiteren Schritte zur Spülung des Reaktors und des Bypasses erfolgten wie bereits beschrieben.

### Analytik

### Dichtemessungen:

Die Dichtemessungen der Metallkomponente (metallhaltige Ionische Flüssigkeit (IL)) bei T = 20 °C wurden unter Heliumatmosphäre im Pyknometer Pycnomatic ATC der Fa. Thermo Scientific durchgeführt.

### Ammoniakdetektion:

Zur Ermittlung der Durchbruchkurven von Ammoniak wurde die kontinuierliche Messung der aus dem Adsorber austretenden Gaskomponenten mit einem Gaschromatographen (CP-3800 der Fa. Varian) vorgenommen. Die Trennung der Gaskomponenten erfolgte in einer Kapillarsäule (Typ WCOT Fused silica (60 m x 0,32mm) CP-Volamine der Fa. Varian). Die Nachweisgrenze der Ammoniakkonzentration betrug 39 ppm_{V}.

### Thermogravimetrische Analysen:

Die thermogravimetrischen Messungen wurden mit dem Gerät Setsys-1750 CS Evolution der Fa. Setaram Instrumentation KEP Technologies durchgeführt. Die Proben wurden über den Temperaturbereich von T = 30 °C bis T = 950 °C aufgeheizt. Weiterhin wurden Langzeitversuche mit Aktivkohlen für t = 10 h bei T = 100 °C beziehungsweise 200 °C durchgeführt. Die Zersetzungstemperaturen der eingesetzten Metallkomponenten lagen dabei bei über 200 °C. Auch zeigten sie sehr hohe thermische Langzeitstabilitäten bei den vermessenen Temperaturen.

### Sorptionsmessungen:

Die Bestimmung der BET-Oberflächen und Porenvolumina der Aktivkohlen wurde in der Anlage Quadrasorb SI *(Automated Surface Area* & *Pore Size Analyzer*) der Fa. Quantachrome Instruments realisiert.

### Spezifikationen der verwendeten Aktivkohleadsorbentien, Chemikalien und Geräte:

**Tabelle 5: Spezifikationen der verwendeten Aktivkohleadsorbentien der Fa. Blücher**

| Messgröße | meso | meso / mikro |
|---|---|---|
| ρ / g ml⁻¹ | 2,30797 | 2,22126 |
| ρ_{Schüttung} / g ml⁻¹ | 0,411 | 0,412 |
| S_{BET} / m² g⁻¹ | 1698,51 | 2004,96 |
| V_{P} / cm³ g⁻¹ | 1,1429 | 1,071 |
| Sₘᵢₖᵣₒ / m² g⁻¹ | 1508 | 1757 |
| V_{P, mikro} / cm³ g⁻¹ | 0,6816 | 0,7702 |
| Dd_{P} / Å | 27,5 | 24,7 |

**Tabelle 6: Spezifikationen der verwendeten Chemikalien**

| Bezeichnung | Reinheit | Hersteller | Artikelnummer |
|---|---|---|---|
| Ammoniak | 3.8 | Linde | - |
| [BMIM]Cl | >98 % | Aldrich - Chemistry | 94128 |
| [EMIM]Cl | zur Synthese | Merck | 4.90054.0100 |
| [OMIM]Cl | zur Synthese | Merck | 4.90056.1000 |
| Ethanol absolut | > 99,9 % | Sigma - Aldrich | 34963 |
| Kupfer(II)-chlorid | >98 % | Merck | 8.18247.0500 |

**Tabelle 7: Spezifikationen wichtiger Anlagenkomponenten**

| Bezeichnung | Typ | Hersteller | Spezifikation |
|---|---|---|---|
| MFC - NH₃ | F-200CV-002-RGD-11-E | Bronckhorst | 0,02-1 ml_{N} min⁻¹ |
| MFC - N₂ | F-201CV-500RGD-33-V | Bronckhorst | 8-400 ml_{N} min⁻¹ |
| GC-Säule NH₃ | WCOT Fused Silica; Coating CP - Volamine | Varian | CP7448 60 m × 0,32 mm |
| Feuchtigkeitssensor | HND-FF31 | Kobold | 0,0 - 100,0 % rF, 40,0 - 100,0 °C |
| Thermo-/Kryostat | Ecoline Staredition RE106 | Lauda | - |

### d) Experimentelle Ergebnisse / Durchbruchkurven

**1.** Zunächst wurden Durchbruchkurven von NH₃ in Schüttungen erfindungsgemäß ausgerüsteter Aktivkohle ([EMIM]Cl-CuCl₂ (1:1,3) α = 0,2 auf Aktivkohleadsorbentien (mikro/meso) bei variierender relativer Gasfeuchte aufgenommen (mit T_{Adsorber} = 30 °C, p_{Adsorber} = 1,21 bar, h_{Schüttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}).
   Die Variation der relativen Gasfeuchte für das Aktivkohlesystem mit [EMIM]Cl-CuCl₂ (1:1,3) α = 0,2 auf Aktivkohleadsorbentien mit hoher Mikro- und Mesoporosität mit relativen Feuchten von rF = 25 %, 50 % und 70 % zeigte eine signifikante Verbesserung der Durchbruchzeiten. Die gemessenen Durchbruchzeiten liegen rund 30 % über denen mit relativen Gasfeuchten von rF = 0 % und 85 %. Die Durchbruchzeiten in dem Feuchtigkeitsbereich zwischen rF = 25 % bis rF = 70 % sind relativ ähnlich. Da dies die üblichen Luftfeuchten bei dem gängigen Einsatz von Atemschutzmasken sind, kann von einer sehr guten Stabilität der erfindungsgemäß eingesetzten Aktivkohle gesprochen werden.
2. Weiterhin wurden Durchbruchkurven von NH₃ in Schüttungen erfindungsgemäß ausgerüsteter Aktivkohlen ([OMIM]Cl-CuCl₂ (1:1,3) auf unterschiedlich porösen Aktivkohleadsorbentien bei variierenden Porenfüllgraden α ermittelt (mit T_{Adsorber} = 30 °C, p_{Adsorber} = 1,21 bar, rF = 85 %, h_{Schüttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}).
   Den resultierenden Durchbruchkurven konnte entnommen werden, dass für hohe Beladungen mit der Metallkomponente bzw. Porenfüllgrade von α = 0,4 mesoporöse Aktivkohleadsorbentien besser als Trägermaterial geeignet sind als mikro-/mesoporöse Aktivkohleträger. Bei gleichem Porenfüllgrad von α = 0,4 ist für den mesoporösen Aktivkohleträger eine um rund 26 % höhere Durchbruchzeit von rund 370 min feststellbar. Bei niedrigeren Porenfüllgraden von α = 0,2 ist kein gravierender Unterschied bezüglich der Durchbruchzeiten zwischen den in Rede stehenden Typen von Aktivkohleadsorbentien zu erkennen.
3. Darüber hinaus wurden Reversibilitätsversuche mit adsorbierten bzw. desorbierten NH₃-Massenströmen bei der Vermessung des erfindungsgemäß ausgerüsteten Aktivkohlesystems ([EMIM]Cl-CuCl₂ (1:1,3) α = 0,2 auf Aktivkohleadsorbentien (mikro/meso)) durchgeführt (mit folgenden Parametern: 1.) Adsorption: T_{Adsorber} = 30 °C, p_{Adsorber} = 1,21 bar, rF = 50 %, h_{Schüttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}; 2.) Desorption: T_{Adsorber} = 85 °C, p_{Adsorber} = 1,23 bar, rF = 50 %, h_{Schüttung} = 2 cm, Volumenstrom (N₂) = 325,61 ml_{N} min⁻¹, Detektionsgrenze c_{NH3} = 39 ppm_{V}).
   Die Reversibilitätstests wurden zur Überprüfung der irreversiblen Gasadsorption des Ammoniaks in der Schüttung vorgenommen. Dabei wurden die adsorbierte Menge des Ammoniaks in der Schüttung während des Adsorptionsversuchs sowie die desorbierte Menge des Ammoniaks aus der Schüttung während des Reversibilitätsversuchs gegen die Zeit aufgetragen. Durch die Integration der beiden Kurven konnten die während der Adsorption von der Schüttung aufgenommenen, sowie die während des Reversibilitätsversuchs desorbierten Ammoniakmengen berechnet werden.
   Die Gesamtmenge an adsorbiertem NH₃ betrug bei dem erfindungsgemäß ausgerüsteten Aktivkohlesystem ([EMIM]Cl-CuCl₂ (1:1,3) α = 0,2 auf Aktivkohleadsorbentien (mikro/meso)) 225 mg NH₃. Davon desorbierten 128 mg NH₃ während des Reversibilitätsversuchs wieder. Es wurden damit rund 43 % des NH₃-Gases während des Adsorptionsversuches irreversibel in dem Material gebunden, was einen hervorragenden Wert darstellt.
   Die irreversible bzw. chemisorptive Bindung des Ammoniaks erfolgt - ohne sich auf diese Theorie festlegen zu wollen - aufgrund einer Komplexbildungsreaktion. Bei dem entstehenden Komplex handelt es sich um einen Kupfer(II)tetraaminkomplex, der durch die Bindung des Ammoniaks an der in der Metallkomponente enthaltenen Cu-Spezies gebildet wird.
4. Vergleich der erfindungsgemäß ausgerüsteten Aktivkohle mit Aktivkohle auf Basis einer herkömmlichen CuCl₂-Ausrüstung:
   Figur 1 zeigt einen Vergleich der Durchbruchkurven von NH₃ in Schüttungen erfindungsgemäß ausgerüsteter Aktivkohle ([EMIM]Cl-CuCl₂ (1:1,3) α = 0,2 auf Aktivkohleadsorbentien (mikro/meso)) mit herkömmlichen CuCl₂-Salzimprägnierungen auf Aktivkohleadsorbentien (mikro/meso) (mit folgenden Parametern: Gasfeuchte rF = 25 %; Cu-Beladung: 0,001567 mol g⁻¹; T_{Adsorber} = 30 °C, P_{Adsorber} = 1,21 bar, h_{Schüttung} = 2 cm, Volumenstrom (N₂) = 325,61 ml_{N} min⁻¹, Volumenstrom (NH₃) = 0,33 ml_{N} min⁻¹, Detektionsgrenze c_{NH3} = 39 ppm_{V}).

   Der Vergleich der Cu-basierten Aktivkohle auf Basis der erfindungsgemäßen Ausrüstung mit den herkömmlichen Ausrüstungen der Aktivkohleadsorbentien mit reinem CuCl₂-Salz zeigt, wie in Figur 1 dargestellt, bei einer relativen Gasfeuchte von rF = 25 % für das erfindungsgemäß ausgerüstete System eine deutliche Verlängerung der Durchbruchzeiten gegenüber der reinen Metallsalz-Imprägnierung.
   Auch im Rahmen weiterer Messungen bei einer relativen Gasfeuchte von rF = 85 % wurden für die erfindungsgemäß ausgerüsteten Systeme bessere, d. h. größere Durchbruchzeiten ermittelt.
   Die Ergebnisse zeigen insgesamt die erheblich verbesserte Leistungsfähigkeit der erfindungsgemäß ausgerüsteten Aktivkohle gegenüber herkömmlichen Kupfermetallsalzimprägnierungen, und dies unabhängig von der vorherrschenden Luftfeuchtigkeit.

Die zugrunde liegenden Versuche zeigen im Ergebnis und zusammenfassend die hervorragenden adsorptiven Eigenschaften der für das erfindungsgemäße Filtermaterial eingesetzten Aktivkohlen auf Basis der Kombination von Chemisorption und Physisorption, einhergehend mit sehr guten Durchbruchzeiten und verbessertem Desorptionsverhalten.

### 4. Weitere Ausführungen zur Beladung von Kupfer auf Aktivkohleadsorbentien

**Tabelle 8: Hergestellte Aktivkohlesysteme mit erfindungsgemäßer Ausrüstung und herkömmliche CuCl₂-Salzimprägnierung auf mikro-/mesoporösen Aktivkohleadsorbentien mit Ultraschallbehandlung**

| Aktivkohleträger (mikro-/mesoporös) | | |
|---|---|---|
| AK-Imprägnierung | Porenfüllgrad α (ml IL / ml Pore) | n Cu (mol) / m AK (g) |
| [EMIM]Cl-CuCl₂ (1:1) | 0,2 | 0,001382 |
| [EMIM]Cl-CuCl₂ (1:1) | 0,4 | 0,002764 |
| [EMIM]Cl-CuCl₂ (1:1,3) | 0,2 | 0,001567 |
| [EMIM]Cl-CuCl₂ (1:1,3) | 0,4 | 0,003135 |
| [BMIM]Cl-CuCl₂(1:1) | 0,4 | 0,002196 |
| [OMIM]Cl-CuCl₂ (1:1) | 0,4 | 0,001531 |
| [OMIM]Cl-CuCl₂ (1:1,3) | 0,2 | 0,001036 |
| [OMIM]Cl-CuC₁₂ (1:1,3) | 0,4 | 0,002072 |
| [OMIM]Cl-CuCl₂ (1:1,6) | 0,4 | 0,002553 |
| CuCl₂ | - | 0,001567 |

**Tabelle 9: Hergestellte Aktivkohlesysteme mit erfindungsgemäßer Ausrüstung und herkömmliche CuCl₂-Salzimprägnierung auf mesoporösen Aktivkohleadsorbentien mit Ultraschallbehandlung**

| Aktivkohleträger (mesoporös) | | |
|---|---|---|
| AK-Imprägnierung | Porenfüllgrad α (ml IL / ml Pore) | n Cu (mol) / m AK (g) |
| [OMIM]Cl-CuCl₂ (1:1,3) | 0,2 | 0,001103 |
| [OMIM]Cl-CuCl₂ (1:1,3) | 0,4 | 0,002211 |

### 5. Weitere Beispiele zur Beladung von unterschiedlichen Basisträgermaterialien mit metallhaltiger Ionischer Flüssigkeit (IL) und verschiedene Vergleiche

Unterschiedliche poröse partikuläre Trägermaterialien
(1) auf Basis der erfindungsgemäß eingesetzten mikro- und mesoporösen Aktivkohle (Erfindung),
(2) auf Basis von Siliciumdioxid (Vergleich),
(3) auf Basis von Zeolith (Vergleich),
(4) auf Basis von Aluminiumoxid (Vergleich) und
(5) auf Basis von Ionenaustauschern (Vergleich)
wurden jeweils mit metallhaltiger Ionischer Flüssigkeit (IL) vom Typ [EMIM]Cl-CuCl₂ (1:1,3) (siehe oben) jeweils bei gleichem Porenfüllgrad behandelt bzw. imprägniert.

Nachfolgend wurden die auf diese Weise hergestellten Adsorbentien in an sich bekannter Weise an einem gasdurchlässigen dreidimensionalen Träger in Form eines offenporigen retikulierten Polyurethanschaums fixiert. Dieser mit Adsorbentien beladene Träger diente bei den nachfolgenden Durchbruchversuchen als Filtermaterial (jeweils zylindrische Versuchsprobekörper mit Durchmessern von 10 cm und Höhen von 30 cm).

Weitere Vergleichsfiltermaterialien wurden hergestellt mit Adsorbentien
(6) auf Basis einer mikro- und mesoporösen Aktivkohle mit ABEK-Imprägnierung (Vergleich) und
(7) auf Basis einer mikro- und mesoporösen Aktivkohle ohne jedwede Imprägnierung (Vergleich).

Unter den vorgenannten Versuchsbedingungen wurden jeweils Durchbruchzeiten für unterschiedlich Schadstoffgase (NH₃, H₂S und Cl₂) unter den obenstehend beschriebenen Bedingungen bestimmt. Die Werte sind in der nachfolgenden Tabelle 10 wiedergegeben.

**Tabelle 10: Durchbruchzeiten im Vergleich von Filtermaterialien mit verschiedenen Adsorbentien**

| Adsorbens | Mittelwert Durchbruchzeit/ min für NH₃ | Mittelwert Durchbruchzeit/ min für H₂S | Mittelwert Durchbruchzeit/ min für Cl₂ |
|---|---|---|---|
| (1) Aktivkohle, IL-imprägniert (Erfindung) | 522 | 489 | 493 |
| (2) Siliciumdioxid (Vergleich) | 89 | 72 | 55 |
| (3) Zeolith (Vergleich) | 243 | 212 | 198 |
| (4) Aluminiumoxid (Vergleich) | 134 | 121 | 112 |
| (5) Ionenaustauscher (Vergleich) | 232 | 197 | 209 |
| (6) Aktivkohle, ABEK-imprägniert (Vergleich) | 467 | 398 | 389 |
| (7) Aktivkohle, nicht imprägniert (Vergleich) | 228 | 189 | 276 |

Die Ergebnisse zeigen, dass mit den erfindungsgemäß ausgerüsteten Adsorbentien bzw. Filtermaterialien die besten Werte in Bezug auf sämtliche Gase erhalten werden. Die erfindungsgemäß ausgerüsteten Adsorbentien bzw. Filtermaterialien sind trotz identischer Imprägnierung anderen Adsorbentien auf Basis andersartiger Basis- bzw. Trägermaterialien (Siliciumdioxid (2), Zeolith (3), Aluminiumoxid (4) und Ionenaustauscherharz (5)) in der Adsorptionsleistung signifikant überlegen, und dies für unterschiedliche Gase. Die Leistungsfähigkeit der erfindungsgemäß ausgerüsteten Adsorbentien bzw. Filtermaterialien übersteigt sogar das Adsorptionsvermögen von identischer Basisaktivkohle aber mit ABEK-Imprägnierung (6) sowie von identischer Basisaktivkohle ohne jedwede Imprägnierung (7).

### 6. Gasaufbereitung für Reinraumbedingungen

Für die Gasaufbereitung unter Reinraumbedingungen kommen im Stand der Technik oftmals iodidimprägnierte Aktivkohlen zum Einsatz. Eine solche iodidimprägnierte Aktivkohle (nachfolgend: "AK_{Iodid}") wurde im Rahmen des vorliegenden Versuchs gegenüber einer erfindungsgemäß eingesetzten mikro- und mesoporöse Aktivkohle mit Imprägnierung auf Basis einer metallhaltigen Ionischen Flüssigkeit (IL) mit ternärer Metallausrüstung Zn/Sn/Cu vom Typ [EMIM]Ac-ZnAc₂ / [EMIM]Ac-SnAc₂ [EMIM]Cl-CuCl₂ mit "Ac" = Acetat (nachfolgend: "AK_{IL-Zn/Sn/Cu}"). Als weiterer Vergleich diente eine mikro- und mesoporöse Aktivkohle mit herkömmlicher Metallsalzimprägnierung auf Basis einer ternären Metallausrüstung Zn/Sn/Cu vom Typ ZnAc₂ / SnAc₂ / CuCl₂ mit "Ac" = Acetat und somit ohne Ionische Flüssigkeit (IL) (nachfolgend: "AK_{Zn/Sn/Cu}").

Nachfolgend wurden die verschiedenen Adsorbentien in an sich bekannter Weise an einem gasdurchlässigen dreidimensionalen Träger in Form eines offenporigen retikulierten Polyurethanschaums fixiert. Dieser mit Adsorbentien beladene Träger diente bei den nachfolgenden Versuchen als Filtermaterial (jeweils zylindrische Versuchsprobekörper mit Durchmessern von 10 cm und Höhen von 30 cm).

Unter den vorgenannten Versuchsbedingungen wurde jeweils das Adsorptionsverhalten für unterschiedlich Schadstoffgase (SO₂, NOₓ und H₂S, jeweils 1.000 ppm Eingangskonzentration) unter den obenstehend beschriebenen Bedingungen bestimmt.

Bei dem erfindungsgemäßen Filtermaterial "AK_{IL-Zn/Sn/Cu}" konnten die Konzentration aller Schadgase unter die Nachweisgrenze abgesenkt werden. Auch nach 5-stündiger Testdauer trat keine Veränderung dieses Zustands ein. In einem nachfolgenden Desorptionsversuch nach 5-stündiger Betriebsdauer wurde keinerlei Freisetzung von Schadgasen beobachtet.

Bei dem Vergleichsfiltermaterial "AK_{Iodid}" konnten dagegen die Konzentration nur der Schwefel- und Stickoxide unter die Nachweisgrenze abgesenkt werden, während der Schwefelwasserstoff nicht in ausreichendem Maße adsorbiert wurde. Bereits nach 3-stündiger Testdauer konnte die Freisetzung von Iod beobachtet werden. In einem nachfolgenden Desorptionsversuch nach 5-stündiger Betriebsdauer wurden signifikante Mengen der Schadgase sowie Iod freigesetzt.

Bei dem Vergleichsfiltermaterial "AK_{Zn/Sn/Cu}" konnten zunächst die Konzentration aller Schadgase unter die Nachweisgrenze abgesenkt werden; jedoch konnte nach 3,5-stündiger Testdauer zunächst der Schwefelwasserstoffgehalt, dann aber auch der Gehalt an Schwefel- und Stickoxiden nicht mehr unter die Nachweisgrenze abgesenkt werden. In einem nachfolgenden Desorptionsversuch nach 5-stündiger Betriebsdauer wurden geringe, jedoch nachweisbare Mengen der Schadgase freigesetzt.

Die Ergebnisse zeigen, dass mit den erfindungsgemäß ausgerüsteten Adsorbentien bzw. Filtermaterialien die besten Werte in Bezug auf alle Gase erhalten werden; nur hiermit wird eine dauerhafte bzw. irreversible und ausreichende Sorption über die gesamte Versuchsdauer gewährleistet - und dies ohne die Freisetzung von Iod und ohne Desorption der Schadgase.

### 7. Einsatz in Luftfiltern

Eine erfindungsgemäß eingesetzte mikro- und mesoporöse Aktivkohle wurde mit metallhaltiger Ionischer Flüssigkeit (IL) vom Typ [EMIM]Cl-CuCl₂ (1:1,3) (siehe oben) behandelt bzw. imprägniert. Nachfolgend wurden die auf diese Weise ausgerüsteten Adsorbentien in an sich bekannter Weise an einem gasdurchlässigen dreidimensionalen Träger in Form eines offenporigen retikulierten Polyurethanschaums fixiert, welcher dann in eine Luftreinigungsvorrichtung integriert bzw. eingebaut wurde. In entsprechender Weise wurde zur Bereitstellung von Vergleichsmaterialien eine herkömmliche Aktivkohle an einem gasdurchlässigen Träger, wie zuvor beschrieben, fixiert, welcher dann ebenso in einer entsprechenden Luftreinigungsvorrichtung integriert bzw. eingebaut wurde. Die jeweils mit Adsorbentien beladenen Träger dienten also bei den nachfolgenden Versuchen als Filtermaterial.
a) Die Luftreinigungsvorrichtungen wurden jeweils in einen mit polychlorierten Biphenylen (PCB) kontaminierten Raum (PCB-Konzentration: 10.000 ng/m³) eingebracht und in Betrieb gesetzt. Bereits nach 1-stündigem Betrieb konnte bei der Luftreinigungsvorrichtung mit dem erfindungsgemäßen Filtermaterial die PCB-Raumluftkonzentration auf einen Wert von weniger als 300 ng/m³ abgesenkt werden und blieb während der Betriebsdauer bei diesem Wert. Im nachfolgenden Desorptionsversuch wurden keine signifikanten PCB-Mengen festgestellt. Bei der Luftreinigungsvorrichtung mit dem Vergleichsmaterial konnte nach 1-stündigem Betrieb die PCB-Raumluftkonzentration auf einen Wert von etwa 1.200 ng/m³ abgesenkt werden; im nachfolgenden Desorptionsversuch betrug die Reversibilität der Adsorption mehr als 95 % (d. h. mehr als 95 % des zuvor adsorbierten PCB wurde wieder freigesetzt).
b) Zudem wurden die jeweiligen Luftreinigungsvorrichtungen im Rahmen eines H₂S-Durchströmungstests untersucht. Hierzu betrug die Betthöhe des eingesetzten Trägers (offenporiger retikulierter Polyurethanschaum) mit den darauf fixierten Adsorbentien jeweils 40 mm. Die Konzentration von H₂S im Luftstrom betrug 10 ppm, und die Strömungsgeschwindigkeit wurde auf 0,73 m/s eingestellt. Die Effizienz wies über mehr als 1.200 min einen Wert von 80 % auf. Bei dem herkömmlichen Material lag die Effizienz bei weniger als 10 %.

## Patentansprüche

1. Filtermaterial, insbesondere zum Einsatz in oder als Filter zur Gasbehandlung und/oder Gasreinigung, wobei das Filtermaterial mindestens eine Aktivkohle mit reaktiver und/oder katalytischer Ausrüstung umfasst,
- wobei die Aktivkohle in Form von diskreten Aktivkohlepartikeln in Kugel- und/oder Kornform vorliegt und auf einem Trägermaterial aufgebracht ist, wobei die Aktivkohle an und/oder auf dem Trägermaterial fixiert ist,
- wobei die Aktivkohle Partikelgrößen im Bereich von 0,01 bis 2 mm aufweist, bestimmt nach der Methode nach ASTM D2862-97/04,
- wobei die Aktivkohle ein Gesamtporenvolumen im Bereich von 0,4 bis 4 cm³/g aufweist, wobei 20 % bis 85 % des Gesamtporenvolumens der Aktivkohle durch Poren mit Porendurchmessern im Bereich von 2 nm bis 50 nm gebildet sind,
- wobei die Aktivkohle mit mindestens einer Metallkomponente ausgerüstet und/oder ausgestattet ist, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist und wobei die Aktivkohle mit der metallhaltigen Ionischen Flüssigkeit (IL) in Kontakt gebracht ist,
- wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt ist aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist,
- wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α derart bemessen ist, dass 20 % bis 95 % des Porenvolumens der Aktivkohle nicht mit der metallhaltigen Ionischen Flüssigkeit (IL) gefüllt sind, wobei der Porenfüllgrad α gemäß der Formel [α = V_{IL} / (V_{Pore} · m_{Träger})] berechnet ist, wobei in der Formel "V_{IL}" das Volumen der einzusetzenden Ionischen Flüssigkeit, "m_{Träger}" die Masse der einzusetzenden Aktivkohle und "V_{Pore}" das spezifische massebezogene Porenvolumen der Aktivkohle bezeichnen.

2. Filtermaterial nach Anspruch 1, **dadurch gekennzeichnet,**
**dass** die metallhaltige Ionische Flüssigkeit (IL) eine Metallionen, vorzugsweise auf Basis einer Metallverbindung, enthaltende Ionische Flüssigkeit (IL) ist; und/oder
**dass** die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 bezeichnet, und/oder dass die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 3, vorzugsweise 1 oder 2, bevorzugt jeweils 1, bezeichnen; und/oder
**dass** das Kation [Kat]ⁿ⁺ der Ionischen Flüssigkeit (IL) ausgewählt ist aus Imidazoliumkationen; und/oder
**dass** das Kation [Kat]ⁿ⁺ der Ionischen Flüssigkeit (IL) ausgewählt ist aus der Gruppe von
- quarternären Ammoniumkationen der allgemeinen Formel (I):
[NR¹R²R³R]⁺ Formel (I)
- Phosphoniumkationen der allgemeinen Formel (II):
[PR¹R²R³R]⁺ Formel (II)
- Imidazoliumkationen der allgemeinen Formel (III): 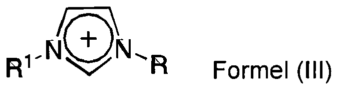 wobei in der Formel (III) der Imidazolkern gegebenenfalls mit mindestens einer Gruppe, ausgewählt aus (C₁-C₈)-Alkylgruppen, (C₁-C₈)-Alkoxygruppen, (C₁-C₈)-Aminoalkylgruppen, (C₅-C₁₂)-Arylgruppen und (C₅-C₁₂)-Aryl-(C₁-C₈)-Alkylgruppen, substituiert ist;
- Pyridiniumkationen der allgemeinen Formel (IV): 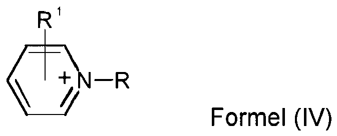 wobei in der Formel (IV) der Pyridinkern gegebenenfalls mit mindestens einer Gruppe, ausgewählt aus (C₁-C₆)-Alkylgruppen,(C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist;
- Pyrazoliumkationen der allgemeinen Formel (V): 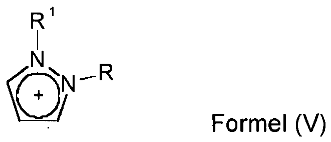 wobei in der Formel (V) der Pyrazolkern gegebenenfalls mit mindestens einer Gruppe, ausgewählt aus (C₁-C₆)-Alkylgruppen, (C₁-C₆)-Alkoxygruppen, (C₁-C₆)-Aminoalkylgruppen, (C₅-C₁₂)-Arylgruppen oder (C₅-C₁₂)-Aryl-(C₁-C₆)-Alkylgruppen, substituiert ist; und
- Triaziniumkationen der allgemeinen Formel (VI): 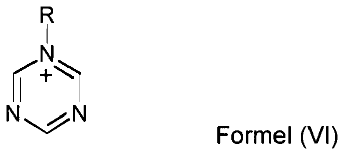 wobei in der Formel (VI) der Triazinkern gegebenenfalls mit mindestens einer Gruppe, ausgewählt aus (C₁-C₆)-Alkylgruppen,(C₁-C₆)-Alkoxygruppen, (C₁-C₆)-Aminoalkylgruppen, (C₅-C₁₂)-Arylgruppen und (C₅-C₁₂)-Aryl-(C₁-C₆)-Alkylgruppen, substituiert ist;
wobei in den Formeln (I) bis (VI), unabhängig voneinander, die Reste R¹, R², R³, unabhängig voneinander, ausgewählt sind aus der Gruppe von
- Wasserstoff;
- linearen oder verzweigten, gesättigten oder ungesättigten, aliphatischen oder alicyclischen (C₁-C₂₀)-Alkylgruppen;
- Heteroarylgruppen oder (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- Arylgruppen oder (C₅-C₁₂)-Aryl-(C₁-C₆)-Alkylgruppen, insbesondere wobei die vorgenannten Gruppen jeweils gegebenenfalls mit mindestens einer (C₁-C₆)-Alkylgruppe und/oder mindestens einem Halogenatom substituiert sind; und
wobei in den Formeln (I) bis (VI), unabhängig voneinander, der Rest R ausgewählt ist aus
- linearen oder verzweigten, gesättigten oder ungesättigten, aliphatischen oder alicyclischen (C₁-C₂₀)-Alkylgruppen;
- (C₃-C₈)-Heteroaryl-(C₁-C₆)-Alkylgruppen, insbesondere mit jeweils mindestens einem Heteroatom, insbesondere ausgewählt aus der Gruppe von N, O und S, insbesondere wobei der Heteroarylrest gegebenenfalls mit mindestens einer Gruppe, insbesondere mindestens einer (C₁-C₆)-Alkylgruppe, und/oder mindestens einem Halogenatom, substituiert ist; und
- (C₅-C₁₂)-Aryl-(C₁-C₆)-Alkylgruppen, insbesondere wobei die vorgenannten Gruppen gegebenenfalls mit wenigstens einer (C₁-C₆)-Alkylgruppe und/oder einem Halogenenatom substituiert sind.

3. Filtermaterial nach Anspruch 1 oder 2, **dadurch gekennzeichnet,**
**dass** das Anion [An]ⁿ⁻ der Ionischen Flüssigkeit (IL) ausgewählt ist aus Anionen der Gruppe von Chlorocuprat ([CuCl₃]⁻), Bromocuprat ([CuBr₃]⁻), Chlorostannat ([SnCl₃]⁻, [Sn₂Cl₅]⁻), Bromostannat ([SnBr₃]⁻), Chlorozinkat ([ZnCl₃]⁻), Bromozinkat ([ZnBr₃]⁻), Chloroferrat ([FeCl₃]⁻), Bromoferrat ([FeBr₃]⁻), Chlorocobaltat ([CoCl₃]⁻), Bromocobaltat ([CoBr₃]⁻), Chloronickelat ([NiCl₃]⁻), Bromonickelat ([NiBr₃]⁻), Tetrafluoroborat ([BF₄]⁻), Tetrachloroborat ([BCl₄]⁻), Hexafluorophosphat ([PF₆]⁻), Hexafluoroantimonat ([SbF₆]⁻), Hexafluoroarsenat ([AsF₆]⁻), Sulfat ([SO₄]²⁻), Carbonat ([CO₃]²⁻), Fluorosulfonat, [R'-COO]⁻, [R'-SO₃]⁻, [R'-SO₄]⁻, [R'₂PO₄]⁻, Tetrakis-(3,5-bis-(trifluormethyl)-phenyl)borat ([BARF]⁻) und Bissulfonylamid [(R'-SO₂)₂N]⁻, wobei R' ein linearer oder verzweigter, 1 bis 12 Kohlenstoffatome enthaltender aliphatischer oder alicyclischer Alkylrest oder ein (C₅-C₁₈)-Arylrest, ein (C₅-C₁₈)-Aryl-(C₁-C₆)-alkylrest oder ein (C₁-C₆)-Alkyl-(C₅-C₁₈)-arylrest ist, wobei der Rest gegebenenfalls mit Halogenatomen und/oder Sauerstoffatomen substituiert ist; und/oder
**dass** das Anion [An]ⁿ⁻ der Ionischen Flüssigkeit (IL) ausgewählt ist aus Anionen der Gruppe von Dicyanamid ([N(CN)₂]⁻), Halogeniden, insbesondere Cl⁻, Br⁻, F⁻, I⁻, Nitrat ([NO₃]⁻), Nitrit ([NO₂]⁻), anionischen Metallkomplexen, insbesondere [CuCl₄]²⁻, [PdCl₄]²⁻ oder [AuCl₄]⁻, Acetat ([CH₃COO]⁻), Trifluoracetat ([F₃CCOO]⁻, Tosylat ([C₇H₇SO₃]⁻), Nonafluorbutansulfonat ([C₄F₉SO₃⁻), Tris(pentafluorethyl)trifluorphosphat ([PF₃(C₂F₅)₃]⁻), Tricyanomethid ([C(CN)₃]⁻), Tetracyanoborat ([B(CN)₄]⁻, Thiocyanat ([SCN]⁻), Carboxylat ([R"-COO]⁻), Sulfonat ([R"-SO₃]⁻), Dialkylphosphat ([R"PO₄R"']⁻) oder Bissulfonylimiden [(R"-SO₂)₂N]⁻), wobei R" und R"', unabhängig voneinander, jeweils ein linearer, verzweigter, aliphatischer oder alicyclischer (C₅-C₁₈)-Alkylrest oder ein (C₅-C₁₈)-Arylrest, (C₅-C₁₈)-Aryl-(C₁-C₆)-alkylrest oder (C₁-C₆)-Alkyl-(C₅-C₁₈)-arylrest ist, insbesondere wobei der Rest gegebenenfalls durch Halogenatome oder Sauerstoffatome substituiert ist; und/oder
**dass** das Anion [An]ⁿ⁻ der Ionischen Flüssigkeit (IL) ein Halogenidanion, insbesondere Cl⁻, Br⁻, F⁻, I⁻, vorzugsweise Cl⁻, ist und/oder dass das Anion [An]ⁿ⁻ der Ionischen Flüssigkeit (IL) ein Carbonsäureanion, insbesondere ein Acetatanion, ist; und/oder
**dass** die Ionische Flüssigkeit (IL) ausgewählt ist aus der Gruppe der Verbindungen der Formeln (VII) bis (IX) 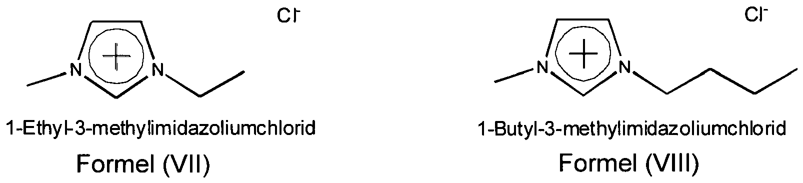 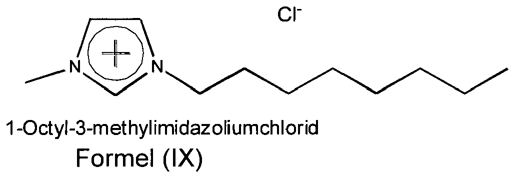 insbesondere wobei die Ionische Flüssigkeit (IL) eine Verbindung der Formel (VII) ist.

4. Filtermaterial nach einem der vorangehenden Ansprüche, **dadurch gekennzeichnet, dass** die Metallkomponente das Metall, insbesondere in Form einer Metallverbindung, in mindestens einer Ionischen Flüssigkeit (IL), insbesondere in der Ionischen Flüssigkeit (IL), gelöst und/oder dissoziiert, aufweist.

5. Filtermaterial nach einem der vorangehenden Ansprüche, **dadurch gekennzeichnet,**
**dass** die Metallkomponente und/oder die Ionische Flüssigkeit (IL) das Metall in einer positiven Oxidationsstufe, insbesondere mindestens ein Metallkation, aufweist, insbesondere wobei die Oxidationsstufe des Metalls im Bereich von +I bis +VII, insbesondere im Bereich von +I bis +IV, vorzugsweise im Bereich von +I bis +III, liegt und besonders bevorzugt +I oder +11 ist; und/oder
**dass** die Metallkomponente und/oder die Ionische Flüssigkeit (IL) mindestens ein Metall, ausgewählt aus der Gruppe von Zn, Ag, Sn, Ni und Cu, aufweist.

6. Filtermaterial nach einem der vorangehenden Ansprüche, **dadurch gekennzeichnet,**
**dass** die Metallkomponente und/oder die Ionische Flüssigkeit (IL) mindestens eine in der Ionischen Flüssigkeit (IL) lösbare oder dissoziierbare Metallverbindung auf Basis des Metalls aufweist und/oder dass die Metallkomponente und/oder die Ionische Flüssigkeit mindestens eine anorganische oder organische Metallverbindung auf Basis des Metalls, insbesondere ein Metallsalz oder Metalloxid, vorzugsweise ein Metallsalz, aufweist; und/oder
**dass** die Metallkomponente und/oder die Ionische Flüssigkeit (IL) ein organisches oder anorganisches Metallsalz auf Basis des Metalls aufweist, wobei das Salz ausgewählt ist aus der Gruppe von Halogenidsalzen, Sulfaten, Sulfiden, Sulfiten, Nitraten, Nitriten, Phosphaten, Phosphiden, Phosphiten, Carbamaten, Alkohalaten und Carbonsäuresalzen, insbesondere Halogenidsalzen und Carbonsäuresalzen; und/oder
**dass** die Metallkomponente und/oder die Ionische Flüssigkeit (IL) ein Metallhalogenid auf Basis des Metalls, insbesondere ein Fluorid, Chlorid, Bromid oder Iodid, vorzugsweise Chlorid, oder ein Carbonsäuresalz des Metalls, insbesondere Acetat, aufweist; und/oder
**dass** die Metallkomponente und/oder die Ionische Flüssigkeit (IL) eine Metallverbindung, ausgewählt aus der Gruppe von Nickelchlorid, Kupferchlorid, Zinkacetat und Zinnacetat, aufweist; und/oder
**dass** die Ionische Flüssigkeit (IL) zusammen mit dem Metall und/oder der Metallverbindung als Schmelze vorliegt und/oder dass das Metall und/oder die Metallverbindung in der Ionischen Flüssigkeit (IL) zumindest im Wesentlichen kristall- und/oder kristallitfrei vorliegt und/oder dass das Metall und/oder die Metallverbindung in der Ionischen Flüssigkeit (IL) zumindest im Wesentlichen gelöst, insbesondere zumindest im Wesentlichen dissoziiert, ist; und/oder
**dass** die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält und/oder dass die Metallkomponente bzw. die metallhaltige Ionische Flüssigkeit (IL) das Metall, insbesondere in Form der Metallverbindung, in einem molaren Massenanteil im Bereich von 1 % bis 90 %, insbesondere im Bereich von 5 % bis 70 %, vorzugsweise im Bereich von 10 % bis 60 %, bevorzugt im Bereich von 10 % bis 55 %, bezogen auf die metallhaltige Ionische Flüssigkeit (IL) und berechnet als Metall, enthält; und/oder
**dass** das molare Verhältnis von Ionischer Flüssigkeit (IL) zu Metall "[Ionische Flüssigkeit (IL) : Metall]" im Bereich von [10 : 0,1] bis [0,1 : 10], insbesondere im Bereich von [1 : 0,5] bis [1 : 3], vorzugsweise im Bereich von [1 : 0,6] bis [1 : 2], bevorzugt im Bereich von [1 : 1] bis [1 : 1,6], liegt; und/oder
**dass** das Gemisch, insbesondere die Lösung und/oder Schmelze, der Ionischen Flüssigkeit (IL) und des Metalls, insbesondere der Metallverbindung, bei einer Temperatur T = 20 °C und Atmosphärendruck eine Dichte von 1 g/cm³ bis 2,5 g/cm³, insbesondere 1,2 g/cm³ bis 2 g/cm³, vorzugsweise 1,3 g/cm³ bis 1,9 g/cm³, aufweist.

7. Filtermaterial nach einem der vorangehenden Ansprüche, **dadurch gekennzeichnet,**
**dass** die Aktivkohle mit der metallhaltigen Ionischen Flüssigkeit (IL) benetzt und/oder bedeckt, insbesondere imprägniert, ist und/oder dass die Oberfläche der Aktivkohle und/oder das Porensystem der Aktivkohle, insbesondere die Mikroporen, Mesoporen und/oder Makroporen, vorzugsweise die Oberfläche der Aktivkohle und das Porensystem der Aktivkohle, zumindest teilweise mit der metallhaltigen Ionischen Flüssigkeit (IL) in Kontakt gebracht sind und/oder benetzt und/oder bedeckt, insbesondere imprägniert, sind; und/oder
**dass** die Aktivkohle die metallhaltige Ionische Flüssigkeit (IL) in Mengen von 2 Vol.-% bis 60 Vol.-%, vorzugsweise 3 Vol.-% bis 50 Vol.-%, bevorzugt 5 Vol.-% bis 40 Vol.-%, bezogen auf das Volumen der Aktivkohle, aufweist und/oder dass die Aktivkohle die metallhaltige Ionische Flüssigkeit (IL) in Mengen von mindestens 1 Vol.-%, insbesondere mindestens 2 Vol.-%, vorzugsweise mindestens 3 Vol.-%, bevorzugt mindestens 5 Vol.-%, bezogen auf das Volumen der Aktivkohle, aufweist und/oder dass die Aktivkohle die metallhaltige Ionische Flüssigkeit (IL) in Mengen von höchstens 70 Vol.-%, insbesondere höchstens 60 Vol.-%, vorzugsweise höchstens 50 Vol.-%, bevorzugt höchstens 40 Vol.-%, bezogen auf das Volumen der Aktivkohle, aufweist; und/oder
**dass** die Aktivkohle in Bezug auf die metallhaltige Ionische Flüssigkeit (IL) einen Porenfüllgrad α von 0,05 bis 0,8, vorzugsweise von 0,1 bis 0,6, bevorzugt von 0,15 bis 0,5, aufweist und/oder dass die Aktivkohle in Bezug auf die metallhaltige Ionische Flüssigkeit (IL) einen Porenfüllgrad α von höchstens 0,8, vorzugsweise höchstens 0,6, bevorzugt höchstens 0,5, aufweist und/oder dass die Aktivkohle in Bezug auf die metallhaltige Ionische Flüssigkeit (IL) einen Porenfüllgrad α von mindestens 0,01, insbesondere mindestens 0,05, vorzugsweise mindestens 0,1, bevorzugt mindestens 0,15, aufweist; und/oder
**dass** der Porenfüllgrad α derart bemessen ist und/oder die Menge an metallhaltiger Ionischer Flüssigkeit (IL) derart ausgelegt ist, dass 30 % bis 90 %, vorzugsweise 40 % bis 80 %, des Porenvolumens der Aktivkohle nicht mit der metallhaltigen Ionischen Flüssigkeit (IL) gefüllt sind; und/oder
**dass** die Aktivkohle Partikelgrößen, insbesondere Teilchendurchmesser, im Bereich von 0,01 bis 1 mm, bevorzugt 0,05 bis 0,8 mm, vorzugsweise 0,1 bis 0,7 mm, besonders bevorzugt 0,15 bis 0,6 mm, aufweist, insbesondere wobei, bezogen auf die Aktivkohle, mindestens 80 Gew.-%, insbesondere mindestens 90 Gew.-%, vorzugsweise mindestens 95 Gew.-%, der eingesetzten Aktivkohle Partikelgrößen, insbesondere Teilchendurchmesser, in den vorgenannten Bereichen aufweisen; und/oder
**dass** die Aktivkohle mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist; und/oder
**dass** die Aktivkohle ein Gesamtporenvolumen, insbesondere ein Gesamtporenvolumen nach Gurvich, im Bereich von 0,5 bis 3,5 cm³/g, vorzugsweise 0,6 bis 3 cm³/g, besonders bevorzugt 0,7 bis 2,5 cm³/g, aufweist, insbesondere wobei 30 % bis 80 %, vorzugsweise 40 % bis 75 %, des Gesamtporenvolumens, insbesondere des Gesamtporenvolumens nach Gurvich, der Aktivkohle, durch Poren mit Porendurchmessern im Bereich von 2 nm bis 50 nm, insbesondere durch Mesoporen, gebildet sind; und/oder
**dass** die Aktivkohle einen mittleren Porendurchmesser im Bereich von 1 bis 60 nm, insbesondere 1 bis 55 nm, bevorzugt 1,5 bis 50 nm, besonders bevorzugt 2 bis 45 nm, aufweist.

8. Filtermaterial nach einem der vorangehenden Ansprüche, **dadurch gekennzeichnet,**
**dass** das Trägermaterial gasdurchlässig, insbesondere luftdurchlässig, ausgebildet ist, insbesondere wobei das Trägermaterial eine Gasdurchlässigkeit, insbesondere Luftdurchlässigkeit, von mindestens 10 l·m⁻²·s⁻¹, insbesondere mindestens 30 l·m⁻²·s⁻¹, vorzugsweise mindestens 50 l·m⁻²·s⁻¹, besonders bevorzugt mindestens 100 l·m⁻²·s⁻¹, ganz besonders bevorzugt mindestens 500 l·m⁻²·s⁻¹, und/oder eine Gasdurchlässigkeit, insbesondere Luftdurchlässigkeit, von bis zu 10.000 l·m⁻²·s⁻¹, insbesondere bis zu 20.000 l.m⁻².s⁻¹, bei einem Strömungswiderstand von 127 Pa aufweist; und/oder
**dass** das Trägermaterial eine dreidimensionale Struktur aufweist, insbesondere wobei das Trägermaterial als vorzugsweise offenporiger Schaumstoff, besonders bevorzugt Polyurethanschaumstoff, ausgebildet ist; oder
**dass** das Trägermaterial eine zweidimensionale und/oder flächige Struktur aufweist, insbesondere wobei das Trägermaterial als vorzugsweise textiles Flächengebilde ausgebildet ist, insbesondere wobei das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet ist und/oder insbesondere wobei das Trägermaterial ein Flächengewicht von 5 bis 1.000 g/m², insbesondere 10 bis 500 g/m², bevorzugt 25 bis 450 g/m², aufweist; und/oder
**dass** die Aktivkohle an und/oder auf dem mittels Verklebung, insbesondere mittels eines Klebstoffs oder infolge von Eigenklebrigkeit oder Eigenadhäsion, fixiert ist.

9. Verfahren zur Herstellung eines wie in einem der vorangehenden Ansprüche definierten Filtermaterials, insbesondere zum Einsatz in oder als Filter zur Gasbehandlung und/oder Gasreinigung, unter Verwendung einer Aktivkohle mit reaktiver und/oder katalytischer Aktivität, wobei die Aktivkohle mit mindestens einer Metallkomponente ausgerüstet und/oder ausgestattet wird, wobei die Metallkomponente mindestens eine metallhaltige Ionische Flüssigkeit (IL) umfasst, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist, und wobei eine Vielzahl von diskreten Aktivkohlepartikeln in Kugel- und/oder Kornform mit der gegebenenfalls verdünnten metallhaltigen Ionischen Flüssigkeit (IL) in Kontakt gebracht, insbesondere benetzt und/oder beschichtet und/oder imprägniert wird, insbesondere wobei nachfolgend gegebenenfalls zur Verdünnung eingesetztes Lösemittel und/oder gegebenenfalls nicht von der Aktivkohle aufgenommene und/oder überschüssige metallhaltige Ionische Flüssigkeit (IL) entfernt und/oder abgetrennt wird;
wobei die Aktivkohle Partikelgrößen im Bereich von 0,01 bis 2 mm aufweist, bestimmt nach der Methode nach ASTM D2862-97/04, und wobei die Aktivkohle ein Gesamtporenvolumen im Bereich von 0,4 bis 4 cm³/g aufweist, wobei 20 % bis 85 % des Gesamtporenvolumens der Aktivkohle durch Poren mit Porendurchmessern im Bereich von 2 nm bis 50 nm gebildet sind;
wobei die Ionische Flüssigkeit (IL) eine Verbindung der allgemeinen Formel [Kat]ⁿ⁺[An]ⁿ⁻ ist, wobei "Kat" ein Kation bezeichnet und "An" ein Anion bezeichnet und "n" eine ganze Zahl gleich 1 oder 2 bezeichnet, und/oder wobei die Ionische Flüssigkeit (IL) eine Verbindung der allgemeinen Formel [Kat₁]ₓ^{y+}[An₁]_{y}^{x-} ist, wobei "Kat₁" ein Kation bezeichnet und "An₁" ein Anion bezeichnet und wobei "x" und "y", unabhängig voneinander, eine ganze Zahl im Bereich von 1 bis 4 bezeichnen, wobei das Kation [Kat]ⁿ⁺ der Ionischen Flüssigkeit (IL) ein Stickstoff enthaltendes Kation ist, wobei das Stickstoff enthaltende Kation ausgewählt wird aus der Gruppe von quarternären Ammoniumkationen, Imidazoliumkationen, Pyridiniumkationen, Pyrazoliumkationen und Triaziniumkationen, oder wobei das Kation [Kat]ⁿ⁺ der Ionischen Flüssigkeit (IL) ein Phosphor enthaltendes Kation in Form eines Phosphoniumkations ist und wobei das Anion [An]ⁿ⁻ der Ionischen Flüssigkeit (IL) ein organisches oder anorganisches Anion ist;
wobei die Aktivkohle die metallhaltige Ionische Flüssigkeit (IL) in Mengen von 1 Vol.-% bis 70 Vol.-%, bezogen auf das Volumen der Aktivkohle, aufweist und/oder wobei die Menge an metallhaltiger Ionischer Flüssigkeit (IL) derart ausgelegt ist und/oder der Porenfüllgrad α derart bemessen ist, dass 20 % bis 95 % des Porenvolumens der Aktivkohle nicht mit der metallhaltigen Ionischen Flüssigkeit (IL) gefüllt sind, wobei der Porenfüllgrad α gemäß der Formel [α = V_{IL} / (V_{Pore} · m_{Träger})] berechnet ist, wobei in der Formel "V_{IL}" das Volumen der einzusetzenden Ionischen Flüssigkeit, "m_{Träger}" die Masse der einzusetzenden Aktivkohle und "V_{Pore}" das spezifische massebezogene Porenvolumen der Aktivkohle bezeichnen; und
wobei die auf diese Weise erhaltene, mit mindestens einer Metallkomponente ausgerüstete und/oder ausgestattete Aktivkohle nachfolgend auf einem Trägermaterial fixiert wird.

10. Verfahren nach Anspruch 9, wobei das Verfahren die folgenden Schritte in der nachstehend spezifizierten Abfolge (a) bis (d) umfasst:
(a) Herstellung und/oder Bereitstellung mindestens einer Metallkomponente auf Basis einer metallhaltigen Ionischen Flüssigkeit (IL), insbesondere in Form einer Lösung und/oder Schmelze, wobei die Metallkomponente mindestens ein Metall, ausgewählt aus der Gruppe von Cu, Ag, Au, Zn, Hg, Sn, Ce, Ti, Zr, V, Nb, Cr, Mo, W, Mn, Fe, Ru, Os, Co, Rh, Ir, Ni, Pd und Pt, aufweist; wobei das mindestens eine Metall, insbesondere in Form von Metallionen, vorzugsweise auf Basis einer Metallverbindung, mit einer Ionischen Flüssigkeit (IL) in Kontakt gebracht, insbesondere in einer Ionischen Flüssigkeit (IL) gelöst wird;
(b) Inkontaktbringen, insbesondere Benetzen und/oder Beschichten und/oder Imprägnieren, einer Vielzahl von diskreten Aktivkohlepartikeln in Kugel- und/oder Kornform mit der in Schritt (a) erhaltenen Metallkomponente auf Basis der metallhaltigen Ionischen Flüssigkeit (IL);
(c) gegebenenfalls Entfernung und/oder Abtrennung von nicht von der Aktivkohle aufgenommener und/oder überschüssiger metallhaltiger Ionischer Flüssigkeit (IL), gegebenenfalls gefolgt von einer Entfernung und/oder Abtrennung des Verdünnungs- und/oder Lösemittels insbesondere in Schritt (c); und
(d) Fixierung der mit mindestens einer Metallkomponente ausgerüsteten und/oder ausgestatteten Aktivkohle auf einem Trägermaterial.

11. Verfahren nach Anspruch 10, **dadurch gekennzeichnet,**
**dass** in Schritt (a) derart verfahren wird, dass die Ionische Flüssigkeit (IL) das Metall, insbesondere die Metallverbindung, in Mengen von 0,001 Gew.-% bis 80 Gew.-%, insbesondere 0,01 Gew.-% bis 60 Gew.-%, vorzugsweise 0,1 Gew.-% bis 50 Gew.-%, bezogen auf die Ionische Flüssigkeit (IL) und berechnet als Metall, enthält und/oder dass in Schritt (a) das molare Verhältnis von Ionischer Flüssigkeit (IL) zu Metall "[Ionische Flüssigkeit (IL) : Metall]" im Bereich von [10 : 0,1] bis [0,1 : 10], insbesondere [1 : 0,5] bis [1 : 3], vorzugsweise [1 : 0,6] bis [1 : 2], bevorzugt [1 : 1] bis [1 : 1,6], eingestellt wird; und/oder
**dass** in Schritt (a) und/oder zwischen Schritt (a) und (b) und/oder zwischen Schritt (b) und (c), vorzugsweise zwischen Schritt (a) und (b), ein Verdünnen der metallhaltigen, insbesondere Metallionen enthaltenden Ionischen Flüssigkeit (IL), mit einem Verdünnungs- und/oder Lösemittel erfolgt, insbesondere wobei ein polares und/oder hydrophiles anorganisches oder organisches, vorzugsweise organisches Verdünnungs- und/oder Lösemittel eingesetzt wird und/oder insbesondere wobei ein Verdünnungs- und/oder Lösemittel mit einem Siedepunkt (bei Atmosphärendruck) von höchstens 250 °C, insbesondere höchstens 200 °C, vorzugsweise höchstens 150 °C, bevorzugt höchstens 100 °C, eingesetzt wird; und/oder
**dass** in Schritt (b) eine Suspension der Aktivkohle in der metallhaltigen, insbesondere Metallionen enthaltenden Ionischen Flüssigkeit (IL) hergestellt wird und/oder dass in Schritt (b) das Inkontaktbringen, insbesondere Benetzen und/oder Beschichten und/oder Imprägnieren, der Aktivkohle in einer Suspension der Aktivkohle in der Ionischen Flüssigkeit (IL) durchgeführt wird; und/oder
**dass** in Schritt (b) ein Benetzen und/oder Beschichten und/oder Imprägnieren sowohl der äußeren als auch der inneren Oberflächen, insbesondere der Mikro-, Meso- und/oder Makroporen, der Aktivkohle erfolgt; und/oder
**dass** in Schritt (b) das Volumen der einzusetzenden Ionischen Flüssigkeit (V_{IL}) und/oder die Masse der einzusetzenden Aktivkohle (m_{Träger}) und/oder das spezifische massebezogene Porenvolumen der Aktivkohle (V_{Pore}) in Abhängigkeit von dem einzustellenden Porenfüllgrad α ausgewählt und/oder eingestellt wird bzw. werden, so dass ein Porenfüllgrad α im Bereich von 0,05 bis 0,8, vorzugsweise von 0,1 bis 0,6, bevorzugt von 0,15 bis 0,5, resultiert; und/oder
**dass** in Schritt (b) unter Energieeintrag verfahren wird, insbesondere mittels Ultraschalleintrag; und/oder
**dass** in Schritt (c) unter Erwärmen, insbesondere auf Temperaturen im Bereich von 25 °C bis 90 °C, insbesondere im Bereich von 30 °C bis 75 °C, vorzugsweise im Bereich von 35 °C bis 65 °C, verfahren wird und/oder dass in Schritt (c) unter verringertem Druck, insbesondere im Vakuum, verfahren wird.

12. Verwendung eines Filtermaterials nach einem der Ansprüche 1 bis 8 zur Herstellung von Schutzmaterialien in Form von Schutzbekleidung, insbesondere für den zivilen oder militärischen Bereich, wie Schutzanzügen, Schutzhandschuhen, Schutzschuhwerk, Schutzsocken, Kopfschutzbekleidung, und von Schutzabdeckungen aller Art, vorzugsweise alle vorgenannten Schutzmaterialien für den ABC-Einsatz.

13. Verwendung eines Filtermaterials nach einem der Ansprüche 1 bis 8
zur Herstellung von Filtern aller Art, insbesondere zur Entfernung von Schad-, Geruchs- und Giftstoffen aller Art, insbesondere aus Luft- und/oder Gasströmen, insbesondere ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich; oder
für die Gasreinigung und/oder die Gasaufbereitung; oder
für die Entfernung von Schadstoffen, insbesondere gasförmigen Schadstoffen, oder von umweltschädlichen, gesundheitsschädlichen oder toxischen Substanzen oder Gasen; oder
zur Aufbereitung und/oder Bereitstellung von Reinraumatmosphären, insbesondere für die Elektroindustrie, insbesondere für die Halbleiter- oder Chipherstellung.

14. Verfahren zur Reinigung und/oder Aufbereitung von Gasen, **dadurch gekennzeichnet, dass** der zu reinigende und/oder aufzubereitende Gasstrom mit einem Filtermaterial nach einem der Ansprüche 1 bis 8 in Kontakt gebracht wird.

## Claims

1. Filter material, especially for use in or as a filter for gas treatment and/or gas purification, wherein the filter material comprises at least an activated carbon with reactive and/or catalytic equipment,
- wherein the activated carbon is in the form of discrete activated carbon particles in spherical and/or granular form which are applied to a support material, wherein the activated carbon is fixed to and/or on the carrier material,
- wherein the activated carbon has particle sizes in the range of 0.01 to 2 mm, determined by the method according to ASTM 02862-97/04
- wherein the activated carbon has a total pore volume in the range from 0.4 to 4 cm³/g, wherein 20% to 85% of the total pore volume of the activated carbon are formed by pores having pore diameters in the range of 2 nm to 50 nm,
- wherein the activated carbon is equipped and/or furnished with at least a metal component, wherein the metal component comprises at least a metal-containing ionic liquid (IL), wherein the metal component is at least a metal selected from the group of Cu, Ag, Au, Zn, Hg, Sn , Ce, Ti, Zr, V, Nb, Cr, Mo, W, Mn, Fe, Ru, Os, Co, Rh, Ir, Ni, Pd and Pt, and wherein the activated carbon is brought into contact with the metal-containing ionic liquid (IL),
- wherein the ionic liquid (IL) is a compound of the general formula [Cat]ⁿ⁺[An]ⁿ⁻ where "Cat" refers to a cation and "An" refers to an anion and "n" denotes an integer equal to 1 or 2 and/or wherein the ionic liquid (IL) is a compound of the general formula [Cat₁]ₓ^{y+}[An₁]_{y}^{x-}, where "Cat₁" refers to a cation and "An₁" refers to an anion, and wherein "x" and "y", independently of one another, refer to an integer in the range of 1 to 4, wherein the cation [Cat]ⁿ⁺ of the ionic liquid (IL) is a nitrogen-containing cation, wherein the nitrogen-containing cation is selected from the group consisting of quaternary ammonium cations, imidazolium, pyridinium, pyrazollium cations and triazinium cations, or wherein the cation [Cat]ⁿ⁺ of the ionic liquid (IL) is a phosphorus-containing cation in the form of a phosphonium, and wherein the anion [An]ⁿ⁻ of the ionic liquid (IL) is an organic or inorganic anion,
- wherein the activated carbon has the metal-containing ionic liquid (IL) in an amount of 1 vol.% to 70 vol.-%, based on the volume of the activated carbon, and/or wherein the amount of metal-containing ionic liquid (IL) is so adapted and/or the pore filling α is so dimensioned that 20% to 95% of the pore volume of the activated carbon is not filled with the metal-containing ionic liquid (IL), wherein the pore filling α is calculated according to the formula [α = V_{IL} / (V_{Pore} · m_{Carrier})], where "V_{IL}" is the volume of the ionic liquid to be used, "m_{Carrier}" is the mass of the activated carbon to be used, and "V_{Pore}" is the mass-based specific pore volume of the activated carbon in the formula.

2. Filter material according to claim 1, **characterised in that**
- the metal-containing ionic liquid (IL) is a metal ion, preferably based on a metal compound, containing ionic liquid (IL); and/or
- the ionic liquid (IL) is a compound of the general formula [Cat]ⁿ⁺[An]ⁿ⁻, where "Cat" refers to a cation, "An" refers to an anion and "n" refers to an integer equal to 1, and/or that the ionic liquid (IL) is a compound of general formula [Cat₁]ₓ^{y+}[An₁]_{y}^{x-}, where "Cat₁" refers to a cation and "An₁" refers to an anion, and wherein "x" and "y", independently of one another, respectively refer to an integer in the range of 1 to 3, preferably 1 or 2, more preferably 1; and/or
- the cation [Cat]ⁿ⁺ of the ionic liquid (IL) is selected from imidazolium; and/or
- the cation [Cat]ⁿ⁺ of the ionic liquid (IL) is selected from the group of
- quaternary ammonium cations of the formula (I):
[NR¹R²R³R]⁺ Formula (I)
- phosphonium cations of the general formula (II):
[PR¹R²R³R]⁺ Formula (II)
- imidazolium of the general formula (III): 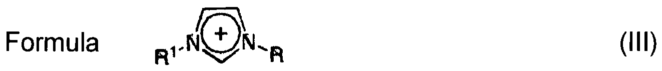 wherein in the formula (III), the imidazole nucleus is optionally substituted by at least a group selected from (C₁-C₈)-alkyl groups, (C₁-C₈)-alkoxy groups, (C₁-C₈)-aminoalkyl groups, (C₅-C₁₂)-aryl groups and (C₅-C₁₂)-aryl-(C₁-C₈)-alkyl groups;
- pyridinium cations of the general formula (IV): 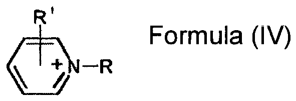 wherein in the formula (IV), the pyridine nucleus is optionally substituted by at least a group selected from (C₁-C₆)-alkyl groups, (C₁-C₆)-alkoxy groups, (C₁-C₆)-aminoalkyl groups, (C₅-C₁₂)-aryl groups or (C₅-C₁₂)-aryl-(C₁-C₆)alkyl groups;
- pyrazollium cations of the general formula (V): 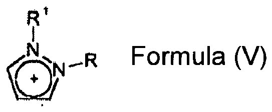 wherein in the formula (V), the pyrazole nucleus is optionally substituted by at least a group selected from (C₁-C₆)-alkyl groups, (C₁-C₆)-alkoxy groups, (C₁-C₆)-aminoalkyl groups, (C₅-C₁₂)-aryl groups or (C₅-C₁₂)-aryl-(C₁-C₆)alkyl groups; and
- triazinium cations of the general formula (VI): 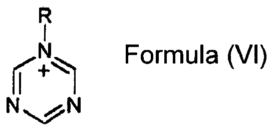 wherein in the formula (VI), the triazine nucleus is optionally substituted by at least a group selected from (C₁-C₆)-alkyl groups, (C₁-C₆)-alkoxy groups, (C₁-C₆)-aminoalkyl groups, (C₅-C₁₂)-aryl groups and (C₅-C₁₂)-aryl-(C₁-C₆)-alkyl groups;
- wherein in the formulas (I) to (VI), independently of one another, the radicals R¹, R², R³, independently of one another, are selected from the group of
- hydrogen;
- linear or branched, saturated or unsaturated, aliphatic or alicyclic (C₁-C₂₀)-alkyl groups;
- heteroaryl groups or (C₃-C₈)-heteroaryl-(C₁-C₆)-alkyl groups, especially with at least one heteroatom, especially selected from the group consisting of N, O and S, in particular wherein the heteroaryl is optionally substituted by at least a group, in particular at least a (C₁-C₆) alkyl group, and/or at least a halogen atom; and
- aryl groups or (C₅-C₁₂)-aryl-(C₁-C₆)-alkyl groups, in particular wherein the abovementioned groups are optionally substituted with at least a (C₁-C₆)-alkyl group and/or at least a halogen atom, respectively; and
- wherein in the formulas (I) to (VI), independently of one another, the radical R is selected from
- linear or branched, saturated or unsaturated, aliphatic or alicyclic (C₁-C₂₀)-alkyl groups;
- (C₃-C₈)-heteroaryl-(C₁-C₆)-alkyl groups, especially with at least a heteroatom, especially selected from the group consisting of N, O and S, in particular wherein the heteroaryl is optionally substituted by at least a group, in particular at least a (C₁-C₆)-alkyl group, and/or at least a halogen atom; and
- (C₅-C₁₂)-aryl-(C₁-C₆)-alkyl groups, in particular wherein the above-mentioned groups are optionally substituted with at least a (C₁-C₆)-alkyl group and/or a halogen atom.

3. Filter material according to claim 1 or 2, **characterised in that**
- the anion [An]ⁿ⁻ of the ionic liquid (IL) is selected from anions of the group of chlorocuprate ([CuCl₃]⁻), bromocuprate ([CuBr₃]⁻), chlorostannate ([SnCl₃]⁻, [Sn2Cl₅]⁻), bromostannate ([SnBr₃]⁻), chlorozincate ([ZnCl₃]⁻), bromozincate ([ZnBr₃]⁻), chloroferrate ([FeCl₃]⁻), bromoferrate ([FeBr₃]⁻), chlorocobaltate ([CoCl₃]⁻), bromocobaltate ([CoBr₃]⁻), chloronickelate ([NiCl₃]⁻), Bromonickelat ([NiBr₃]⁻), tetrafluoroborate ([BF₄]⁻), tetrachloroborate ([BCl₄]⁻), hexafluorophosphate ([PF₆]⁻), hexafluoroantimonate ([SbF₆]⁻), hexafluoroarsenate ([AsF₆]⁻), sulphate ([SO₄]²⁻), carbonate ([CO₃]²⁻), fluorosulfonate [R'-COO]⁻, [R'-SO₃]⁻, [R'-SO₄]⁻, [R'₂PO₄]⁻, tetrakis-(3,5-bis-(trifluoromethyl)-phenyl)borate ([BARF]⁻), and bissulfonylamide [(R'-SO₂)₂N]⁻), wherein R' is a linear or branched aliphatic or alicyclic radical containing 1 to 12 carbon atoms, or a (C₅-C₁₈)-aryl radical, a (C₅-C₁₈)-aryl-(C₁-C₆)-alkyl radical, or a (C₁-C₆)-alkyl-(C₅-C₁₈)-aryl radical, wherein the group is optionally substituted by halogen atoms and/or oxygen atoms; and/or
- the anion [An]¹⁻ of the ionic liquid (IL) is selected from the group of anions dicyanamide ([N(CN)₂]⁻), halides, in particular Cl-, Br⁻, F⁻, I⁻, nitrates ([NO₃]⁻), nitrites ([NO₂]⁻), anionic metal complexes, in particular [CuCl₄]²⁻, [PdCl₄]²⁻, or [AuCl₄]⁻, acetates ([CH₃COO]⁻), trifluoroacetates ([F₃CCOO]⁻), tosylates ([C₇H₇SO₃]⁻, nonafluorobutanesulfonate ([C₄F₉SO₃]⁻), tris(pentafluoroethyl) trifluorophosphate ([PF₃(C₂F₅)₃]⁻), tricyanomethanides ([C(CN)₃]⁻), tetracyanoborate ([B(CN)₄]⁻), thiocyanates ([SCN]⁻), carboxylates ([R"-COO]⁻), sulphonates ([R"-SO₃]⁻), dialkylphosphate ([R"PO₄R']⁻), or bissulfonylimides [(R"-SO₂)₂N]⁻), wherein R" and R"', independently of one another, each represent a linear branched aliphatic or alicyclic (C₅-C₁₈)-alkyl radical or (C₅-C₁₈)-aryl radical, (C₅-C₁₈)-aryl-(C₁-C₆)-alkyl radical, or (C₁-C₆)-alkyl-C₅-C₁₈)-aryl radical, in particular wherein the group is optionally substituted by halogen atoms or oxygen atoms; and/or
- the anion [An]ⁿ⁻ of the ionic liquid (IL) is a halide, in particular Cl⁻, Br⁻, F⁻, I⁻, preferably Cl⁻, and/or that the anion [An]ⁿ⁻ of the ionic liquid (IL) is a carboxylic acid anion, particularly an acetate anion; and/or
- the ionic liquid (IL) is selected from the group of compounds of the formulas (VII) to (IX) 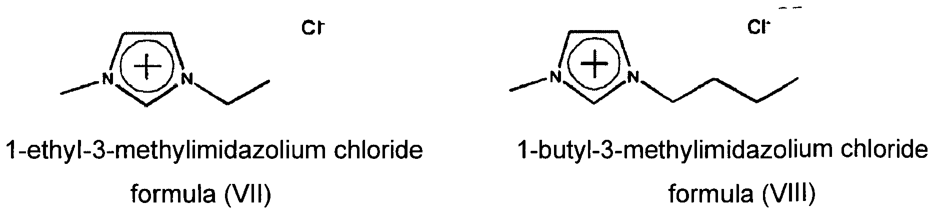 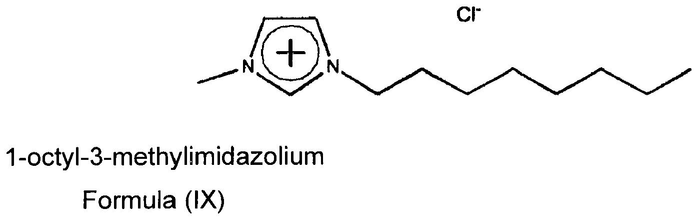 in particular wherein the ionic liquid (IL) is a compound of formula (VII).

4. Filter material according to one of the preceding claims, **characterised in that** the metal component comprises the metal, in particular in the form of a metal compound, in at least an ionic liquid (IL), in particular dissolved and/or dissociated in the ionic liquid (IL).

5. Filter material according to one of the preceding claims, **characterised in that**
- the metal component and/or the ionic liquid (IL) comprises the metal in a positive oxidation state, in particular at least a metal cation, especially wherein the oxidation state of the metal is in the range of +I to +VII, in particular in the range of +I to +IV, preferably in the range of +I to +III, and more preferably in the range of +I to +II; and/or
- the metal component and/or the ionic liquid (IL) comprises at least a metal selected from the group consisting of Zn, Ag, Sn, Ni and Cu.

6. Filter material according to any one of the preceding claims, **characterised in that**
- the metal component and/or the ionic liquid (IL) has at least a disolvable or dissociable metal compound in the ionic liquid (IL) based on the metal and/or that the metal component and/or the ionic liquid has at least an inorganic or organic metal compound based on the metal, particularly a metal salt or metal oxide, preferably a metal salt; and/or
- the metal component and/or the ionic liquid (IL) comprises an organic or inorganic metal salt based on the metal, wherein the salt is selected from the group of halide salts, sulphates, sulphides, sulphites, nitrates, nitrites, phosphates, phosphides, phosphites, carbamates, alcoholates and carboxylic acid salts, in particular halide salts and carboxylic acid salts; and/or
- the metal component and/or the ionic liquid (IL) comprises a metal halide based on the metal, in particular a fluoride, chloride, bromide or iodide, preferably chloride, or a carboxylic acid salt of the metal, especially acetate; and/or
- the metal component and/or the ionic liquid (IL) comprises a metal compound selected from the group consisting of nickel chloride, copper chloride, zinc acetate, and tin acetate; and/or
- the ionic liquid (IL) is present together with the metal and/or metal compound as a melt and/or that the metal and/or metal compound in the ionic liquid (IL) is at least substantially present in crystal and/or crystal-free form and/or that the metal and/or metal compound (IL) is at least substantially dissolved in the ionic liquid, in particular at least substantially dissociated; and/or
- the ionic liquid (IL) contains the metal, particularly the metal compound, in amounts of 0.001 wt.-% to 80 wt.-%, preferably 0.01 wt.-% to 60 wt.-%, more preferably 0.1 wt.-% to 50 wt.-%, based on the ionic liquid (IL), and calculated as the metal, and/or that the metal component or the metal-containing ionic liquid (IL) contains the metal, particularly in the form of the metal compound in a molar mass fraction in a range of 1% to 90%, in particular in a range of 5% to 70%, preferably in a range of 10% to 60%, more preferably in a range of 10% to 55%, based on the metal-containing ionic liquid (IL) and calculated as the metal; and/or
- the molar ratio of ionic liquid (IL) to the metal "[ionic liquid (IL): metal]" is in the range of [10: 0.1] to [0.1: 10], in particular in the range of [1: 0.5] to [1: 3], preferably in the range of [1: 0.6] to [1: 2], more preferably in the range of [1: 1] to [1: 1.6]; and/or
- the mixture, in particular the solution and/or the melt, of the ionic liquid (IL) and the metal, in particular of the metal compound, at a temperature T = 20 °C and atmospheric pressure, has a density of 1 g/cm³ to 2.5 g/cm³, in particular 1.2 g/cm³ to 2 g/cm³, preferably 1.3 g/cm³ to 1.9 g/cm³.

7. Filter material according to any one of the preceding claims, **characterised in that**
- the activated charcoal is wetted and/or covered with the metal-containing ionic liquid (IL), in particular impregnated, and/or that the surface of the activated carbon and/or the pore system of the activated carbon, in particular, the micropores, mesopores and/or macropores, preferably the surface the activated carbon and the pore system of the activated carbon, are at least partially brought into contact and/or wetted and/or covered with the metal-containing ionic liquid (IL), in particular impregnated; and/or
- the activated carbon contains the metal-containing ionic liquid (IL) in amounts of 2 vol.-% to 60 vol.-%, preferably 3 vol.-% to 50 vol.-%, more preferably 5 vol.-% to 40 vol.-%, based on the volume of the activated carbon, and/or that the activated carbon contains the metal-containing ionic liquid (IL) in amounts of at least 1 vol.-%, in particular at least 2 vol.-%, preferably at least 3 vol.-%, more preferably at least 5 vol.%, based on the volume of the activated carbon, and/or that the activated carbon contains the metal-containing ionic liquid (IL) in amounts of at most 70 vol.-%, preferably at most 60 vol.-%, more preferably at most 50 vol.%, most preferably at most 40% vol.-%,, based on the volume of the activated carbon; and/or
- the activated carbon in relation to the metal-containing ionic liquid (IL) has a pore filling degree α of 0.05 to 0.8, preferably of 0.1 to 0.6, more preferably of 0.15 to 0.5, and/or that the activated carbon in relation to the metal-containing ionic liquid (IL) has a pore filling degree α of at most 0.8, preferably at most 0.6, more preferably at most 0.5, and/or that the activated carbon in relation to the metal-containing ionic liquid (IL) has a pore filling degree α of at least 0.01, in particular at least 0.05, preferably at least 0.1, more preferably at least 0.15; and/or
- the pore filling degree α is so calculated and/or the amount of metal-containing ionic liquid (IL) is so adapted that 30% to 90%, preferably 40% to 80%, of the pore volume of the activated carbon is not filled with the metal-containing ionic liquid (IL); and/or
- the activated carbon particle sizes, in particular the particle diameter, is in the range of 0.01 to 1 mm, preferably 0.05 to 0.8 mm, more preferably 0.1 to 0.7 mm, particularly preferably 0.15 to 0.6 mm, wherein, based on the activated carbon, at least 80 wt .-%, in particular at least 90 wt .-%, preferably at least 95 wt .-%, of the activated carbon particle sizes, in particular the particle diameter, are in the ranges mentioned above; and/or
- the average activated carbon particle size (D50), in particular the average particle diameter (D50), is in the range of 0.01 to 1 mm, particularly 0.05 to 0.8 mm, preferably 0.1 to 0.6 mm, more preferably 0.15 to 0.5 mm, most preferably 0.2 to 0.4 mm; and/or
- the activated carbon has a total pore volume, in particular a total pore volume according to Gurvich, in the range of 0.5 to 3.5 cm³/g, preferably 0.6 to 3 cm³/g, more preferably 0.7 to 2.5 cm³/g, in particular wherein 30% to 80%, preferably 40% to 75%, of the total pore volume, in particular of the total pore volume according to Gurvich, of the activated carbon are formed by pores having pore diameters in the range of 2 nm to 50 nm, in particular by mesopores; and/or
- the activated carbon has an average pore diameter in the range of 1 to 60 nm, especially 1 to 55 nm, preferably 1.5 to 50 nm, more preferably 2 to 45 nm.

8. Filter material according to one of the preceding claims, **characterised in that** the carrier material is formed to be gas-permeable, in particular permeable to air, in particular where the carrier material has a gas permeability, in particular air permeability of at least 10 l · m⁻² · s⁻¹, preferably at least 30 l · m⁻² · s⁻¹, more preferably at least 50 l · m⁻² · s⁻¹, particularly preferably at least 100 l · m⁻² · s⁻¹, most preferably at least 500 l · m⁻² · s⁻¹, and/or a gas permeability, in particular air permeability of up to 10,000 l · m⁻² · s⁻¹, especially up to 20,000 l · m⁻² · s⁻¹, at a flow resistance of 127 Pa; and/or
- the carrier material has a three-dimensional structure, in particular wherein the carrier material is preferably formed from an open-pore foam, preferably polyurethane foam; or
- the carrier material has a two-dimensional and/or flat structure, in particular wherein the carrier material is preferably formed as a textile fabric, in particular wherein the support material is a textile fabric preferably made of an air pervious textile material, preferably a woven fabric, knitted fabric, crotcheted fabric, or bonded web especially non-woven fabric, and/or in particular wherein the carrier material has a basic weight of 5 to 1000 g/m², particularly 10 to 500 g/m², preferably from 25 to 450 g/m²; and/or
- the activated carbon is fixed to and/or on the means of bonding, in particular by means of an adhesive or as a result of its own tackiness or adhesiveness.

9. Method for producing a filter material as defined in any of the preceding claims, in particular for use in or as a filter for gas treatment and/or gas purification, using an activated carbon having a reactive and/or catalytic activity, wherein the activated carbon is equipped and/or furnished with at least a metal component, wherein the metal component comprises at least a metal-containing ionic liquid (IL), wherein the metal component comprises at least a metal selected from the group of Cu, Ag, Au, Zn, Hg, Sn, Ce, Ti, Zr, V, Nb, Cr, Mo, W, Mn, Fe, Ru, Os, Co, Rh, Ir, Ni, Pd and Pt, and wherein a plurality of discrete activated carbon particles in spherical and/or granular form is brought into contact, in particular wetted and/or coated and/or impregnated with the metal-containing optionally diluted Ionic liquid (IL), in particular wherein thereafter the solvent possibly used for the dilution and/or the metal-containing ionic liquid (IL) and possibly not absorbed by the activated carbon and/or in excess, is removed and/or separated;
- wherein the activated carbon has particle sizes in the range of 0.01 to 2 mm as determined by the method according to ASTM 02862-97/04, and wherein the activated carbon has a total pore volume ranging from 0.4 to 4 cm³/g, wherein 20% to 85% of the total pore volume of the activated carbon are formed by pores having pore diameters in the range of 2 nm to 50 nm;
- wherein the ionic liquid (IL) is a compound of the general formula [Cat]ⁿ⁺[An]ⁿ⁻ where "Cat" refers to a cation and "An" refers to an anion and "n" denotes an integer equal to 1 or 2 and/or wherein the ionic liquid (IL) is a compound of the general formula [Cat₁]ₓ^{y+}[An₁]_{y}^{x-}, where "Cat₁" refers to a cation and "An₁" refers to an anion, and wherein "x" and "y", independently of one another, refer to an integer in the range of 1 to 4, wherein the cation [Cat]ⁿ⁺ of the ionic liquid (IL) is a nitrogen-containing cation, wherein the nitrogen-containing cation is selected from the group consisting of quaternary ammonium cations, imidazolium, pyridinium, pyrazollium cations and triazinium cations, or wherein the cation [Cat]ⁿ⁺ of the ionic liquid (IL) is a phosphorus-containing cation in the form of a phosphonium, and wherein the anion [An]ⁿ⁻ of the ionic liquid (IL) is an organic or inorganic anion;
- wherein the activated carbon has the metal-containing ionic liquid (IL) in an amount of 1 vol.% to 70 vol.-%, based on the volume of the activated carbon, and/or wherein the amount of metal-containing ionic liquid (IL) is so adapted and/or the pore filling is so dimensioned that 20% to 95% of the pore volume of the activated carbon is not filled with the metal-containing ionic liquid (IL), wherein the pore filling α is calculated according to the formula [α = V_{IL} / (V_{Pore} · m_{Carrier})], where "V_{IL}" is the volume of the ionic liquid to be used, "m_{Carrier}" is the mass of the activated carbon to be used, and "V_{Pore}" is the mass-based specific pore volume of the activated carbon in the formula; and
- wherein the activated carbon obtained in this manner is equipped and/or furnished with at least a metal component and then fixed subsequently to a carrier material.

10. Method according to claim 9, wherein the method comprises the following steps in the sequence (a) to (d) specified below:
(a) production and/or provision of at least a metal component on the basis of a metal-containing ionic liquid (IL), in particular in the form of a solution and/or melt, wherein the metal component is at least a metal selected from the group of Cu, Ag, Au, Zn, Hg, Sn, Ce, Ti, Zr, V, Nb, Cr, Mo, W, Mn, Fe, Ru, Os, Co, Rh, Ir, Ni, Pd and Pt; wherein the at least one metal, in particular in the form of metal ions, preferably on the basis of a metal compound, is brought into contact with an ionic liquid (IL), in particular is dissolved in an ionic liquid (IL);
(b) Bringing into contact, in particular wetting and/or coating and/or impregnating, a plurality of discrete activated carbon particles in spherical and/or granular form with the) metal component obtained in step (a) on the basis of metal-containing ionic liquid (IL) ;
(c) Possible removal and/or separation of metal-containing ionic liquid (IL) not absorbed by the activated carbon and/or in excess, possibly followed by removal and/or separation of the diluent and/or solvent, particularly in step (c); and
(d) Fixing the activated carbon equipped and/or furnished with at least one metal component on a carrier material.

11. Method according to claim 10, **characterised in that**
- step (a) is so carried out that the ionic liquid (IL) contains the metal, particularly the metal compound, in amounts of from 0.001 wt.-% to 80 wt.-%, preferably 0.01 wt.-% to 60 wt.-%, more preferably 0.1 wt.-% to 50 wt.-%, based on the ionic liquid (IL), and calculated as the metal contained and/or that in step (a) the molar ratio of the ionic liquid (IL) to metal "[ionic liquid (IL): metal]" is in the range [10: 0.1] to [0.1: 10], in particular [1: 0.5] to [1: 3], preferably [1: 0.6] to [1: 2], more preferably [1: 1] to [1: 1.6] and/or
- in step (a) and/or between step (a) and (b) and/or between step (b) and (c), preferably between step (a) and (b), a dilution of the metal-containing, especially metal ion-containing, ionic liquid (IL) is diluted with a diluent and/or solvent, more particularly wherein a polar and/or hydrophilic inorganic or organic, preferably organic diluent and/or solvent is used, and/or in particular wherein a diluent and/or solvent having a boiling point (at atmospheric pressure) of at most 250 °C, in particular at most 200 °C, preferably at most 150 °C, more preferably not more than 100 °C, is used; and/or
- in step (b) a suspension of the active carbon in the metal-containing, particularly metal ion-containing ionic liquid (IL) is produced and/or **in that** in step (b) the bringing into contact, in particular wetting and/or coating and/or impregnating of the active carbon in a suspension of activated charcoal in the ionic liquid (IL) is carried out; and/or
- in step (b), wetting and/or coating and/or impregnating of both the outer and the inner surfaces, in particular of the micro, meso and/or macropores of the activated carbon, is carried out; and/or
- in step (b), the volume of the ionic liquid (V_{L}) used and/or the mass of the activated carbon (m_{Carrier}) used and/or the specific mass-based pore volume of the activated carbon (V_{Pore}) is selected as a function of the adjusted pore filling degree α and/or is adjusted to result in a pore filling degree in a range of 0.05 to 0.8, preferably of 0.1 to 0.6, more preferably of 0.15 to 0.5; and/or
- step (b) is performed with an input of energy, in particular by means of ultrasound; and/or
- step (c) is performed under heating, particularly at temperatures ranging from 25 °C to 90 °C, in particular in the range from 30 °C to 75 °C, preferably in the range from 35 °C to 65 °C and/or **in that** step (c) is performed under reduced pressure, especially under vacuum.

12. Use of a filter material according to one of the claims 1 to 8 for the production of insulation materials in the form of protective clothing, in particular for the civil or military sector, such as protective suits, protective gloves, protective footwear, protective socks, head protective clothing, and protective coverings of any kind, wherein preferably all the above-mentioned protective materials are for ABC deployment.

13. Use of a filter material according to one of the claims 1 to 8
- for the production of filters of all kinds, in particular for the removal of pollutants, odours and toxins of all kinds, in particular from air and/or gas flows, in particular ABC protective mask filters, odour filters, sheet filters, air filters, in particular filters for indoor air cleaning, adsorption-capable support structures and filters for the medical sector; or
- for gas purification and/or gas treatment; or
- for the removal of pollutants, especially gaseous pollutants, or environmental pollutants, harmful or toxic substances or gases; or
- for the treatment and/or provision of clean room atmospheres, in particular for the electrical industry, in particular for semiconductor or chip manufacturing.

14. Method for cleaning and/or treatment of gases, **characterised in that** the gas flow to be cleaned and/or processed is brought into contact with a filter material according to one of the claims 1 to 8.

## Revendications

1. Matériau filtrant, en particulier pour une utilisation dans un filtre ou en tant que filtre pour le traitement de gaz et/ou la purification de gaz, le matériau filtrant comprenant au moins un charbon actif ayant une activité réactive et/ou catalytique,
- dans lequel le charbon actif se présente sous forme de particules discrètes de charbon actif sous forme de billes et/ou de grains, et est appliqué sur un matériau support, le charbon actif étant fixé au matériau support et/ou sur le matériau support,
- dans lequel le charbon actif présente une granulométrie comprise dans la plage de 0,01 à 2 mm, déterminée par la méthode selon ASTM D2862-97/04,
- dans lequel le charbon actif présente un volume total des pores compris dans la plage de 0,4 à 4 cm³/g, 20 % à 85 % du volume total des pores du charbon actif étant formés de pores ayant un diamètre de pore compris dans la plage de 2 nm à 50 nm,
- dans lequel le charbon actif est muni et/ou équipé d'au moins un composant métallique, le composant métallique comprenant un liquide ionique (IL) contenant des métaux, le composant métallique comprenant au moins un métal choisi dans le groupe consistant en Cu, Ag, Au, Zn, Hg, Sn, Ce, Ti, Zr, V, Nb, Cr, Mo, W, Mn, Fe, Ru, Os, Co, Rh, Ir, Ni, Pd et Pt, et le charbon actif étant mis en contact avec le liquide ionique (IL) contenant des métaux,
- dans lequel le liquide ionique (IL) est un composé de formule générale [Kat]ⁿ⁺[An]ⁿ⁻, où "Kat" désigne un cation et "An" désigne un anion, et "n" désigne un nombre entier égal à 1 ou 2, et/ou dans lequel le liquide ionique (IL) est un composé de formule générale [Kat₁]ₓ^{y+}[An₁]_{y}^{x-}, où "Kat₁" désigne un cation et "An₁" désigne un anion, et où "x" et "y" désignent chacun indépendamment de l'autre un nombre entier compris dans la plage de 1 à 4, le cation [Kat]ⁿ⁺ du liquide ionique (IL) étant un cation azoté, le cation azoté étant choisi dans le groupe des cations ammonium quaternaire, des cations imidazolium, des cations pyridinium, des cations pyrazolium et des cations triazinium, ou le cation [Kat]ⁿ⁺ du liquide ionique (IL) étant un cation phosphoré sous la forme d'un cation phosphonium, et l'anion [An]ⁿ⁻ du liquide ionique (IL) étant un anion organique ou inorganique,
- dans lequel le charbon actif comprend le liquide ionique (IL) contenant des métaux en des quantités de 1 % en volume à 70 % en volume par rapport au volume du charbon actif, et/ou dans lequel la quantité du liquide ionique (IL) contenant des métaux est conçue, et/ou le taux de remplissage des pores α est dimensionné, de telle sorte que 20 à 95 % du volume des pores du charbon actif ne soient pas remplis par le liquide ionique (IL) contenant des métaux, le taux de remplissage des pores α étant calculé par la formule [α = V_{IL}/ (Vₚₒᵣₑ.mₛᵤₚₚₒᵣₜ)], où, dans la formule, "V_{IL}" désigne le volume du liquide ionique à utiliser, "mₛᵤₚₚₒᵣₜ" désigne la masse du charbon actif à utiliser, et "Vₚₒᵣₑ" désigne le volume spécifique, rapporté à la masse, des pores du charbon actif.

2. Matériau filtrant selon la revendication 1, **caractérisé en ce que**
le liquide ionique (IL) contenant des métaux est un liquide ionique (IL) contenant des ions métalliques, de préférence à base d'un composé métallique ; et/ou
le liquide ionique (IL) est un composé de formule générale [Kat]ⁿ⁺[An]ⁿ⁻, où "Kat" désigne un cation et "An" désigne un anion, et "n" désigne un nombre entier égal à 1, et/ou que le liquide ionique (IL) est un composé de formule générale [Kat₁]ₓ^{y+}[An₁]_{y}^{x-}, où "Kat₁" désigne un cation et "An₁" désigne un anion, et "x" et "y" désignent chacun indépendamment de l'autre un nombre entier compris dans la plage de 1 à 3, de préférence égal à 1 ou 2, de préférence dans chaque cas égal à 1 ; et/ou
le cation [Kat]ⁿ⁺ du liquide ionique (IL) est choisi parmi les cations imidazolium ; et/ou
le cation [Kat]ⁿ⁺ du liquide ionique (IL) est choisi dans le groupe consistant en :
- les cations ammonium quaternaire de formule générale (I) :
[NR¹R²R³R] ⁺ Formule (I)
- les cations phosphonium de formule générale (II) :
[PR¹R²R³R] ⁺ Formule (II)
- les cations imidazolium de formule générale (III) : 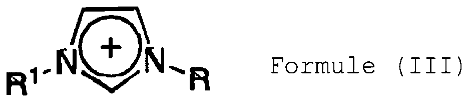 où, dans la formule (III), le noyau imidazole est éventuellement substitué par au moins un groupe choisi parmi les groupes alkyle en C₁-C₈, les groupes alcoxy en C₁-C₈, les groupes aminoalkyle en C₁-C₈, les groupes aryle en C₅-C₁₂ et les groupes (aryle en C₅-C₁₂)-(alkyle en C₁-C₈) ;
- les cations pyridinium de formule générale (IV) : 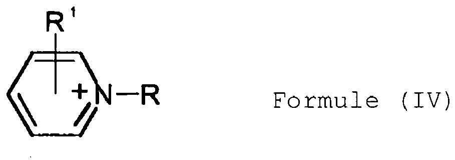 où, dans la formule (IV), le noyau pyridine est éventuellement substitué par au moins un groupe choisi parmi les groupes alkyle en C₁-C₆, les groupes alcoxy en C₁-C₆, les groupes aminoalkyle en C₁-C₆, les groupes aryle en C₅-C₁₂ ou les groupes (aryle en C₅-C₁₂)-(alkyle en C₁-C₆) ;
- les cations pyrazolium de formule générale (V) : 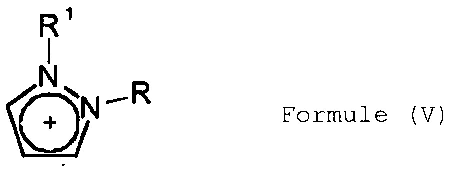 dans laquelle, dans la formule (V), le noyau pyrazole est éventuellement substitué par au moins un groupe choisi parmi les groupes alkyle en C₁-C₆, les groupes alcoxy en C₁-C₆, les groupes aminoalkyle en C₁-C₆, les groupes aryle en C₅-C₁₂ ou les groupes (aryle en C₅-C₁₂)-(alkyle en C₁-C₆) ; et
- les cations triazinium de formule générale (VI) : 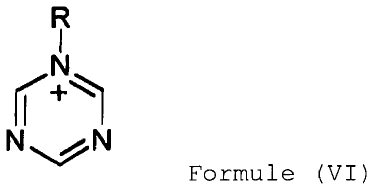 dans laquelle, dans la formule (VI), le noyau triazine est éventuellement substitué par au moins un groupe choisi parmi les groupes alkyle en C₁-C₆, les groupes alcoxy en C₁-C₆, les groupes aminoalkyle en C₁-C₆, les groupes aryle en C₅-C₁₂ et les groupes (aryle en C₅-C₁₂)-(alkyle en C₁-C₆) :
où, dans les formules (I) à (VI), indépendamment les unes des autres, les radicaux R¹, R², R³ sont, chacun indépendamment des autres, choisis dans le groupe consistant en
- l'atome d'hydrogène,
- les groupes alkyle en C₁-C₂₀ aliphatiques ou alicycliques, saturés ou insaturés, à chaîne droite ou ramifiée ;
- les groupes hétéroaryle ou les groupes (hétéroaryle en C₃-C₈)-(alkyle en C₁-C₆), en particulier comportant chacun au moins un hétéroatome, choisi en particulier dans le groupe consistant en N, O et S, en particulier le radical hétéroaryle étant éventuellement substitué par au moins un groupe, en particulier par au moins un groupe alkyle en C₁-C₆, et/ou par au moins un atome d'halogène ; et
- les groupes aryle ou les groupes (aryle en C₅-C₁₂)-(alkyle en C₁-C₆), en particulier les groupes mentionnés ci-dessus étant chacun éventuellement substitués par au moins un groupe alkyle en C₁-C₆ et/ou par au moins un atome d'halogène ; et
dans lequel, dans les formules (I) à (VI), indépendamment les unes des autres, le radical R est choisi parmi :
- les groupes alkyle en C₁-C₂₀ aliphatiques ou alicycliques, saturés ou insaturés, à chaîne droite ou ramifiée ;
- les groupes (hétéroaryle en C₃-C₈)-(alkyle en C₁-C₆), en particulier comportant chacun au moins un hétéroatome, choisi en particulier dans le groupe consistant en N, O et S, en particulier le radical hétéroaryle étant éventuellement substitué par au moins un groupe, en particulier par au moins un groupe alkyle en C₁-C₆ et/ou par au moins un atome d'halogène ; et
- les groupes (aryle en C₅-C₁₂)-(alkyle en C₁-C₆), en particulier les groupes mentionnés ci-dessus étant éventuellement substitués par au moins un groupe alkyle en C₁-C₆ et un atome d'halogène.

3. Matériau filtrant selon la revendication 1 ou 2, **caractérisé en ce que** l'anion [An]ⁿ⁻ du liquide ionique (IL) est choisi parmi les anions du groupe consistant en les anions chlorocuprate ([CuCl₃]⁻), bromocuprate ([CuBr₃]⁻), chlorostannate ([SnCl₃]⁻, [Sn₂Cl₅]⁻), bromostannate ([SnBr₃]⁻), chlorozincate ([ZnCl₃]⁻), bromozincate ([ZnBr₃]⁻), chloroferrate ([FeCl₃]⁻), bromoferrate ([FeBr₃]⁻), chlorocobaltate ([CoCl₃]⁻), bromocobaltate ([CoBr₃]⁻), chloronickelate ([NiCl_{3]}⁻), bromonickelate ([NiBr₃]⁻), tétrafluoroborate ([BF₄]⁻), tétrachloroborate ([BCl₄]⁻), hexafluorophosphate ([PF₆]⁻), hexafluoroantimoniate ([SbF₆]⁻), hexafluoroarséniate ([AsF₆]⁻), sulfate ([SO₄]²⁻), carbonate ([CO₃]²⁻), fluorosulfonate, [R'-COO]⁻, [R'-SO₃]⁻, [R'-SO₄]⁻), [R'₂PO₄]⁻, tétrakis(3,5-bis(trifluorométhyl)-phényl)borate ([BARF]⁻) et bissulfonylamide [(R'-SO₂)₂N]⁻, où R' est un radical alkyle aliphatique ou alicyclique, à chaîne droite ou ramifiée, contenant 1 à 12 atomes de carbone, ou un radical aryle en C₅-C₁₈, un radical (aryle en C₅-C₁₈)-(alkyle en C₁-C₆) ou un radical (alkyle en C₁-C₆)-(aryle en C₅-C₁₈), le radical étant éventuellement substitué par des atomes d'halogène et/ou des atomes d'oxygène ; et/ou
que l'anion [An]ⁿ⁻ du liquide ionique (IL) est choisi parmi les anions du groupe consistant en les anions dicyanamide ([N(CN)₂]⁻), les halogénures, en particulier Cl⁻, Br⁻, F, I, nitrate ([NO₃]⁻), nitrite ([NO₂]⁻), les complexes métalliques anioniques, en particulier [CuCl₄]²⁻, [PdCl₄]²⁻ ou [AuCl₄]⁻, acétate ([CH₃COO]⁻), trifluoracétate ([F₃CCOO]⁻), tosylate ([C₇H₇SO₃]⁻), nonafluorobutanesulfonate ([C₄F₉SO₃]⁻), tris(pentafluoréthyl)trifluorophosphate ([PF₃(C₂F₅)₃]⁻), tricyanométhide ([C(CN)₃]⁻), tétracyanoborate ([B(CN)₄]⁻), thiocyanate ([SCN]⁻), carboxylate ([R"-COO]⁻), sulfonate ([R"-SO₃]⁻), dialkylphosphate ([R"PO₄R"']⁻) ou les bissulfonylimides ([(R"-SO₂)₂N]⁻), où R" et R"' représentent chacun indépendamment de l'autre un radical alkyle en C₅-C₁₈ aliphatique ou alicyclique à chaîne droite ou ramifiée, ou un radical aryle en C₅-C₁₈, un radical (aryle en C₅-C₁₈)-(alkyle en C₁-C₆) ou un radical (alkyle en C₁-C₆)-(aryle en C₅-C₁₈), en particulier où le radical est éventuellement substitué par des atomes d'halogène ou des atomes d'oxygène ; et/ou
l'anion [An]ⁿ⁻ du liquide ionique (IL) est un anion halogénure, en particulier Cl⁻, Br⁻, F⁻, I⁻, de préférence Cl⁻, et/ou l'anion [An]ⁿ⁻ du liquide ionique (IL) est un anion acide carboxylique, en particulier un anion acétate ; et/ou
que le liquide ionique (IL) est choisi dans le groupe des composés ayant les formules (VII) à (IX) 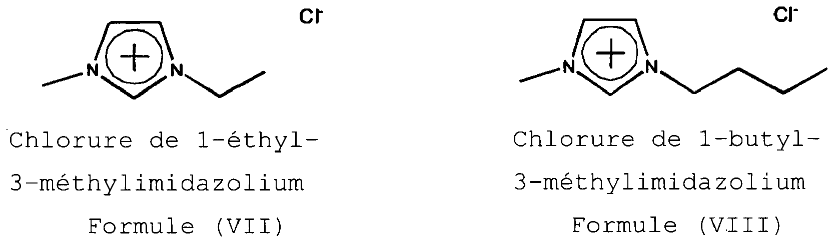 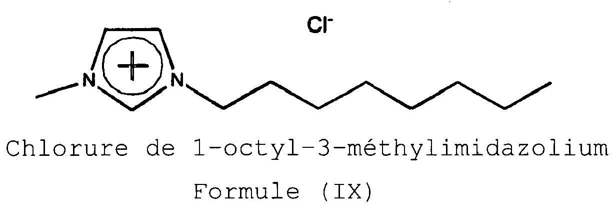 en particulier le liquide ionique (IL) étant un composé de formule (VII).

4. Matériau filtrant selon l'une des revendications précédentes, **caractérisé en ce que** le composant métallique comprend le métal, en particulier sous la forme d'un composé métallique, dissous et/ou dissocié dans au moins un liquide ionique (IL), en particulier dans le liquide ionique (IL).

5. Matériau filtrant selon l'une des revendications précédentes, **caractérisé en ce que**
le composant métallique et/ou le liquide ionique (IL) comprennent le métal selon un degré d'oxydation positif, en particulier au moins un cation métallique, en particulier le degré d'oxydation du métal étant compris dans la plage de +I à +VII, en particulier dans la plage de +I à +IV, de préférence dans la plage de +I à +III, et d'une manière particulièrement préférée est +I ou +II ; et/ou que le composant métallique et/ou le liquide ionique (IL) comprennent au moins un métal, choisi dans le groupe consistant en Zn, Ag, Sn, Ni et Cu.

6. Matériau filtrant selon l'une des revendications précédentes, **caractérisé en ce que**
le composant métallique et/ou le liquide ionique (IL) comprennent au moins un composé métallique à base du métal, soluble ou dissociable dans le liquide ionique (IL), et/ou que le composé métallique et/ou le liquide ionique comprennent au moins un composé métallique organique ou inorganique à base du métal, en particulier un sel métallique ou un oxyde métallique, de préférence un sel métallique ; et/ou
que le composant métallique et/ou le liquide ionique (IL) comprennent un sel métallique organique ou inorganique à base du métal, le sel étant choisi dans le groupe consistant en les sels halogénures, les sulfates, les sulfures, les sulfites, les nitrates, les nitrites, les phosphates, les phosphures, les phosphites, les carbamates, les alcoolates et les sels d'acides carboxyliques, en particulier les sels halogénures et les sels d'acides carboxyliques ; et/ou
que le composant métallique et/ou le liquide ionique (IL) comprennent un halogénure métallique à base du métal, en particulier un fluorure, un chlorure, un bromure ou un iodure, de préférence un chlorure, ou un sel d'acide carboxylique du métal, en particulier un acétate ; et/ou le composant métallique et/ou le liquide ionique (IL) comprennent un composé métallique choisi dans le groupe consistant en le chlorure de nickel, le chlorure de cuivre, l'acétate de zinc et l'acétate d'étain ; et/ou
que le liquide ionique (IL), avec le métal et/ou le composé métallique, se présente sous forme d'une masse fondue, et/ou que le métal et/ou que le composé métallique se présente dans le liquide ionique (IL) essentiellement exempt de cristaux et/ou de cristallites, et/ou que le métal et/ou le composé métallique est au moins pour l'essentiel dissous, en particulier au moins pour l'essentiel dissocié, dans le liquide ionique (IL) ; et/ou
que le liquide ionique (IL) contient le métal, en particulier le composé métallique, en des quantités de 0,001 % en poids à 80 % en poids, en particulier de 0,01 % en poids à 60 % en poids, de préférence de 0,1 % en poids à 50 % en poids, par rapport au liquide ionique (IL), et calculées en tant que métal, et/ou que le composant métallique ou le liquide ionique (IL) contenant des métaux contient le métal, en particulier sous forme du composé métallique, selon une proportion molaire en masse comprise dans la plage de 1 % à 90 %, en particulier dans la plage de 5 % à 70 %, de préférence dans la plage de 10 % à 60 %, préférentiellement dans la plage de 10 % à 55 %, par rapport au liquide ionique (IL) contenant des métaux, et calculée en tant que métal ; et/ou
que le rapport en moles du liquide ionique (IL) au métal "[liquide ionique (IL):métal]" est compris dans la plage de [10:0,1] à [0,1:10], en particulier dans la plage de [1:0,5] à [1:3], de préférence dans la plage de [1:0,6] à [1:2], préférentiellement dans la plage de [1:1] à [1:1,6] ; et/ou
que le mélange, en particulier la solution et/ou la masse fondue, du liquide ionique (IL) et du métal, en particulier du composé métallique, présentent à une température T = 20°C et sous la pression atmosphérique une masse volumique de 1 g/cm³ à 2,5 g/cm³, en particulier de 1,2 g/cm³ à 2 g/cm³, de préférence de 1,3 g/cm³ à 1,9 g/cm³.

7. Matériau filtrant selon l'une des revendications précédentes, **caractérisé en ce que**
le charbon actif est mouillé et/ou recouvert, en particulier imprégné par le liquide ionique (IL) contenant des métaux, et/ou que la surface du charbon actif et/ou le système de pores du charbon actif, en particulier les micropores, les mésopores et/ou les macropores, de préférence la surface du charbon actif et le système de pores du charbon actif, sont au moins partiellement mis en contact et/ou mouillés et/ou recouverts, en particulier imprégnés, avec le liquide ionique (IL) contenant des métaux ; et/ou
que le charbon actif comprend le liquide ionique (IL) contenant des métaux en des quantités de 2 % en volume à 60 % en volume, de préférence de 3 % en volume à 50 % en volume, préférentiellement de 5 % en volume à 40 % en volume, par rapport au volume du charbon actif, et/ou que le charbon actif comprend le liquide ionique (IL) contenant des métaux en des quantités d'au moins 1 % en volume, en particulier d'au moins 2 % en volume, de préférence d'au moins 3 % en volume, préférentiellement d'au moins 5 % en volume, par rapport au volume du charbon actif, et/ou que le charbon actif comprend le liquide ionique (IL) contenant des métaux en des quantités d'au plus 70 % en volume, en particulier d'au plus 60 % en volume, de préférence d'au plus 50 % en volume, préférentiellement d'au plus 40 % en volume, par rapport au volume du charbon actif ; et/ou que le charbon actif présente, par référence au liquide ionique (IL) contenant des métaux, un taux de remplissage des pores α de 0,05 à 0,8, de préférence de 0,1 à 0,6,
préférentiellement de 0,15 à 0,5, et/ou que le charbon actif présente, par référence au liquide ionique (IL) contenant des métaux un taux de remplissage des pores α d'au plus 0,8, de préférence d'au plus 0,6,
préférentiellement d'au plus 0,5, et/ou que le charbon actif présente, par référence au liquide ionique (IL) contenant des métaux, un taux de remplissage des pores α d'au moins 0,01, en particulier d'au moins 0,05, de préférence d'au moins 0,1, préférentiellement d'au moins 0,15 ; et/ou
que le taux de remplissage des pores α est dimensionné, et/ou la quantité du liquide ionique (IL) contenant des métaux est conçue, de telle sorte que 30 % à 90 %, de préférence 40 % à 80 % du volume des pores du charbon actif ne soient pas remplis par le liquide ionique (IL) contenant des métaux ; et/ou
que le charbon actif présente une granulométrie, en particulier un diamètre des particules, compris dans la plage de 0,01 à 1 mm, préférentiellement de 0,05 à 0,8 mm, de préférence de 0,1 à 0,7 mm, d'une manière particulièrement préférée de 0,15 à 0,6 mm, en particulier au moins 80 % en poids, en particulier au moins 90 % en poids, de préférence au moins 95 % en poids du charbon actif utilisé présentant, par rapport au charbon actif, une granulométrie, en particulier un diamètre des particules, compris dans les plages mentionnées ci-dessus ; et/ou
que le charbon actif présente une granulométrie moyenne (D50), en particulier un diamètre moyen des particules (D50), compris dans la plage de 0,01 à 1 mm, en particulier de 0,05 à 0,8 mm, préférentiellement de 0,1 à 0,6 mm, de préférence de 0,15 à 0,5 mm, d'une manière particulièrement préférée de 0,2 à 0,4 mm ; et/ou
que le charbon actif présente un volume total des pores, en particulier un volume total des pores selon Gurvich, compris dans la plage de 0,5 à 3,5 cm³/g, de préférence de 0,6 à 3 cm³/g, d'une manière particulièrement préférée de 0,7 à 2,5 cm³/g, en particulier 30 % à 80 %, de préférence 40 % à 75 % du volume total des pores, en particulier du volume total des pores selon Gurvich, du charbon actif, étant formés par des pores ayant un diamètre de pore compris dans la plage de 2 nm à 50 nm, en particulier des mésopores ; et/ou
que le charbon actif présente un diamètre moyen des pores compris dans la plage de 1 à 60 nm, en particulier de 1 à 55 nm, préférentiellement de 1,5 à 50 nm, d'une manière particulièrement préférée de 2 à 45 nm.

8. Matériau filtrant selon l'une des revendications précédentes, **caractérisé en ce que**
le matériau support est conçu de façon à être perméable aux gaz, en particulier perméable à l'air, en particulier le matériau support présentant une perméabilité aux gaz, en particulier une perméabilité à l'air, d'au moins 10 l·m⁻²·s⁻¹, en particulier d'au moins 30 l·m⁻²·s⁻¹, de préférence d'au moins 50 l·m⁻²·s⁻¹, d'une manière particulièrement préférée d'au moins 100 l·m⁻²·s⁻¹, d'une manière tout particulièrement préférée d'au moins 500 l·m⁻²·s⁻¹, et/ou une perméabilité aux gaz, en particulier une perméabilité à l'air, allant jusqu'à 10 000 l·m⁻²·s⁻¹, en particulier jusqu'à 20 000 l·m⁻²·s⁻¹, pour une résistance à l'écoulement de 127 Pa ; et/ou
que le matériau support présente une structure tridimensionnelle, en particulier le matériau support étant conçu comme un matériau mousse de préférence à alvéoles ouverts, d'une manière particulièrement préférée un matériau mousse de polyuréthanne ; ou
que le matériau support présente une structure bidimensionnelle et/ou une structure plane, en particulier le matériau support étant conçu comme une structure bidimensionnelle de préférence textile, en particulier le matériau support étant conçu comme une structure bidimensionnelle textile, de préférence un matériau textile perméable à l'air, de préférence un tissu, un tricot, un article de bonneterie, une grille ou un composite textile, en particulier un voile (non tissé), et/ou en particulier le matériau support présentant une masse surfacique de 5 à 1 000 g/m², en particulier de 10 à 500 g/m², de préférence de 25 à 450 g/m² ; et/ou
que le charbon actif est fixé au matériau support et/ou sur le matériau support par collage, en particulier à l'aide d'un adhésif, ou en conséquence d'une auto-pégosité ou d'une auto-adhérence.

9. Procédé de fabrication d'un matériau filtrant tel que défini dans l'une des revendications précédentes, en particulier pour une utilisation dans un filtre ou en tant que filtre pour le traitement de gaz et/ou la purification de gaz, par utilisation d'un charbon actif ayant une activité réactive et/ou catalytique, le charbon actif étant muni et/ou équipé d'au moins un composant métallique, le composant métallique comprenant au moins un liquide ionique (IL) contenant des métaux, le composant métallique présentant au moins un métal choisi dans le groupe consistant en Cu, Ag, Au, Zn, Hg, Sn, Ce, Ti, Zr, V, Nb, Cr, Mo, W, Mn, Fe, Ru, Os, Co, Rh, Ir, Ni, Pd et Pt, et un grand nombre de particules discrètes de charbon actif étant, sous forme de billes et/ou de grains, mises en contact, en particulier mouillées et/ou revêtues et/ou imprégnées, avec le liquide ionique (IL) contenant des métaux, éventuellement dilué, en particulier le solvant éventuellement utilisé pour la dilution et/ou le liquide ionique (IL) contenant des métaux, non absorbés par le charbon actif et/ou en excédent, étant ensuite éliminés et/ou séparés ;
le charbon actif présentant une granulométrie comprise dans la plage de 0,01 à 2 mm, déterminée par la méthode selon ASTM D2862-97/04, et le charbon actif présentant un volume total des pores compris dans la plage de 0,4 à 4 cm³/g, 20 % à 85 % du volume total des pores du charbon actif étant formés par des pores ayant un diamètre de pore compris dans la plage de 2 nm à 50 nm ;
dans lequel le liquide ionique (IL) est un composé de formule générale [Kat]ⁿ⁺[An]ⁿ⁻, où "Kat" désigne un cation et "An" désigne un anion, et "n" désigne un nombre entier égal à 1 ou 2, et/ou dans lequel le liquide ionique (IL) est un composé de formule générale [Kat₁]ₓ^{y+}[Ar₁]_{y}^{x-}, où "Kat₁" désigne un cation et "An₁" désigne un anion, et où "x" et "y" désignent chacun indépendamment de l'autre un nombre entier compris dans la plage de 1 à 4, le cation [Kat]ⁿ⁺ du liquide ionique (IL) étant un cation azoté, le cation azoté étant choisi dans le groupe des cations ammonium quaternaire, des cations imidazolium, des cations pyridinium, des cations pyrazolium et des cations triazinium, ou le cation [Kat]ⁿ⁺ du liquide ionique (IL) étant un cation phosphoré sous la forme d'un cation phosphonium, et l'anion [An]ⁿ⁻ du liquide ionique (IL) étant un anion organique ou inorganique,
dans lequel le charbon actif comprend le liquide ionique (IL) contenant des métaux en des quantités de 1 % en volume à 70 % en volume par rapport au volume du charbon actif, et/ou dans lequel la quantité du liquide ionique (IL) contenant des métaux est conçue, et/ou le taux de remplissage des pores α est dimensionné, de telle sorte que 20 à 95 % du volume des pores du charbon actif ne soient pas remplis par le liquide ionique (IL) contenant des métaux, le taux de remplissage des pores α étant calculé par la formule [α = V_{IL}/(Vₚₒᵣₑ·mₛᵤₚₚₒᵣₜ)], où, dans la formule,
"V_{IL}" désigne le volume du liquide ionique à utiliser, "support" désigne la masse du charbon actif à utiliser, et "Vₚₒᵣₑ" désigne le volume spécifique, rapporté à la masse, des pores du charbon actif ; et
le charbon actif obtenu de cette manière, muni et/ou équipé d'au moins un composant métallique, étant ensuite fixé sur un matériau support.

10. Procédé selon la revendication 9, le procédé comprenant les étapes suivantes dans l'ordre (a) à (d) spécifié ci-après :
(a) fabrication et/ou mise à disposition d'au moins un composant métallique à base d'un liquide ionique (IL) contenant des métaux, en particulier sous forme d'une solution et/ou d'une masse fondue, le composant métallique présentant au moins un métal choisi dans le groupe consistant en Cu, Ag, Au, Zn, Hg, Sn, Ce, Ti, Zr, V, Nb, Cr, Mo, W, Mn, Fe, Ru, Os, Co, Rh, Ir, Ni, Pd et Pt, le ou les métaux, en particulier sous la forme d'ions métalliques, de préférence à base d'un composé métallique, étant mis en contact avec un liquide ionique (IL), et étant en particulier dissous dans un liquide ionique (IL) ;
(b) mise en contact, en particulier mouillage et/ou revêtement et/ou imprégnation, d'un grand nombre de particules discrètes de charbon actif sous forme de billes et/ou de grains, avec le composant métallique obtenu dans l'étape (a), à base du liquide ionique (IL) contenant des métaux ;
(c) éventuellement, élimination et/ou séparation du liquide ionique (IL) contenant des métaux, non adsorbés par le charbon actif et/ou en excès, opérations éventuellement suivies d'une élimination et/ou d'une séparation du diluant et/ou du solvant en particulier dans l'étape (c) ; et
(d) fixation sur un matériau support du charbon actif muni et/ou équipé du ou des composants métalliques.

11. Procédé selon la revendication 10, **caractérisé en ce que**
dans l'étape (a), on procède de telle sorte que le liquide ionique (IL) contienne le métal, en particulier le composé métallique, en des quantités de 0,001 % en pois à 80 % en poids, en particulier de 0,01 % en poids à 60 % en poids, de préférence de 0,1 % en poids à 50 % en poids, par rapport au liquide ionique (IL) et calculées en tant que métal, et/ou que, dans l'étape (a), le rapport en moles du liquide ionique (IL) au métal "[liquide ionique (IL):métal]" est ajusté à une valeur comprise dans la plage de [10:0,1] à [0,1:10], en particulier de [1:0,5] à [1:3], de préférence de [1:0,6] à [1:2], préférentiellement de [1:1] à [1:1,6] ; et/ou
dans l'étape (a) et/ou entre l'étape (a) et l'étape (b) et/ou entre l'étape (b) et l'étape (c), de préférence entre l'étape (a) et l'étape (b), on procède à une dilution du liquide ionique (IL) contenant des métaux, en particulier contenant des ions métalliques, à l'aide d'un diluant et/ou d'un solvant, auquel cas on utilise en particulier un diluant et/ou un solvant inorganique ou organique, de préférence organique, polaire et/ou hydrophile, et/ou on utilise un diluant et/ou un solvant ayant un point d'ébullition (sous la pression atmosphérique) d'au plus 250°C, en particulier d'au plus 200°C, de préférence d'au plus 150°C, préférentiellement d'au plus 100°C ; et/ou que dans l'étape (b), on fabrique une suspension du charbon actif dans le liquide ionique (IL) contenant des métaux, en particulier contenant des ions métalliques, et/ou que, dans l'étape (b), la mise en contact, en particulier le mouillage et/ou le revêtement et/ou l'imprégnation du charbon actif ont lieu dans une suspension du charbon actif dans le liquide ionique (IL) ; et/ou
que dans l'étape (b), on procède à un mouillage et/ou à un revêtement et/ou à une imprégnation tant des surfaces extérieures que des surfaces intérieures, en particulier des micropores, des mésopores et/ou des macropores, du charbon actif ; et/ou
dans l'étape (b), on choisit et/ou on ajuste le volume du liquide ionique à utiliser (V_{IL}) et/ou la masse du charbon actif à utiliser (mₛᵤₚₚₒᵣₜ) et/ou le volume spécifique des pores, rapporté à la masse, du charbon actif (Vₚₒᵣₑ) en fonction du taux de remplissage des pores α à ajuster, de telle sorte qu'il en résulte un taux de remplissage des pores α compris dans la plage de 0,05 à 0,8, de préférence de 0,1 à 0,6, préférentiellement de 0,15 à 0,5 ; et/ou que dans l'étape (b), on procède avec un apport d'énergie, et en particulier avec un apport d'ultrasons ; et/ou que dans l'étape (c), on procède par chauffage, en particulier à des températures comprises dans la plage de 25°C à 90°C, en particulier dans la plage de 30°C à 75°C, de préférence dans la plage de 35°C à 65°C, et/ou que, dans l'étape (c), on procède sous une pression réduite, en particulier sous vide.

12. Utilisation d'un matériau filtrant selon l'une des revendications 1 à 8 pour la fabrication de matériaux de protection sous forme d'un vêtement de protection, en particulier pour le domaine civil ou militaire, tel que des vêtements de protection, des gants de protection, des chaussures de protection, des chaussettes de protection, des vêtements de protection de la tête, et de recouvrements de protection de tous types, de préférence tous les matériaux de protection mentionnés ci-dessus pour une utilisation ABC.

13. Utilisation d'un matériau filtrant selon l'une des revendications 1 à 8
pour la fabrication de filtres de tous types, en particulier pour éliminer des substances toxiques, des odeurs et des substances toxiques de tous types, provenant en particulier de flux d'air et/ou de gaz, en particulier des filtres pour masque de protection ABC, des filtres d'odeurs, des filtres de surface, des filtres à air, en particulier des filtres pour la purification de l'air ambiant, des structures portantes adsorbantes, et des filtres pour le domaine médical ; ou
pour la purification des gaz et/ou la préparation des gaz ; ou
pour l'élimination de substances toxiques, en particulier de substances toxiques gazeuses, ou de substances ou de gaz dangereux pour l'environnement, nocifs pour la santé ou toxiques ; ou
pour la préparation et/ou la mise à disposition d'atmosphères pour salles blanches, en particulier pour l'industrie électrique, en particulier pour la fabrication de semi-conducteurs ou de puces.

14. Procédé pour la purification et/ou la préparation de gaz, **caractérisé en ce que** le flux gazeux à purifier et/ou à préparer est mis en contact avec un matériau filtrant selon l'une des revendications 1 à 8.
